# EUROPEAN PATENT APPLICATION

(11) **EP 2 933 709 A2**
(43) Date of publication of application: **21.10.2015**
(21) Application number: 15163697.4
(22) Date of filing: 15.04.2015
(51) Int. Cl.: G06F 3/01, G06F 1/16, G06F 3/0488

(54) **HAPTIC INFORMATION MANAGEMENT METHOD AND ELECTRONIC DEVICE SUPPORTING THE SAME**

(30) Priority: 15.04.2014 KR 20140044929
(71) Applicant: Samsung Electronics Co., Ltd, Gyeonggi-do 443-742 (KR)
(72) Inventor: Cheong, Cheol Ho, 120-834 Seoul (KR); Lee, Chul Hwan, 137-910 Seoul (KR); Roh, Byoung Tack, 443-709 Suwon-si (KR); Yeo, Jae Yung, 463-891 Seongnam-si (KR); Im, Yo Ywang, 443-740 Suwon-si (KR)
(74) Representative: Nederlandsch Octrooibureau

(57) **Abstract**

An electronic device is provided. The electronic device includes a haptic support module configured to perform at least one of a screen information analysis, an input information analysis, and an execution information analysis, and to allocate haptic information according to the analysis result, and a haptic module configured to output a haptic feedback corresponding to the haptic information.

## Description

### PRIORITY

This application claims priority to Korean Patent Application No. 10-2014-044929, filed April 15, 2014, the content of which is incorporated herein by reference.

### BACKGROUND OF THE INVENTION

### 1. Field of the Invention

The present disclosure relates to providing haptic information.

### 2. Background of the Invention

With the recent development of digital technology, electronic devices that are available for communication and personal information processing while moving, for example, mobile communication devices, personal digital assistants (PDAs), electronic organizers, smartphones, tablet personal computers (PCs), and wearable computing devices, are released variously. Such electronic devices may generate vibrations according to user settings. Electronic devices of the related art simply generate vibrations for notifying according to a certain event. However, when a vibration occurs from an electronic device, a user is not able to determine which event relates with a corresponding vibration.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Embodiments of the present disclosure are to address at least the above-mentioned problems and/or disadvantages and to provide at least the advantages described below. Accordingly, an embodiment of the present disclosure is to provide a haptic information management method for providing haptic information of a form matching an electronic device management situation and an electronic device for supporting the same.

In accordance with an embodiment of the present disclosure, a haptic information management method of an electronic device is provided. The haptic information management method includes performing at least one of a screen information analysis, an input information analysis, and an execution information analysis, allocating haptic information according to the analysis result, and outputting a haptic feedback corresponding to the haptic information in correspondence to an event occurrence.

In accordance with another embodiment of the present disclosure, an electronic device is provided. The electronic device includes a haptic support module configured to perform at least one of a screen information analysis, an input information analysis, and an execution information analysis, and allocate haptic information according to the analysis result, and a haptic module configured to output a haptic feedback corresponding to the haptic information during an event occurrence.

Other embodiments, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other embodiments, features, and advantages of certain embodiments of the present disclosure will be more apparent from the following description taken in conjunction with the accompanying drawings, in which:
FIG. 1 is a view illustrating an electronic device management system according to various embodiments of the present disclosure;
FIG. 2 is a view illustrating a haptic support module, a memory, and a bus of an electronic device according to various embodiments of the present disclosure;
FIG. 3 is a block diagram of an electronic device according to various embodiments of the present disclosure;
FIG. 4 is a flowchart illustrating a haptic information management method according to various embodiments of the present disclosure;
FIG. 5 is a flowchart illustrating a method of managing object based haptic information in screen information according to various embodiments of the present disclosure;
FIG. 6 is a flowchart illustrating an input object type based haptic information management method according to various embodiments of the present disclosure;
FIG. 7 is a flowchart illustrating an execution information condition based haptic information management method according to various embodiments of the present disclosure;
FIG. 8A is a screen view illustrating an object specific haptic information management method according to various embodiments of the present disclosure;
FIG. 8B is a screen view illustrating a complex object specific haptic information management method according to various embodiments of the present disclosure;
FIG. 8C illustrates a method of providing haptic feedback according to various embodiments of the present disclosure;
FIG. 9 is a view illustrating a screen interface related to a one hand input related haptic information management method according to various embodiments of the present disclosure;
FIG. 10 is a view illustrating a screen interface related to a direction related haptic information management method according to various embodiments of the present disclosure;
FIG. 11 is a view illustrating a screen interface related to a remote control related haptic information management method according to various embodiments of the present disclosure;
FIG. 12 is a view illustrating a virtual key button related haptic information management method according to various embodiments of the present disclosure;
FIG. 13A is a screen view illustrating a page turning related haptic information management method according to various embodiments of the present disclosure;
FIG. 13B is a view illustrating a haptic information management method depending on a concavely rolling conversion of a page based on the edge of a page according to various embodiments of the present disclosure;
FIG. 13C is a view illustrating a haptic information management method depending on a convexly rolling conversion of a page based on the side of a page according to various embodiments of the present disclosure;
FIG. 14 is a view illustrating a haptic information management method depending on input information according to various embodiments of the present disclosure;
FIG. 15 is a view illustrating a haptic information management method depending on watch function execution information according to various embodiments of the present disclosure;
FIG. 16 is a view illustrating an external environment and health care function related execution information specific haptic information management method according to various embodiments of the present disclosure;
FIG. 17 is a view illustrating an exercise speed related execution information specific haptic information management method in a health coaching function according to various embodiments of the present disclosure;
FIG. 18 is a view illustrating a stress related execution information specific haptic information management method according to various embodiments of the present disclosure;
FIG. 19 is a view illustrating a deep sleep related execution information specific haptic information management method according to various embodiments of the present disclosure;
FIG. 20 is a view illustrating an input object specific haptic information management method according to various embodiments of the present disclosure;
FIG. 21 is a view illustrating a touch area specific haptic information management method according to various embodiments of the present disclosure;
FIG. 22 is a view illustrating a touch area detection and a haptic information management method depending thereon according to various embodiments of the present disclosure;
FIG. 23 is a view illustrating a haptic information management method in virtual reality according to various embodiments of the present disclosure;
FIG. 24 is a flowchart illustrating an input error correction related haptic information management method according to various embodiments of the present disclosure;
FIG. 25 is a view illustrating a screen information related haptic information management method according to various embodiments of the present disclosure; and
FIG. 26 is a view illustrating a panorama image or three dimensional (3D) map related haptic information management method according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "include", "comprise", and "have", or "may include", or "may comprise" and "may have" used herein indicate disclosed functions, operations, or existence of elements but do not exclude other functions, operations or elements. Additionally, in various embodiments of the present disclosure, the terms "include", "comprise", "including", or "comprising", specify a property, a region, a fixed number, a step, a process, an element and/or a component but do not exclude other properties, regions, fixed numbers, steps, processes, elements and/or components.

In various embodiments of the present disclosure, expression "A or B" or "at least one of A or/and B" may include all possible combinations of items listed together. For instance, the expression "A or B," or "at least one of A or/and B" may indicate include A, B, or both A and B.

The terms such as "1 st", "2nd", "first", "second", and the like used herein may refer to modifying various different elements of various embodiments, but do not limit the elements. For instance, such expressions do not limit the order and/or importance of corresponding components. The expressions may be used to distinguish one element from another element. For instance, both "a first user device" and "a second user device" indicate a user device but indicate different user devices from each other. For example, a first component may be referred to as a second component and vice versa without departing from the scope of the present disclosure.

In this disclosure below, when one part (or element, device, etc.) is referred to as being "connected" to another part (or element, device, etc.), it should be understood that the former can be "directly connected" to the latter, or "connected" to the latter via an intervening part (or element, device, etc.). In contrast, when an element is referred to as being "directly connected" or "directly coupled" to another element, there are no intervening elements present.

In various embodiments of the present disclosure, terms used in this specification are used to describe specific embodiments, and are not intended to limit the scope of the present disclosure.

Unless otherwise indicated herein, all the terms used herein, which include technical or scientific terms, may have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning. Additionally, an electronic device according to various embodiments of the present disclosure may be a device with a haptic information providing function. For instance, electronic devices may include at least one of smartphones, tablet personal computers (PCs), mobile phones, video phones, electronic book (e-book) readers, desktop PCs, laptop PCs, netbook computers, personal digital assistants (PDAs), portable multimedia players (PMPs), MP3 players, mobile medical devices, cameras, and wearable devices (e.g., head-mounted-devices (HMDs) such as electronic glasses, electronic apparel, electronic bracelets, electronic necklaces, electronic appcessories, electronic tattoos, and smart watches).

According to various embodiments of the present disclosure, an electronic device may be smart home appliances having a haptic information providing function. The smart home appliances may include at least one of, for example, televisions (TVs), digital video disc (DVD) players, audios, refrigerators, air conditioners, cleaners, ovens, microwave ovens, washing machines, air cleaners, set-top boxes, TV boxes (e.g., Samsung HomeSync™, Apple TV™ or Google TV™), game consoles, electronic dictionaries, electronic keys, camcorders, and electronic picture frames.

According to various embodiments of the present disclosure, an electronic device may include at least one of various medical devices having a haptic information providing function (for example, magnetic resonance angiography (MRA) devices, magnetic resonance imaging (MRI) devices, computed tomography (CT) devices, medical imaging devices, ultrasonic devices, etc.), navigation devices, global positioning system (GPS) receivers, event data recorders (EDRs), flight data recorders (FDRs), vehicle infotainment devices, marine electronic equipment (for example, marine navigation systems, gyro compasses, etc.), avionics, security equipment, vehicle head units, industrial or household robots, financial institutions' automatic teller machines (ATMs), and stores' points of sale (POSs).

According to various embodiments of the present disclosure, an electronic device may include at least one of furniture or buildings/structures having a haptic information providing function, electronic boards, electronic signature receiving devices, projectors, and various measuring instruments (for example, water, electricity, gas, or radio signal measuring instruments). An electronic device according to various embodiments of the present disclosure may be one of the above-mentioned various devices or a combination thereof. Additionally, an electronic device according to various embodiments of the present disclosure may be a flexible device. Furthermore, it is apparent to those skilled in the art that an electronic device according to various embodiments of the present disclosure is not limited to the above-mentioned devices.

Hereinafter, an electronic device according to various embodiments will be described in more detail with reference to the accompanying drawings. The term "user" in various embodiments may refer to a person using an electronic device or a device using an electronic device (for example, an artificial intelligent electronic device).

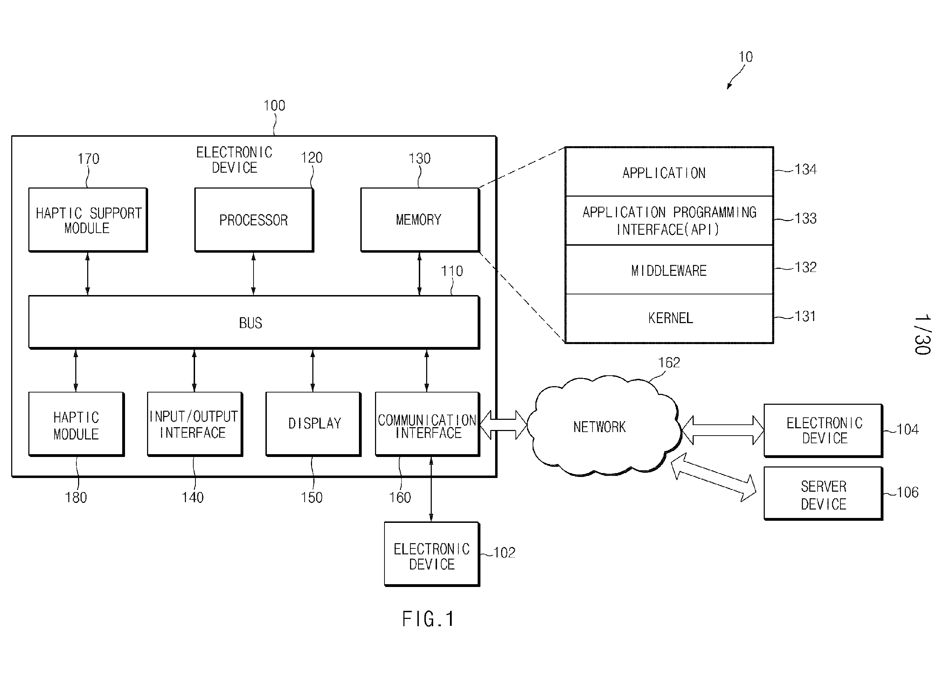

FIG. 1 is a view illustrating an electronic device management system according to various embodiments of the present disclosure.

Referring to FIG. 1, according to an embodiment, an electronic device management system 10 may include an electronic device 100, one or more external electronic devices 102 and 104, a network 162, and a server device 106. The external electronic devices 100 and 102 may establish a communication channel through a direct communication method. For example, the external electronic devices 100 and 102 may establish a communication channel through a Bluetooth (BT) method. Alternatively, the external electronic devices 100 and 102 may establish a communication channel through a WiFi direct method. Alternatively, the external electronic devices 100 and 102 may establish a communication channel through a wired method such as a cable. The electronic devices 100 and 104 may establish a communication channel through the network 162. For example, the electronic device 100 may establish a communication channel with the external electronic device 104 through a mobile communication network or an internet network. In the electronic device management system 10, the electronic device 100 (or the external electronic device 102 or 104) may perform at least one of a screen information analysis, an input information analysis, and an execution information analysis and may perform haptic information setting (for example, at least one of haptic layout setting and haptic component setting) according to an analysis result. Accordingly, the electronic device management system 10 may provide haptic information corresponding to various situations related to an electronic device management. During this operation, the electronic device management system 10 may provide various tactile or texture types (for example, at least one of softness, roughness, stickiness, resistance sense, friction sense, skin pulling sense, smoothness, etc.) in at least one of a single form and a complex form. Accordingly, the electronic device management system 10 may provide information of various feelings corresponding to a management situation of the electronic device 100 (or the external electronic device 102 or 104) and provide intuitive information recognition according to each feeling.

The external electronic device 102 may establish a direct communication channel with the communication interface 110 of the electronic device 100 and perform data transmission/reception with the electronic device 100. During this operation, the external electronic device 102 may receive haptic information from the electronic device 100 and perform the received haptic information output. The haptic information output may include a tactile feedback output that is outputted through at least one haptic sensor, haptic device, or haptic sheet. According to various embodiments, the external electronic device 102 may operate as a device for providing input information in relation to a management of the electronic device 100. For example, the external electronic device 102 may include at least one sensor and may provide sensor information collected by the sensor to the electronic device 100 as input information. Alternatively, the external electronic device 102 may execute a set function or a function according to a user control and may provide execution information according to a function execution to the electronic device 100. According to various embodiments, the external electronic device 102 may comprise a haptic support module similar to a haptic support module 170 of the electronic device 100 Accordingly, the external electronic device 102 operates separately from the electronic device 100 or interoperates with the electronic device 100 (for example, operations for allowing the external electronic device 102 to receive and process function related information executed in the electronic device 100 or the electronic device 100 to receive and process function related information executed in the external electronic device 102), thereby outputting haptic information corresponding to at least one input information, screen information, and execution information.

The external electronic device 104 may establish a communication channel with the electronic device 100 through the network 162. For example, the external electronic device 104 may include a cellular communication module and may establish a mobile communication channel with the electronic device 100. Alternatively, the external electronic device 104 may include a WiFi communication module and may establish a mobile communication channel with the electronic device 100.

According to various embodiments, the external electronic device 104 may establish a call communication channel with the electronic device 100 through the network 162. During this operation, at least one of the external electronic device 104 and the electronic device 100 may perform haptic information allocation (or setting) corresponding to screen information related the formation of a communication channel (for example, at least one of voice call, video call, message transmission/reception, and data communication). According to various embodiments, the external electronic device 104 may deliver management related information of an interoperating accessory electronic device to the electronic device 100. Additionally, the external electronic device 104 may receive and output management related information of an electronic device (for example, the external electronic device 102) interoperating with the electronic device 100. During this operation, the external electronic device 104 allocates specific haptic information to the received management related information and outputs corresponding haptic information (for example, a vibration pattern of a specific form corresponding to a set tactile sense or texture sense).

The server device 106 may establish a communication channel with the electronic device 100 through the network 162. Alternatively, the server device 106 may establish a communication channel with the external electronic device 104 through the network 162. According to various embodiments, the server device 106 may establish a communication channel with the external electronic device 102 through the network 162 and the electronic device 100. The server device 106 may provide a haptic information database to the electronic device 100 (or the external electronic device 102 or 104). Additionally, the server device 106 may provide an audio information database to the electronic device 100. The server device 106 may provide a server page including at least one object or item (for example, at least one haptic information related to various tactile or texture representations) to the electronic device 100. The server device 106 may provide corresponding haptic information to the electronic device 100 in correspondence to a request of the electronic device 100. According to various embodiments, the server device 106 may provide haptic update information to the electronic device 100 at a predetermined period or in real time.

The network 162 may establish a communication channel between the electronic device 100 and the external electronic device 104 or between the electronic device 100 and the server device 106. The network 162, for example, may include network device components related to a mobile communication channel establishment. Alternatively, the network 162 may include network device components related to an internet communication channel establishment. The network 162 may deliver haptic information of the electronic device 100 to the external electronic device 104. Additionally, the network 162 may deliver a haptic related database or haptic update information to the electronic device 100 or the external electronic device 104. According to various embodiments, the network 162 may establish a voice call communication channel and a video call communication channel between the electronic device 100 and the external electronic device 104.

Referring to FIG. 1, the electronic device 100 may include a bus 110, a processor 120, a memory 130, an input/output interface 140, a display 150, a communication interface 160, the haptic support module 170, and a haptic module 180. The above-mentioned electronic device 100 may perform a haptic information allocation corresponding to at least one of a screen information analysis result, an input information analysis result, and an execution information analysis result on the basis of the haptic support module 170. During this operation, when an event related to the allocated haptic information occurs, the electronic device 100 may perform a haptic information output through the haptic module 180. According to various embodiments, the electronic device 100 may transmit haptic information to be outputted to another electronic device (for example, the external electronic device 102 or 104).

The bus 110 may be a circuit connecting the above-mentioned components and supporting a communication (for example, a control message transmission) between the above-mentioned components. For example, the bus 110 may deliver an input signal inputted from the input/output interface 140 to the processor 120 or the haptic support module 170. The bus 110 may deliver information received through the communication interface 160 to at least one of the memory 130, the display 150, the processor 120, and the haptic support module 170. The bus 110 may deliver screen information to be outputted to the display 150 to the haptic support module 170. The bus 110 may deliver input information received through the input/output interface 140 to the haptic support module 170. The bus 110 may deliver execution information executed and processed by the processor 120 to the haptic support module 170.

The processor 120, for example, may receive instructions from the above-mentioned other components (for example, the memory 130, the input/output interface 140, the display 150, the communication interface 160, and the haptic support module 170) through the bus 110, interpret the received instructions, and execute calculation or data processing according to the interpreted instructions. The processor 120 may be configured to include the haptic support module 170 (for example, a module prepared in at least one of a hardware form and a software form). Alternatively, as shown in the drawing, the processor 120 may be configured as separate from the haptic support module 170.

The memory 130 may store instructions or data received from the processor 120 or the other components (for example, the input/output interface 140, the display 150, the communication interface 160, and the haptic support module 170) or generated by the processor 120 or the other components. The memory 130, for example, may include programming modules such as a kernel 131, a middleware 132, an application programming interface (API) 133, or an application 134. Each of the above-mentioned programming modules may be configured with software, firmware, hardware, or a combination of at least two thereof.

The kernel 131 may control or manage system resources (for example, the bus 110, the processor 120, or the memory 130) used for performing operations or functions implemented in the remaining other programming modules, for example, the middleware 132, the API 133, or the application 134. Additionally, the kernel 131 may provide an interface for performing a controlling or managing operation by accessing an individual component of the electronic device 100 from the middleware 132, the API 133, or the application 134.

The middleware 132 may serve as an intermediary role for exchanging data as the API 133 or the application 134 communicates with the kernel 131. Additionally, in relation to job requests received from the application 134, the middleware 132, for example, may perform a control (for example, scheduling or load balancing) for the job requests by using a method of assigning a priority for using a system resource (for example, the bus 110, the processor 120, or the memory 130) of the electronic device 100 to at least one application among the applications 134.

The API 133, as an interface through which the application 134 controls a function provided from the kernel 131 or the middleware 132, for example, may include at least one interface or function (for example, an instruction) for file control, window control, image processing, or character control.

According to various embodiments, the application 134 may include short message service (SMS)/multimedia messaging service (MMS) applications, e-mail applications, calendar applications, notification applications, health care applications (for example, applications for measuring exercise amount or blood glucose), or environmental information applications (for example, applications for providing pressure, humidity, or temperature information). Additionally or alternatively, the application 134 may be an application related to information exchange between the electronic device 100 and an external electronic device (for example, the external electronic device 104). The information exchange related application, for example, may include a notification relay application for relaying specific information to the external device or a device management application for managing the external electronic device.

For example, the notification relay application may have a function for relaying to an external electronic device (for example, the external electronic device 102 or 104) notification information occurring from another application (for example, an SMS/MMS application, an e-mail application, a health care application, or an environmental information application) of the electronic device 100. Additionally or alternatively, the notification relay application may receive notification information from an external electronic device (for example, the external electronic device 102 or 104) notification and may then provide the received notification information to a user. The device management application, for example, may manage (for example, install, delete, or update) at least part of function (turn-on/turn off of the external electronic device itself (or some components) or the brightness (or resolution) adjustment of a display) of an external electronic device (for example, the external electronic device 102 or 104) communicating with the electronic device 100, an application operating in the external electronic device, or a service (for example, call service or message service) provided from the external device.

According to various embodiments, the application 134 may include a specified application according to the property (for example, the type of an electronic device) of the external electronic device (for example, the external electronic device 102 or 104). For example, when an external electronic device is an MP3 player, the application 134 may include an application related to music playback. Similarly, when an external electronic device is a mobile medical device, the application 134 may include an application related to heath care. According to an embodiment, the application 134 may include at least one of an application specified to the electronic device 100 or an application received from an external electronic device (for example, the server device 106 or the external electronic device 102 or 104).

According to various embodiments, at least one haptic information may be allocated to at least one application included in the application. Alternatively, according to various embodiments, at least one application may include allocated haptic information. The haptic information allocated to the application may include at least one of haptic information mapping into screen information outputted to the display 150 according to a corresponding application execution, haptic information mapping into input information during application execution, and haptic information mapping into execution information occurring according application execution. When a specific application is executed, the haptic support module 170 may perform a control to check haptic information allocated to an application and activate at least part of the haptic module 180.

According to various embodiments, the memory 130 may store a database including at least one of a specific haptic information for screen information, a specific haptic information for input information, and a specific haptic information for execution information. The memory 130 may store audio information outputted together while a specific information output is performed through the haptic module 180. The memory 130 may store screen information outputted to the display 150 temporarily or semi-permanently in correspondence to the activation of the electronic device 100. The memory 130 may store related information for various input/output devices, which is inputted through the input/output interface 140. For example, the memory 130 may store related information related to a type classification of input/output devices and related information related to an input state classification of input/output devices.

The input/output interface 140 may deliver an instruction or data inputted from a user through an input/output device (for example, a sensor, a keyboard, a touch pad, or a touch screen) to the processor 120, the memory 130, the communication interface 160, or the haptic support module 170 through the bus 110. For example, the input/output interface 140 may provide data on a user touch inputted through a touch screen or a touch pad to the processor 120 or the haptic support module 170. Additionally, the input/output interface 140 may output, through the input/output device (for example, a speaker, a display, or the haptic module 180), instructions or data received from the processor 120, the memory 130, the communication interface 160, or the haptic module 170 through the bus 110. For example, the input/output interface 140 may output voice data processed through the processor 120 to a user through a speaker.

According to various embodiments, the input/output interface 140 may include a physical key button (for example, a home key, a side key, and a power key), a jog key, and a keypad. The input/output interface 140 may include a virtual keypad outputted to the display 150 as an input device. The input/output interface 140 may generate an input signal related to a haptic information management in correspondence to a user control. For example, the input/output interface 140 may generate an input signal (for example, a touch event) according to a touch input for touching at least a certain point of the display 150 or a touch input for touching at least part of a virtual key button outputted to the display 150. Additionally, the input/output interface 140 may generate an input signal depending on a touch input according to a user finger touch or a touch input according to an electronic pen or a general pen touch.

According to various embodiments, the input/output interface 140 may perform a function related to audio processing. In relation to this, the input/output interface 140 may include one or more of at least one of a speaker and a microphone. When data transmitted/received to/from at least one of the external electronic devices 102 and 104 includes audio data, the input/output interface 140, for example, may output corresponding audio data. When establishing a communication channel including voice with another electronic device (for example, at least one of the external electronic devices 102 and 104), the input/output interface 140 may collect audio data on the basis of a microphone and may deliver it to the processor 120.

According to various embodiments, the input/output interface 140 may perform an audio information output related to haptic information. Herein, the audio information may be information mapped into haptic information. Accordingly, the input/output interface 140 may output specific audio information while specific haptic information is outputted through the haptic module 180. Corresponding audio information may be changed in relation to a haptic information design. Herein, audio information may include at least one of a guide sound for describing haptic information and the characteristics (for example, soft, rough, or resistance sense) of haptic information.

The display 150 may display various information (for example, multimedia data or text data) to a user. For example, the display 150 may output a lock screen and a standby screen (or home screen). The display 150 may output a specific function execution screen, for example, a sound source playback application (or app) execution screen, a video playback application execution screen, and a broadcast reception screen, in correspondence to a function execution. According to an embodiment, the display 150 may output screen information according to the execution of a specific application (for example, a standby screen app, a menu screen app, a sound source playback app, a broadcast reception function app, a web access function app, a camera app, a gallery app, or a health care function app). Screen information outputted to the display 150 may include an area related to at least one of image information, text information, virtual key button information, and link information. For example, the image information may be a background area. The text information may be outputted to a text window area. The virtual key button information may include a boundary area including a specific character. The link information may include a boundary area including a link. Haptic information may be allocated to at least part of the screen information.

The communication interface 160 may connect a communication between the electronic device 100 and an external device (for example, the external electronic device 102 or 104 or the server device 106). For example, the communication interface 160 may communicate with the external device in connection to the network 162 through wireless communication or wired communication. The wireless communication, for example, may include at least one of WiFi, BT, near field communication (NFC), GPS, and cellular communication (for example, long term evolution (LTE), LTE advanced (LTE-A), code division multiple access (CDMA), wideband CDMA (WCDMA), universal mobile telecommunications system (UMTS), wireless broadband (WiBro), or global system for mobile communications (GSM)). The wired communication may include at least one of a universal serial bus (USB), a high definition multimedia interface (HDMI), a recommended standard 232 (RS-232), and a plain old telephone service (POTS), for example.

According to an embodiment, the network 162 may be a telecommunications network. The telecommunications network may include at least one of a computer network, an internet, an internet of things, and a telephone network. According to an embodiment, a protocol (for example, transport layer protocol, data link layer protocol, or physical layer protocol) for communication between the electronic device 100 and an external device may be supported by at least one of the application 134, the API 133, the middleware 132, the kernel 131, and the communication interface 160.

The communication interface 160 may include a plurality of communication modules when the electronic device 100 supports a plurality of communication methods. The electronic device 100 may include a communication module, for example, a short range communication module or a direct communication module, capable of establishing a direct communication channel with the external electronic device 102. The short range communication module or the direct communication module may include at least one of various communication modules such as a WiFi direct communication module, a BT communication module, and a Zigbee communication module. Alternatively, the direct communication module may include a wired communication module such as cable.

According to an embodiment, the communication interface 160 may receive at least one of execution information and input information from at least one of the external electronic devices 102 and 104 and the server device 106. The communication interface 160 may deliver the received execution information or input information to the haptic support module 170. According to an embodiment, the communication interface 160 may transmit haptic information to at least one of the external electronic devices 102 and 104 in correspondence to a control of the haptic support module 170. The haptic information or haptic update information may be delivered from the server device 106 to the electronic device 100 through the communication interface 160.

The haptic module 180 may output haptic information delivered by the haptic support module 170. In relation to this, the haptic module 180 may include at least one haptic device. According to various embodiments, the haptic module 180 may include a haptic sheet in a form including a structure configured with a glass plate, a transparent electrode, and an insulating plate on a display. The haptic module 180 in a sheet form may provide various tactile senses or texture senses such as sticky, waxy, bumpy, smooth, pleasant, unpleasant, friction, vibration, etc. According to various embodiments, the haptic module 180 may include a haptic sheet (or a haptic touch film) of a structure equipped with a film obtained by applying Indium Tin Oxide (ITO) on a touch screen. In that case, the haptic module 180 may provide various feelings such as a realistic button input feeling through an electrostatic change using electric charge. According to various embodiments, the haptic module 180 may include a friction haptic display. The haptic module 180 may express softness and roughness information and a degree of stickiness through friction and may provide a squeeze-film effect or an electro-vibration effect in a touch screen device.

According to various embodiments, the haptic module 180 may include a vibro-tactile actuator using a multiple bending motor based on piezoelectric ceramic. The haptic module 180 may include a touch-engine expressing tactile sense such as impulse, tapping, and clicking. According to various embodiments, the haptic module 180 may include a pin-type actuator inserted into an external electronic device (for example, the external electronic device 102) in an electronic pen form.

According to various embodiments, the haptic module 180 may include at least one of a vibrator, a pin-array, a pneumatic device, a shear display, an electrocutaneous display, an electrostatic typed device, a thermal display, an electro mechanical polymer device, an Electro-active polymer (EAP), a piezoelectric material, an eccentric rotating mass (ERM) actuator, a linear resonant actuator (LRA) device and a shape memory alloy device. In that case, the haptic module 180 may deliver haptic information (or haptic feedback) in contact or may deliver haptic feedback in non-contact (for example, a proximity state within a specified range). On the basis of at least one module of the above-mentioned various modules, the haptic module 180 may provide various haptic information or haptic feedback in correspondence to a control of the haptic support module 170. The haptic module 180, for example, may provide at least one of haptic information or haptic feedback of vibration, a sense of temperature (i.e., cold/warm sense), air injection or suction, the up/down movement or left/right movement of a pin, the pattern of electrostatic force, an orientation, a position and range, an intensity, a period, a force feedback, etc.

According to various embodiments, the haptic modules 180 may be uniformly arranged in an entire area of an electronic device. Alternatively, the haptic modules 180 may be non-uniformly arranged in a partial area of an electronic device. Alternatively, in relation to the haptic module 180, at least one device may be disposed on at least one position to provide haptic feedback in an entire area of an electronic device. Alternatively, in relation to the haptic module 180, at least one device may be disposed on a specific position (for example, at least one position) to provide haptic feedback in a partial area of an electronic device.

The haptic support module 170 may process at least part of information obtained from other components (for example, the processor 120, the memory 130, the input/output interface 140, or the communication interface 160) and may control the driving of the haptic module 180. According to various embodiments, the haptic support module 170 may analyze screen information outputted or to be outputted to the display 150 and may perform haptic information allocation corresponding to the analyzed screen information. The haptic support module 170 may deliver the allocated haptic information to the haptic module 180 or may deliver corresponding haptic information or haptic information modified depending on an event occurrence to the haptic module180 in correspondence to an event occurrence.

According to various embodiments, the haptic support module 170 may use at least one of character recognition, handwriting recognition, and image recognition methods in order to analyze an inputted content (for example, at least one of a character, handwriting information, gesture information, a face image, a barcode image, a two dimensional (2D) code image, a three dimensional (3D) code image, a music file, a video file, a picture image, etc.). Additionally, the haptic support module 170 may perform content analysis through an analysis of metadata related to content (for example, at least one of ID3Tag of music content, EXIF of JPEG file, caption information of video, lyrics information of music, etc.).

According to various embodiments, the haptic support module 170 may analyze screen input information inputted through the input/output interface 140 and may perform haptic information allocation corresponding to the analyzed input information. The haptic support module 170 may deliver the allocated haptic information to the haptic module 180 when input information is inputted or when an input object is recognized and an event by the input object occurs.

According to various embodiments, the haptic support module 170 may analyze occurring execution information in correspondence to the execution of an application and may perform haptic information allocation corresponding to the analyzed execution information. The haptic support module 170 may deliver the allocated haptic information to the haptic module 180 in correspondence to the execution information analysis. Alternatively, the haptic support module 170 may deliver the allocated haptic information to the haptic module 180 when the execution information satisfies a specific condition. According to various embodiments, the haptic support module 170 may receive execution information from another electronic device (for example, the external electronic device 102 or 104, or the server device 106). The haptic support module 170 may analyze the received execution information and may perform haptic information allocation and delivery corresponding to an analysis result.

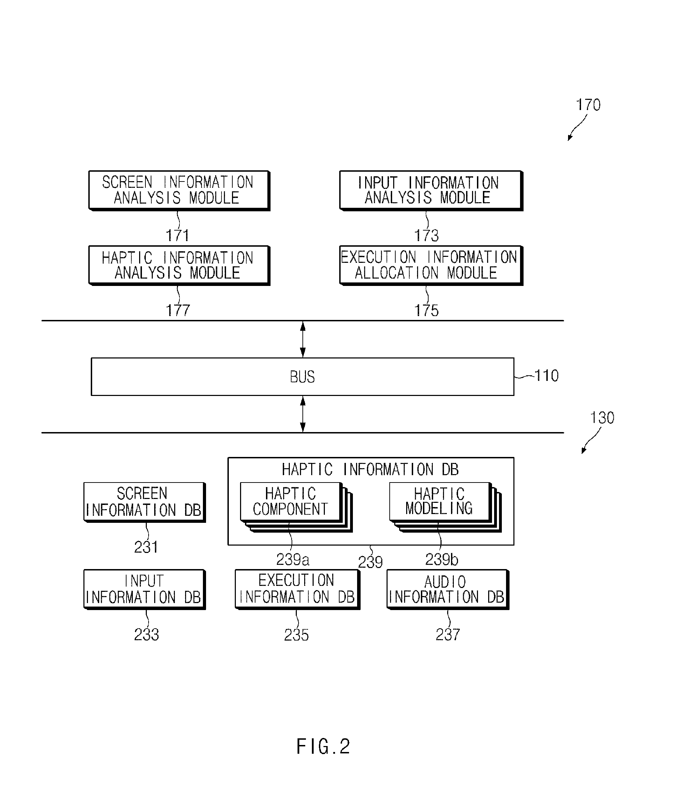

FIG. 2 is a view illustrating a haptic support module, a memory, and a bus of an electronic device according to various embodiments of the present disclosure.

Referring to FIG. 2, a memory 130 may include at least one of a screen information database 231, an input information database 233, an execution information database 235, an audio information database 237, and a haptic information database 239.

The screen information database 231 may include screen information including at least one object included in a screen to be outputted or outputted to the display 150 of the electronic device 100 and at least one haptic information allocated to the screen information. The screen information may include at least one object specified to be included in the display 150 in relation to a specific application. According to various embodiments, the object, for example, may include a background object and a things or person object disposed on the background object. Alternatively, the object, for example, may include a virtual key button group with at least one virtual key button or a plurality of virtual key buttons. Alternatively, the screen information may include a panorama object, a 3D object, and an augmented reality (AR) object. Alternatively, the object may include at least one of dots, lines, and surfaces. According to various embodiments, the object may include a surface (for example, a 2D surface or a 3D surface) formed by a closed curve. A closed curve may be used as a boundary area. The boundary area may be used as reference information to which haptic information is allocated differently. According to various embodiments, the screen information database 231, for example, may include the same haptic information or at least partially different haptic information, each being allocated by each specific object configured with at least one of dots, lines, and surfaces. The screen information database 231 may include haptic information allocated to a boundary area of a specific object configured with at least one of lines and surfaces and different or the same haptic information allocated to the outside and inside of a specific object configured with a surface. The screen information database 231 may include the same or different haptic information allocated by each external position or each internal position of a specific object configured with a surface.

The input information database 233 may include reference input information corresponding to various input signals inputted through the input/output interface 140. For example, the input information database 233 may include reference input information for classifying the type of an input object generating an input signal (for example, an object such as a finger, an electronic pen, and a general pen), reference input information for classifying the type of an input signal (for example, a touch down input, a touch drag input, a touch release input, and a touch holding input), and reference input information for classifying an input form through a state of an input signal (for example, at least one of a touch position, a speed, an intensity, an area, a holding time, and a time).

The input information database 233 may include the same or different haptic information allocated to the at least one reference input information. According to an embodiment, the input information database 233 may include haptic information differently mapped by each type of an input object. Additionally, the input information database 233 may include haptic information identically or differently mapped into at least one of a type and state of an input signal occurring according to the type of each input object.

The execution information database 235 may include execution information collected according to execution of an application or execution information (for example, information generated according to application execution in another electronic device) transmitted from another electronic device (for example, the external electronic device 102 or 104, or the server device 106). The execution information database 235 may include execution information classified by each time, each application, or each transmission device.

The execution information database 235 may include haptic information mapped into execution information. According to an embodiment, the execution information database 235 may include execution information differently allocated by each time, each application, or each transmission device. The execution information database 235 may include haptic information allocated by each execution time. The execution information database 235 may include condition information for outputting haptic information allocated to execution information. The condition information, for example, may include at least one of the size of execution information, the number of times that the same type of execution information is collected and a time at which execution information is collected.

The audio information database 237 may include audio information mapped into at least one of screen information, input information, execution information, and haptic information. For example, the audio information database 237 may include audio information allocated by different haptic information. Alternatively, the audio information database 237 may include audio information allocated by different haptic information while specific screen information is outputted to the display 150. Alternatively, the audio information database 237 may include audio information set to be outputted together when haptic information mapped into specific execution information is outputted.

The haptic information database 239 may include at least one of a haptic component 239a and a haptic modeling 239b. The haptic component 239a may include setting information related to tactile sense or texture sense provided based on the haptic module 180. For example, the haptic component 239a may include haptic module control information related to at least one implementation in a single form and complex form of a tactile or texture type (for example, at least one of softness, roughness, stickiness, resistance sense, friction sense, skin pulling sense, smoothness, etc.). According to an embodiment, when the haptic module 180 includes a friction haptic display, the haptic component 239a may include haptic module control information that relates to a power control of the haptic module 180 related to a size specific or direction specific implementation such as friction sense, resistance sense, and repulsive force, which are implemented through a friction haptic display.

The haptic modeling 239b may include haptic information corresponding to tactile sense or texture sense that is modeled based on haptic module control information. For example, the haptic modeling 239b may include haptic information related to at least one haptic module control for defining strong softness and weak softness. Alternatively, the haptic modeling 239b may include haptic information defined for implementing a roughness degree of various sizes through the haptic module 180. According to an embodiment, the haptic modeling 239b may include haptic information applied for implementing a haptic feedback (at least one of tactile sense, or texture sense) set to be generated from at least one of a specific object boundary area, a boundary area based external area, and a boundary area based internal area through the haptic module 180. The haptic information, for example, may include power control information for driving the haptic module 180 to have a rough feeling of a specific size in a boundary area of an object. The haptic information may include power control information of the haptic module 180 related to a texture expression set to be provided when a touch or hovering occurs at a boundary area outside a specific position. The haptic information may include power control information of the haptic module 180 related to the size, position, or holding time of a specific tactile sense set to be provided in correspondence to a touch or hovering speed.

The haptic support module 170 may include at least one of a screen information analysis module 171, an input information analysis module 173, an execution information analysis module 175, and a haptic information allocation module 177.

The screen information analysis module 171 may analyze a screen to be outputted (e.g., outputted to the display 150) so as to extract screen information. The screen information analysis module 171 may check whether there is specific haptic information for screen information stored in the screen information database 231. If there is haptic information, the screen information analysis module 171 may perform a control to apply corresponding haptic information to screen information being outputted to the display 150. When an event for touching or hovering at least one object included in screen information occurs, the screen information analysis module 171 may provide allocated haptic information to the haptic module 180 to control a haptic information output. During this operation, the screen information analysis module 171 may allocate object specific haptic information included in screen information by each object and perform a control to output corresponding haptic information in correspondence to the occurrence of an event for selecting a specific object (for example, at least one of an object touch event and a hovering event for indicating an object).

When the extracted screen information does not exist in the screen information database 231, the screen information analysis module 171 may provide corresponding screen information to the haptic information allocation module 177. According to an embodiment, the screen information analysis module 171 may extract at least one object included in specific screen information and then deliver the extracted object to the haptic information allocation module 177. During this operation, the screen information analysis module 171 may deliver screen related information (for example, information such as the type of a screen related application, screen related identification information, the position of an object in a screen, and the form of an object) to the haptic information allocation module 177. When receiving object-specific haptic information from the haptic information allocation module 177, the screen information analysis module 171 may apply corresponding haptic information to corresponding screen information. The screen information analysis module 171 may control the allocated haptic information output in correspondence to an event occurring from the current display 150. According to various embodiments, the screen information analysis module 171 may deliver newly generated screen information and haptic update information including haptic information mapped into the newly generated screen information so as to control the update of the screen information database 231.

When an input signal occurs through the input/output interface 140, the input information analysis module 173 may analyze the type of an input object. During this operation, the input information analysis module 173 may check an input object type mapped into the form of a generated input signal on the basis of stored input object specific signal form information. For example, the input information analysis module 173 may analyze whether the form of a generated input signal is by a finger, an electronic pen, or a general pen on the basis of stored input object specific signal form information. When the type of an input object is checked, the input information analysis module 173 may check the input information database 233 to determine whether there is haptic information mapped into the input object. The input information analysis module 173 may control a haptic information output corresponding to an event occurring on the basis of the haptic information checked through the input information database 233.

The execution information analysis module 175 may collect at least one of execution information generated in correspondence to execution of a specific application and execution information to be transmitted by another electronic device (for example, the external electronic device 102 or 104, or the server device 106). The execution information analysis module 175 may check whether haptic information mapped into the collected execution information exists in the execution information database 235. When there is the haptic information mapped into the execution information, the execution information analysis module 175 may control a haptic information output in correspondence with an execution information collection. According to various embodiments, the execution information analysis module 175 may check a specific condition in relation to execution information and may control a related haptic information output when the execution information satisfies a specific condition.

The haptic information allocation module 177 may provide haptic information to at least one of screen information, input information, or execution information. For example, when the screen information analysis module 171 receives information on at least one object included in specific screen information, the haptic information allocation module 177 may check whether there is haptic information allocated to a corresponding object. When there is corresponding haptic information, the haptic information allocation module 177 may provide the haptic information to the screen information analysis module 171. Additionally, the haptic information allocation module 177 may provide, to the input information analysis module 173, haptic information corresponding to input signal information provided by the input information analysis module 173. Additionally, the haptic information allocation module 177 may provide, to the execution information analysis module 175, execution information mapped haptic information provided by the execution information analysis module 175.

According to various embodiments, when there is no mapped haptic information in screen information received from the screen information analysis module 171, the haptic information allocation module 177 may allocate haptic information to corresponding screen information in correspondence to various conditions. For example, the haptic information allocation module 177 may provide a screen for selecting haptic information to be provided by at least one of each object included in screen information. The haptic information allocation module 177 may perform haptic information mapping on at least one object in correspondence to a user selection and may perform a control to store its result in the screen information database 231. According to various embodiments, the haptic information allocation module 177 may provide a screen related to haptic information allocation in correspondence to at least one of input information and execution information and may allocate haptic information selected by a user input. In relation to this, the haptic information allocation module 177 may control a selection screen output including an information output area related to at least one of screen information, input information, and execution information and an area for selecting haptic information (at least one of softness, roughness, stickiness, resistance sense, friction sense, skin pulling sense, and smoothness etc.).

According to various embodiments, the haptic information allocation module 177 may detect an object into which the same or similar specific haptic information is mapped in correspondence to a specific object analysis and may perform a control to automatically map haptic information allocated to a corresponding object into a specific object. According to various embodiments, when an input signal is generated by a specific input object, the haptic information allocation module 177 may detect an input object into which haptic information similar to a corresponding input signal is mapped and may map haptic information allocated to a corresponding input object into the specific input object. According to various embodiments, the haptic information allocation module 177 may perform a control to automatically map haptic information allocated to an application related to corresponding execution information into the specific execution information in relation to specific execution information. During this operation, the haptic information allocation module 177 may update at least one of the screen information database 231, the input information database 233, and the execution information database 235.

The haptic information allocation module 177 may control the update of the audio information database 237 in correspondence to a user control. In relation to this, the haptic information allocation module 177 may provide a screen including an area for selecting at least one of screen information, input information, execution information, or haptic information and an area for selecting audio information. The haptic information allocation module 177 may perform a control to map specific haptic information or specific screen information, input information, or execution information into specific audio information according to a user selection. The haptic information allocation module 177 may perform a control to store mapped audio information in the audio information database 237. When specific haptic information is outputted on a specific screen, specific haptic information is outputted in relation to specific input information, or specific haptic information is outputted in correspondence to an execution information occurrence, the haptic information allocation module 177 may perform a control to output the haptic information together with mapped audio information.

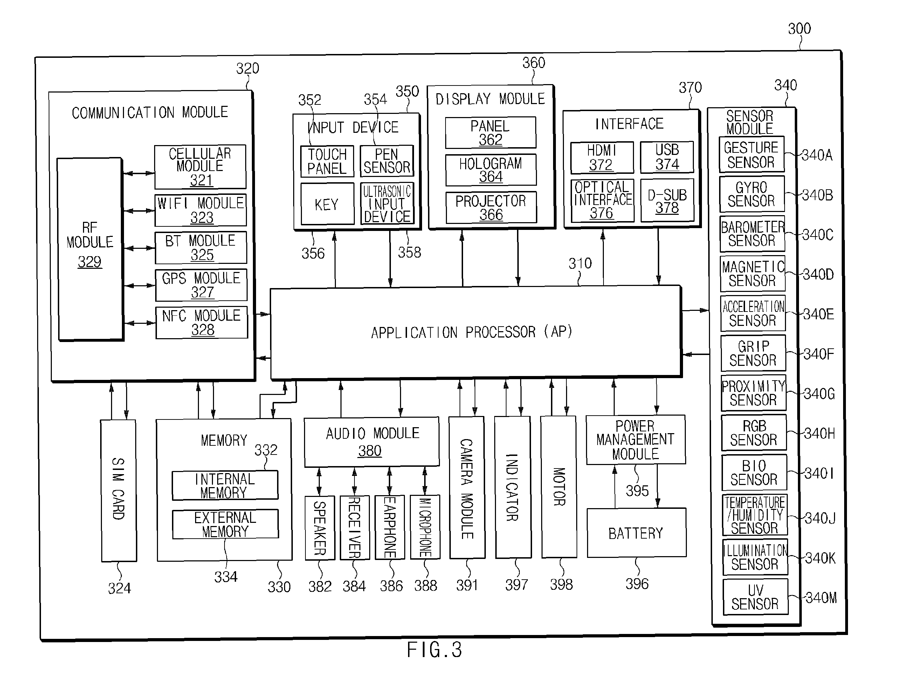

FIG. 3 is a block diagram of an electronic device according to various embodiments of the present disclosure. The electronic device illustrated in FIG. 3 may configure all or part of the above-mentioned electronic device 100 shown in FIG. 1.

Referring to FIG. 3, the electronic device 300 includes at least one application processor (AP) 310 (for example, the processor 120 and the haptic support module 170), a communication module 320 (for example, the communication module 160), a subscriber identification module (SIM) card 324, a memory 330 (for example, the memory 130), a sensor module 340 (for example the haptic module 180), an input device 350 (for example, the input/output interface 140), a display module 360 (for example, the displays 150), an interface 370, an audio module 380, a camera module 391, a power management module 395, a battery 396, an indicator 397, and a motor 398.

The AP 310 may control a plurality of hardware or software components connected to the AP 310 and also may perform various data processing and operations with multimedia data by executing an operating system or an application program. The AP 310 may be implemented with a system on chip (SoC), for example. According to an embodiment, the processor 310 may further include a graphic processing unit (GPU) (not shown).

The communication module 320 (for example, the communication interface 160) may perform data transmission/reception through a communication between other electronic devices (for example, the external electronic device 102 or 104 or the server device 106) connected to the electronic device 300 (for example, the electronic devices 100) via a network. According to an embodiment, the communication module 320 may include a cellular module 321, a WiFi module 323, a BT module 325, a GPS module 327, an NFC module 328, and a radio frequency (RF) module 329.

The cellular module 321 may provide voice calls, video calls, text services, or internet services through a communication network (for example, LTE, LTE-A, CDMA, WCDMA, UMTS, WiBro, or GSM). The cellular module 321 may perform a distinction and authentication operation on an electronic device in a communication network by using a SIM (for example, the SIM card 324), for example. According to an embodiment, the cellular module 321 may perform at least part of a function that the AP 310 provides. For example, the cellular module 321 may perform at least part of a multimedia control function.

According to an embodiment, the cellular module 321 may include a communication processor (CP). Additionally, the cellular module 321 may be implemented with an SoC, for example. As shown in FIG. 3, components such as the cellular module 321 (for example, a CP), the memory 330, or the power management module 395 are separated from the AP 310, but according to an embodiment, the AP 310 may be implemented including some of the above-mentioned components (for example, the cellular module 321).

According to an embodiment, the AP 310 or the cellular module 321 (for example, a CP) may load instructions or data, which are received from a nonvolatile memory or at least one of other components connected thereto, into a volatile memory and then may process them. Furthermore, the AP 310 or the cellular module 321 may store data received from or generated by at least one of other components in a nonvolatile memory.

Each of the WiFi module 323, the BT module 325, the GPS module 327, and the NFC module 328 may include a processor for processing data transmitted/received through a corresponding module. Although the cellular module 321, the WiFi module 323, the BT module 325, the GPS module 327, and the NFC module 328 are shown as separate blocks in FIG. 3, according to an embodiment, some (for example, at least two) of the cellular module 321, the WiFi module 323, the BT module 325, the GPS module 327, and the NFC module 328 may be included in one integrated chip (IC) or an IC package. For example, at least some (for example, a CP corresponding to the cellular module 321 and a WiFi processor corresponding to the WiFi module 323) of processors respectively corresponding to the cellular module 321, the WiFi module 323, the BT module 325, the GPS module 327, and the NFC module 328 may be implemented with one SoC.

The RF module 329 may be responsible for data transmission, for example, the transmission of an RF signal. Although not shown in the drawings, the RF module 329 may include a transceiver, a power amplifier module (PAM), a frequency filter, or a low noise amplifier (LNA). Additionally, the RF module 329 may further include components for transmitting/receiving electromagnetic waves on a free space in a wireless communication, for example, conductors or conducting wires. Although the cellular module 321, the WiFi module 323, the BT module 325, the GPS module 327, and the NFC module 328 share one RF module 329 shown in FIG. 3, according to an embodiment, at least one of the cellular module 321, the WiFi module 323, the BT module 325, the GPS module 327, and the NFC module 328 may perform the transmission of an RF signal through an additional RF module.

The SIM card 324 may be a card including a SIM and may be inserted into a slot formed at a specific position of an electronic device. The SIM card 324 may include unique identification information (for example, an integrated circuit card identifier (ICCID)) or subscriber information (for example, an international mobile subscriber identity (IMSI)).

The memory 330 (for example, the memory 130) may include an internal memory 332 or an external memory 334. The internal memory 332 may include at least one of a volatile memory (for example, dynamic Random Access Memory (DRAM), static RAM (SRAM), synchronous dynamic RAM (SDRAM)) and a non-volatile memory (for example, one time programmable Read Only Memory (OTPROM), programmable ROM (PROM), erasable and programmable ROM (EPROM), electrically erasable and programmable ROM (EEPROM), mask ROM, flash ROM, Not AND (NAND) flash memory, and Not OR (NOR) flash memory).

According to an embodiment, the internal memory 332 may be a Solid State Drive (SSD). The external memory 334 may further include a flash drive, for example, a compact flash (CF), a secure digital (SD), a micro Micro-SD, a Mini-SD, extreme digital (xD), or a memorystick. The external memory 334 may be functionally connected to the electronic device 300 through various interfaces. According to an embodiment, the electronic device 300 may further include a storage device (or a storage medium) such as a hard drive.

The memory 330 may include at least one of the screen information database 231, the input information database 233, the execution information database 235, the audio information database 237, and the haptic information database 239. Additionally, the memory 330 may store at least one application.

The sensor module 340 measures physical quantities or detects an operating state of the electronic device 300, thereby converting the measured or detected information into electrical signals. The sensor module 340 may include at least one of a gesture sensor 340A, a gyro sensor 340B, a barometric sensor 340C, a magnetic sensor 340D, an acceleration sensor 340E, a grip sensor 340F, a proximity sensor 340G, a color sensor 340H (for example, a red, green, blue (RGB) sensor), a biometric sensor 340I, a temperature/humidity sensor 340J, an illumination sensor 340K, and an ultra violet (UV) sensor 340M. Additionally or alternatively, the sensor module 340 may include an E-nose sensor (not shown), an electromyography (EMG) sensor, an electroencephalogram (EEG) sensor (not shown), an electrocardiogram (ECG) sensor (not shown), an infrared (IR) sensor (not shown), an iris sensor (not shown), or a fingerprint sensor (not shown). The sensor module 340 may further include a control circuit for controlling at least one sensor therein. According to various embodiments, the sensor module 340 may include the haptic module 180.

The input device 350 may include a touch panel 352, a (digital) pen sensor 354, a key 356, or an ultrasonic input device 358. The touch panel 352 may recognize a touch input through at least one of capacitive, resistive, infrared, or ultrasonic methods, for example. Additionally, the touch panel 352 may further include a control circuit. In the case of the capacitive method, both direct touch and proximity recognition are possible. The touch panel 352 may further include a tactile layer. In this case, the touch panel 352 may provide a tactile response to a user. According to various embodiments, the touch panel 352 may be used as the haptic module 180.

The (digital) pen sensor 354 may be implemented through a method similar or identical to that of receiving a user's touch input or an additional sheet for recognition. The key 356 may include a physical button, an optical key, or a keypad, for example. The ultrasonic input device 358, as a device checking data by detecting sound waves through a microphone (for example, a microphone 388) in the electronic device 300, may provide wireless recognition through an input tool generating ultrasonic signals. According to an embodiment, the electronic device 300 may receive a user input from an external device (for example, a computer or a server device) connected to the electronic device 300 through the communication module 320.

The display module 360 (for example, the display 150) may include a panel 362, a hologram device 364, or a projector 366. The panel 362 may include a liquid-crystal display (LCD) or an active-matrix organic light-emitting diode (AM-OLED). The panel 362 may be implemented to be flexible, transparent, or wearable, for example. The panel 362 and the touch panel 352 may be configured with one module. The hologram 364 may show three-dimensional images in the air by using the interference of light. The projector 366 may display an image by projecting light on a screen. The screen, for example, may be placed inside or outside the electronic device 300. According to an embodiment, the display module 360 may further include a control circuit for controlling the panel 362, the hologram device 364, or the projector 366. According to various embodiments, the display module 360 may output screen information including at least one object into which haptic information is mapped.

The interface 370 may include a HDMI 372, a USB 374, an optical interface 376, or a D-subminiature (D-sub) 378, for example. The interface 370 may be included in the communication interface 160 shown in FIG. 1, for example. Additionally/alternatively, the interface 370 may include a mobile high-definition link (MHL) interface, a SD card/multi-media card (MMC) interface, or an infrared data association (IrDA) standard interface.

The audio module 380 may convert sound into electrical signals and convert electrical signals into sounds. At least some components of the audio module 380 may be included in the input/output interface 140 shown in FIG. 1, for example. The audio module 380 may process sound information inputted/outputted through a speaker 382, a receiver 384, an earphone 386, or the microphone 388.

The camera module 391, as a device for capturing a still image and a video, may include at least one image sensor (for example, a front sensor or a rear sensor), a lens (not shown), an image signal processor (ISP) (not shown), or a flash (not shown) (for example, an LED or a xenon lamp).

The power management module 395 may manage the power of the electronic device 300. Although not shown in the drawings, the power management module 395 may include a power management IC (PMIC), a charger IC, or a battery, capacity, or fuel gauge, for example.

The PMIC may be built in an IC or SoC semiconductor, for example. A charging method may be classified into a wired method and a wireless method. The charger IC may charge a battery and may prevent overvoltage or overcurrent flow from a charger. According to an embodiment, the charger IC may include a charger IC for at least one of a wired charging method and a wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, may be added.

The battery gauge may measure the remaining amount of the battery 396, or a voltage, current, or temperature of the battery 396, for example during charging. The battery 396 may store or generate electricity and may supply power to the electronic device 300 by using the stored or generated electricity. The battery 396, for example, may include a rechargeable battery or a solar battery.

The indicator 397 may display a specific state of the electronic device 300 or part thereof (for example, the AP 310), for example, a booting state, a message state, or a charging state. The motor 398 may convert electrical signals into mechanical vibration. Although not shown in the drawings, the electronic device 300 may include a processing device (for example, a GPU) for mobile TV support. A processing device for mobile TV support may process media data according to the standards such as digital multimedia broadcasting (DMB), digital video broadcasting (DVB), or media flow.

According to various embodiments, an electronic device may include a haptic support module for performing at least one of a screen information analysis, an input information analysis, and an execution information analysis and allocating at least one haptic information according to the analysis result and a haptic module for outputting a haptic feedback corresponding to the haptic information in correspondence to an event occurrence.

According to various embodiments, the haptic support module may detect at least one object outputted or to be outputted on a screen and may set different haptic information by each object.

According to various embodiments, the haptic support module may set different haptic information in the boundary area of the object and an area other than the boundary area.

According to various embodiments, the haptic support module may set first haptic information in the boundary area of the object, set second haptic information inside the object, and set third haptic information outside the object. Additionally or alternatively, additional haptic information may not be allocated to the outside of the object.

According to various embodiments, when a specific object is selected from the objects displayed on a display, the haptic support module may change haptic information allocated to the object displayed on the display into another type of haptic information.

According to various embodiments, the haptic support module may set haptic information corresponding to at least one of the form of an object outputted to the screen or to be outputted on a screen, a material related to an image where an object is displayed, and description information related to an object.

According to various embodiments, the haptic support module may set different haptic information according to at least one of the type of an input object, the type of an input signal generated by the input object, and a state of the input signal.

According to various embodiments, the haptic support module may set different haptic information corresponding to certain collected execution information according to specific function execution.

According to various embodiments, the haptic support module may receive execution information related to a health care function and set different haptic information by each type of received execution information.

According to various embodiments, the haptic support module may check an arrangement state of an electronic device during the event occurrence, and set differently a haptic feedback output point corresponding to the haptic information in a touch area related to the event occurrence according to an arrangement state of the electronic device.

According to various embodiments, the haptic support module may control (or be set) to output a different haptic event in correspondence to at least one of an event occurrence position in a detected object according to the screen information analysis result, the intensity of an event signal (for example, at least one of a touch pressure magnitude, the size of a capacitance value related to touch detection or hovering detection, the size of inputted sound or vibration, and the size of an area where a signal of more than a specific size is detected during an event occurrence), a proximity between an event occurrence point and an object (for example, at least one of a distance between an object and an event occurrence point and a proximity between an object surface and input object), and an event holding time.

According to various embodiments, the haptic support module may be set to differently output haptic feedback outputted from an area of the object displayed on a display and the boundary area of the object.

According to various embodiments, the haptic support module may be set to suppress a specific haptic feedback output when a signal intensity applied to the object is a specified first size (for example, a signal that is less than or equal to 40% of the detectable maximum signal intensity or within a specified first range), or may set to output a specific haptic feedback when a pressure applied to the object is different from the pressure specified first size.

According to various embodiments, when a pressure applied to the object is a specified second size (for example, a signal that is more than or equal to 70% of the detectable maximum signal intensity or within a specified second range (for example, a range different from the first range)), the haptic support module may be set to execute a function set in the object. The first size and the second size or the first range and the second range may have various types and maximum values according to the type of a sensor for detecting signals.

According to various embodiments, when a first event is received from an area other than an area where an object detected according to the screen information analysis result is disposed, the haptic support module may be set to output a specified reference haptic feedback.

According to various embodiments, the haptic support module may be set to output at least one of a directional haptic feedback indicating an area where the object is disposed and a haptic feedback of less than a specific size.

According to various embodiments, when the moving speed of the first event is more than a specific speed, the haptic support module may be set to adjust an output time of a haptic feedback corresponding to the object in correspondence to at least one distance between the current position of the first event and the object, and the moving speed.

According to various embodiments, when a first event is received from an area other than an area where the object is disposed, the haptic support module may be set to suppress a haptic feedback output and when the first event is received from the object, set to output the specific haptic feedback.

According to various embodiments, when the first event or a second event different from the first event is received from the object, the haptic support module may be set to execute a function corresponding to the object.

According to various embodiments, when at least one object is displayed at a specific position of a display in correspondence to at least one of a moving direction and grip position of the electronic device, the haptic support module may be set to output another haptic feedback in correspondence to an output position of the object.

According to various embodiments, the haptic support module may be set to output different haptic feedback to a plurality of areas included in the object.

According to various embodiments, when an event occurs from an area other than the object, the haptic support module may be set to output a directional haptic feedback indicating a direction in which the object is placed at the event position.

According to various embodiments, the haptic support module may be set to transmit information corresponding to the haptic feedback to another electronic device.

According to various embodiments, the haptic support module may be set to switch a display into a turn-off state or maintain the turn-off state in relation to the output of the haptic feedback.

According to various embodiments, when the wearing of an electronic device is detected, the haptic support module may be set to output a specific haptic feedback to a wearing detected area (for example, a housing portion of an electronic device contacting a body or at least a partial area (or an entire area) of the electronic device) and when the entering of an electronic device into a specific position (for example, an indoor/outdoor position area range specified based on GPS or WiFi signals) is detected, set to output a specific haptic feedback from at least part of an electronic device.

According to various embodiments, when the electronic device is out of a specific position or the wearing of the electronic device is released, the haptic support module may be set to terminate the haptic feedback output.

According to various embodiments, the haptic support module may be set to output at least one haptic feedback according to a comparison of information collected based on collected sensor signals and a set target value.

According to various embodiments, the haptic support module may be set to output a haptic feedback from at least one of a display area and bezel area of the electronic device.

According to various embodiments, the haptic support module may be set to output a haptic feedback in which at least one of a form and a position is different in correspondence to the size of an achievement rate according to a comparison with the target value.

According to various embodiments, the haptic support module may be set to output a haptic feedback of a given specific form in correspondence to currently collected sensor signals or sensor signals accumulated for a specific period.

According to various embodiments, the haptic support module may be set to output a haptic feedback for guiding to adjust a speed detected based on a sensor signal.

According to various embodiments, the haptic support module may be set to output a haptic feedback in which at least one of the size and frequency of haptic is adjusted in correspondence to a guide for increasing or decreasing the speed.

According to various embodiments, the haptic support module may be set to output at least one of a haptic feedback having at least one orientation related to obtained time information in correspondence to the execution information analysis result, a haptic feedback corresponding to an obtained deep sleep degree in correspondence to the execution information analysis result, and a haptic feedback corresponding to an obtained stress index size in correspondence to the execution information analysis result.

According to various embodiments, the haptic support module may be set to output a specific haptic feedback to an object corresponding to an inputted keyword or a keyword search result.

According to various embodiments, the haptic support module may be set to output different haptic feedback by each keyword in correspondence to the keyword input frequency.

According to various embodiments, the haptic support module may be set to execute a function related to a keyword or a function related to the object in correspondence to at least one of the duration time, pressure magnitude, touch area, and charge amount of an event for selecting the object.

According to various embodiments, the haptic support module may be set to differently output a haptic feedback related to the keyword in correspondence to at least one operation of a character input related to the keyword, handwriting recognition on a touch screen or a touch pad, and voice recognition.

According to various embodiments, when there is a plurality of objects, the haptic support module may be set to allocate different haptic feedback to the object in correspondence to a similarity or reliability between a keyword and the object.

According to various embodiments, the haptic support module may be set to allocate a directional haptic feedback indicating a target object disposed in an area currently not displayed in an entire screen area.

According to various embodiments, the haptic support module may be set to allocate the directional haptic feedback to at least one object displayed on the display.

According to various embodiments, the haptic support module may be set to allocate different haptic feedback according to the target object type in correspondence to the analysis result.

According to various embodiments, when the target object is hidden by another object or the target object is exposed, the haptic support module may be set to allocate different haptic feedback in correspondence to at least one of the size of the target object and the position of the target object.

According to various embodiments, the haptic support module may be set to output different haptic feedback in correspondence to the event occurrence position and the distance with the target object.

According to various embodiments, the haptic support module may be set to display, on a display, a screen area including a target object related to search in an entire screen area by default.

According to various embodiments, the haptic support module may be set to output different haptic feedback in correspondence to an event type related to a screen area change displayed on the display.

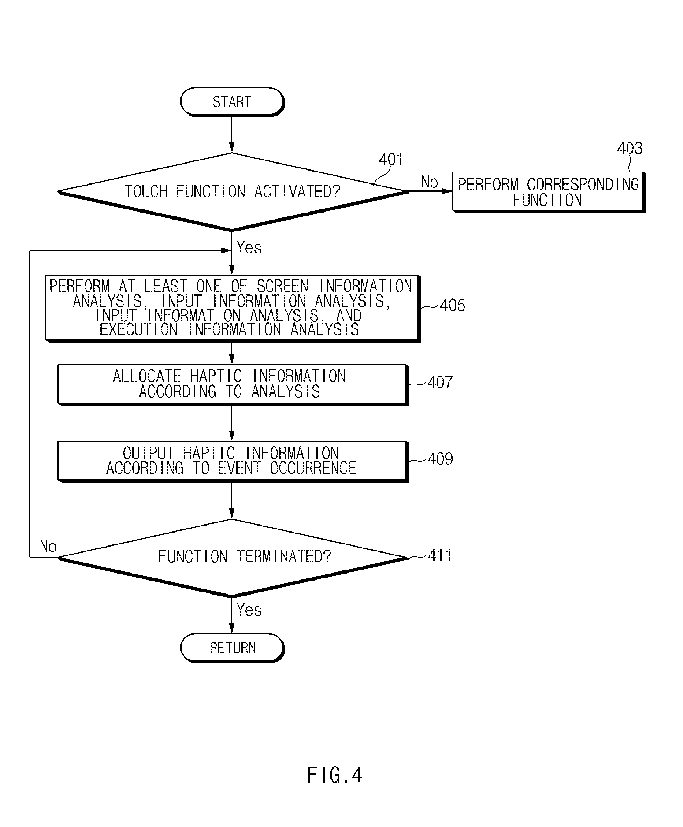

FIG. 4 is a flowchart illustrating a haptic information management method according to various embodiments of the present disclosure.

Referring to FIG. 4, the haptic support module 170 may check whether to activate a touch function in operation 401. For example, when a specific input event occurs, the haptic support module 170 may check whether a corresponding event is an input event related to a sleep mode release or an input event related to the execution of a specific function (for example, a call function, a schedule function, and a notification function). When an occurring specific event is not an event related to a touch function activation in operation 401, the haptic support module 170 may control performance of a function corresponding to an event in operation 403. For example, the haptic support module 170 may perform a volume adjustment in correspondence to the type of an input event. Alternatively, the haptic support module 170 may control a voice search function performance in correspondence to a type of an input event. Alternatively, if there is additional event occurrence, for example, the haptic support module 170 may perform a control to maintain a previous state (for example, a sleep mode state) in operation 403.

When it is determined in operation 401 that an event related to touch function activation occurs, the haptic support module 170 may perform at least one of a screen information analysis, an input information analysis, and an execution information analysis in operation 405. For example, the haptic support module 170 may perform a control to activate a touch panel in correspondence to an event occurrence. According to an embodiment, the haptic support module 170 may collect screen information outputted to the display 150 in relation to an event occurrence. The haptic support module 170 may extract at least one object related to haptic information mapping on the basis of the collected screen information analysis. According to an embodiment, the haptic support module 170 may collect input information corresponding to an event related to a touch function activation.

The haptic support module 170 may perform the collected input information analysis to classify at least one of the type of an input object (for example, an object such as a finger, an electronic pen, and a general pen), the type of an input signal (for example, a touch down input, a touch drag input, a touch release input, and a touch holding input), and a state of an input signal (for example, a touch position, a moving speed according to a touch position change, a touch intensity, a touch area, the form of a touch area, the distribution of touch related signals in a touch area (for example, capacitance and resistance), a touch holding time, and a change in touch input signal according to a time). According to an embodiment, the haptic support module 170 may collect execution information of an executed function in correspondence to an event occurrence. The haptic support module 170 may perform an analysis such as the type of an application related to execution information and an execution information occurrence time.

In operation 407, the haptic support module 170 may perform haptic information allocation (or setting) according to an analysis. According to an embodiment, the haptic support module 170 may check haptic information mapped into at least one object included in screen information. According to an embodiment, the haptic support module 170 may check haptic information mapped by each type of an input object, haptic information mapped by each type of an input signal, and haptic information mapped by each input signal state. According to an embodiment, the haptic support module 170 may check haptic information mapped by each type of execution information.

In operation 409, the haptic support module 170 may perform haptic information output according to an event occurrence. According to an embodiment, when an event (for example, at least one of a touch event and a hovering event) for selecting a specific object included in screen information occurs or an event occurs from an area including an area where a specific object is outputted, the haptic support module 170 may control the driving of the haptic module 180 on the basis of haptic information mapped into a corresponding object. According to an embodiment, when an input event occurs by an input object of a checked type, the haptic support module 170 may control the driving of the haptic module 180 on the basis of haptic information mapped into a corresponding input object. According to an embodiment, the haptic support module 170 may control the driving of the haptic module 180 on the basis of haptic information mapped into execution information.

In operation 411, the haptic support module 170 may check whether there is a function termination related event occurrence (for example, an event including at least one of the termination of an application, touch input signal non-detection, low power mode entry, haptic feedback non-supporting mode setting, user's bio signal non-detection, given specific gesture event reception, or the reception of a given specific sensor signal (for example, a sensor signal of a proximity sensor or a sensor signal of an illumination sensor)). When there is no function termination related event occurrence, the haptic support module 170 may branch into operation 405 and perform the subsequent processes again. When a function termination related event occurs, the haptic support module 170 may branch into operation 403 and control a function performance according to an event occurrence or a function performance corresponding to schedule information. For example, the haptic support module 170 may terminate the driving of the haptic module 180 on the basis of at least one of screen information, input information, and execution information.

When a specific event (for example, an event for requesting the output of a fixed feedback) occurs, the haptic support module 170 may perform a control to output a haptic feedback according to specific haptic information (information set to provide the same feedback regardless of the type of received information) corresponding thereto. Alternatively, when a specific event occurs, the haptic support module 170 may perform a screen display change control. Alternatively, the haptic support module 170 may perform a control to stop the driving of an additional haptic module 180 in correspondence to an event occurrence.

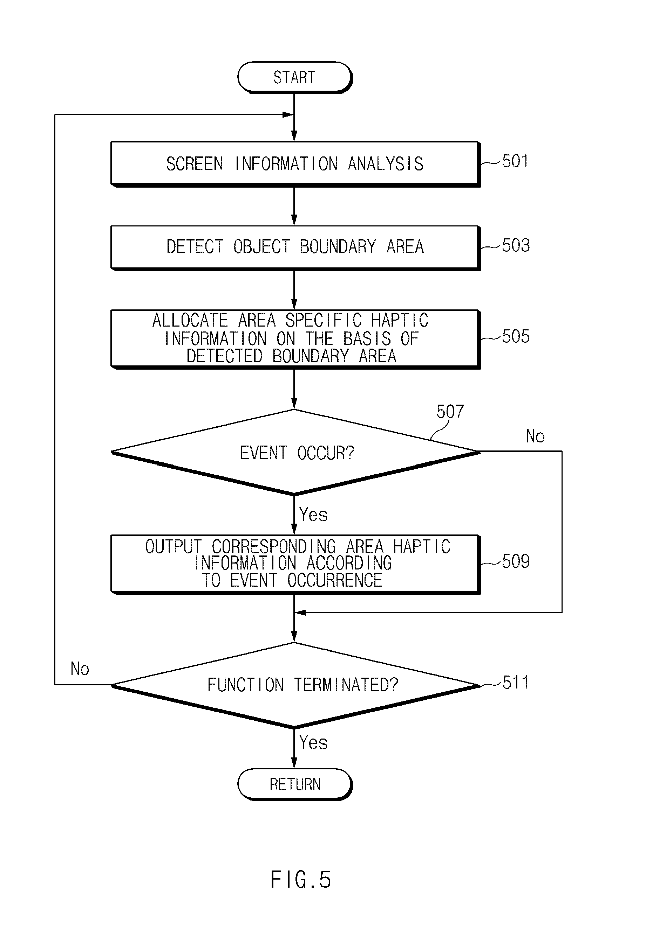

FIG. 5 is a flowchart illustrating a method of managing object based haptic information in screen information according to various embodiments of the present disclosure.

Referring to FIG. 5, the haptic support module 170 may perform a screen information analysis in operation 501. For example, the haptic support module 170 may extract at least one object included in a screen being outputted to the display 150 or at least one object included in a screen to be outputted to the display 150.

In operation 503, the haptic support module 170, for example, may perform the boundary area detection of at least one object. For example, the haptic support module 170 may detect a specific area of the edge of an object having a specific surface or thickness or a boundary area including a specified range on the basis of the edge of an object. For example, the haptic support module 170 may detect a line having a specific thickness or surface (for example, straight line, curve, and free curve) or a specified range including a line (for example, a specific area adjacent to a line on the basis of the line) as a boundary area. The haptic support module 170 may detect a compartment line (or a specific area adjacent to a compartment line) having a specific thickness or area for dividing a plurality of areas as a boundary area.

In operation 505, the haptic support module 170 may perform an area specific haptic information allocation on the basis of the detected boundary area. For example, the haptic support module 170 may allocate first haptic information to a boundary area, second haptic information (for example, information differently defined from a tactile sense implemented by the first haptic information) to an outer area of a boundary area, and third haptic information (for example, at least one of information differently from a tactile sense implemented by the second haptic information and information differently defined from a tactile sense implemented by the first haptic information) to an inner area of a boundary area. According to another embodiment, at least one of the first haptic information, the second haptic information, and the third haptic information may be haptic information providing a different form of tactile sense.

According to various embodiments, the haptic support module 170 may check haptic information allocated based on a corresponding boundary area from the screen information database 231. The haptic support module 170 may detect first haptic information allocated to a boundary area, second haptic information allocated to the outer area of the boundary area, and third haptic information allocated to the inner area of the boundary area.

In operation 507, the haptic support module 170 may check whether there is an event occurrence. For example, the haptic support module 170 may check whether an event (for example, a touch event or a hovering event) for selecting or indicating at least one object outputted to the display 150 occurs.

When there is an event occurrence, the haptic support module 170 may control a haptic information output mapped into a corresponding area (for example, a corresponding object) according to the event occurrence in operation 509. During this operation, the haptic support module 170 may perform a haptic information output classified based on the boundary area of an object. According to an embodiment, the haptic support module 170 may control a first haptic information output in correspondence to an event occurring from the outside of the boundary area of an object. According to an embodiment, the haptic support module 170 may control a second haptic information output in correspondence to an event occurring from an object boundary area. According to an embodiment, the haptic support module 170 may control a third haptic information output in correspondence to an event occurring from the inside of the boundary area of an object. According to another embodiment, an area where an event occurs may be at least one. For example, when a touch event occurs by a finger, an area that the finger contacts (for example, an area where a touch signal occurs) may include at least one of an object boundary area, the outer area of the boundary area, and the inner area of the boundary area. When an event occurs from a plurality of areas, the haptic support module 170 may determine that the event occurs at the center points of the plurality of areas.

According to various embodiments, the haptic support module 170 may assign weights to a plurality of areas. The haptic support module 170 may determine that the event occurs from the area having the highest weight among the plurality of areas. For example, when the boundary area is partially included in a plurality of areas where an event occurs, the haptic support module 170 may determine that the bound area is selected. Alternatively, the haptic support module 170 may determine a point at which an event occurs by considering weights allocated to a plurality of areas. For example, when an event occurs from a boundary area and a plurality of areas including an area inside the boundary area, the haptic support module 170 may determine an event occurrence position by considering a weight of the boundary area (for example, a distance between the event occurrence point and the boundary area or a difference between an area occurring from the boundary area in an event (for example, a touch) area and an area occurring from an area other than the boundary area).

According to various embodiments, the haptic support module 170 may determine that a specific spot or point in an area where an event occurs as an area where a corresponding event occurs according to a specific criteria (for example, a partial spot or a partial area in a finger touched area during a finger touch, the center point of a finger touched area or a center point based partial area, a partial spot or partial area of the edge of a finger touched area, or a partial spot or partial area of the edge in a dragging direction after finger touch).

If there is no event occurrence, the haptic support module 170 may skip operation 509.

In operation 511, the haptic support module 170 may check whether there is a function termination related event occurrence. When there is no function termination related event occurrence, the haptic support module 170 may branch into operation 501 and perform the subsequent processes again. When the function termination related event occurs, the haptic support module 170 may terminate a haptic information output function according to a screen information analysis. According to various embodiments, the haptic support module 170 may control a screen output according to an application execution or may perform a control to shift into a sleep mode state (for example, a state in which the display 150 is turned off).

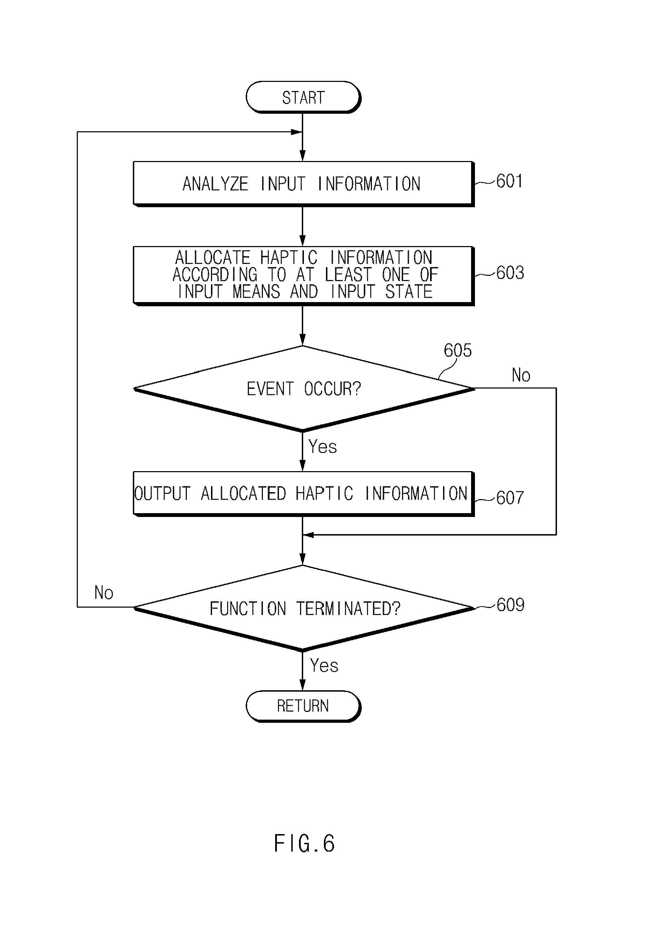

FIG. 6 is a flowchart illustrating an input object type based haptic information management method according to various embodiments of the present disclosure.

Referring to FIG. 6, the haptic support module 170 may perform an input information analysis in operation 601. According to an embodiment, the haptic support module 170 may analyze at least one of the type of an input device, the type of an input signal, and the type of an input object. For example, the haptic support module 170 may collect a touch event generated by an input object in the display 150 for supporting a touch function. The haptic support module 170 may determine the type of an input object on the basis of the size of an area where a touch event occurs. When the size of an area where a touch event occurs is less than a specific size, the haptic support module 170 may determine this as a pen. When the size of an area where a touch event occurs is greater than a specific size, the haptic support module 170 may determine this as a finger.

According to various embodiments, the haptic support module 170 may perform an electronic pen or finger classification on the basis of a device related to an electronic pen recognition (for example, a switch device for recognizing electronic pen detachment and a communication device related to electronic pen recognition). According to various embodiments, the haptic support module 170 may distinguish the type of an electronic pen by using various electronic devices disposed at the electronic pen.

According to various embodiments, the haptic support module 170 may classify the type of an input object on the basis of the characteristics of an audio signal or vibration signal generated by touch. For example, when a touch occurs by an input object (for example, a nail, a knuckle, a fingertip, a palm, etc.), the haptic support module 170 may recognize impact sound or vibration detected through a microphone or a motion sensor (for example, a gyro sensor and an acceleration sensor) to determine an input object.

According to an embodiment, the haptic support module 170 may analyze an impact sound differently occurring according to the type of an input object or a specific pattern or feature (for example, a frequency and a tone) of a vibration signal to determine what kind of an input object generates a signal. For example, the haptic support module 170 may distinguish an impact sound or vibration generated by at least one of a nail touch and a finger pad touch. Additionally, the haptic support module 170 may distinguish an impact sound or vibration of a touch by the tip or rear part of a pen. The haptic support module 170 may distinguish an input object by distinguishing at least one of the above-mentioned impact sound and vibration sound. According to an embodiment, a touch by a finger end and a pen rear part may have a similar form and size during input but may be distinguished by impact sound or vibration. For example, the haptic support module 170 may distinguish a capacitive stylus pen for touching a touch screen and finger pad on the basis of at least one of the shape and form of an area where an event signal occurs.

According to various embodiments, the haptic support module 170 may determine the type of an input object on the basis of at least one of an occurrence area and the form of an occurrence surface in addition to the impact sound or the vibration. For example, in the case in which the materials of input objects are similar to each other, their impact sounds or vibrations may be similar but if the shapes of corresponding input objects are different, the haptic support module 170 may distinguish the input object on the basis of an event occurrence area or form.

According to various embodiments, the haptic support module 170 may classify the type of an input event occurring by an input means on the basis of a state of an input signal. For example, the haptic support module 170 may classify a touch down event, a touch hold event, a touch drag event, a touch release event, and a hovering event (for example, an event detected according to a capacitance change occurring in a non-contact state or an event for detecting a capacitance change or voltage value change of a different size (less than or more than a specified signal intensity) from a signal intensity defined for distinguishing it from a touch event). In the case of a touch hold event, the haptic support module 170 may classify the touch hold event as another event according to a holding time. In the case of a touch drag event, the haptic support module 170 may classify the touch drag event into various event types on the basis of at least one of a drag speed and a distance.

In operation 603, the haptic support module 170, for example, may perform a haptic information allocation according to at least one of an input means and an input state. According to an embodiment, the haptic support module 170 may allocate first haptic information in correspondence to an input signal generated by an electronic pen. The haptic support module 170 may perform a different haptic information allocation (for example, first haptic information allocation to an electronic pen of a first characteristic and second haptic information allocation to an electronic pen of a second characteristic) in correspondence to the type of a pen. According to an embodiment, the haptic support module 170 may allocate third haptic information in correspondence to an input signal generated by a finger. The haptic support module 170 may perform various haptic information allocations (for example, third haptic information allocation to a thumb and fourth haptic information (for example, information for defining a tactile sense different from that implemented by third haptic information) allocation to an index finger) according to the type of a finger. During this operation, the thumb and the index finger may be distinguished from each other based on the size of the touched area.

In operation 605, the haptic support module 170 may check whether there is an event occurrence. When there is an event occurrence, the haptic support module 170 may control an allocated haptic information output according to an event occurrence in operation 607. For example, when there is an event occurrence corresponding to an electronic pen input, the haptic support module 170 may control a first haptic information output corresponding thereto. When there is an event corresponding to a finger input occurs, the haptic support module 170 may control a third haptic information output corresponding thereto.

If there is no event occurrence, the haptic support module 170 may skip operation 607.

In operation 609, the haptic support module 170 may check whether there is a function termination related event occurrence. When there is no function termination related event occurrence, the haptic support module 170 may branch into operation 601 and perform the subsequent processes again. When a function termination related event occurs, the haptic support module 170 may terminate a haptic information output function according to an input information analysis. According to various embodiments, the haptic support module 170 may control a screen output according to an application execution or may perform a control to shift into a sleep mode state (for example, a state in which the display 150 is turned off).

According to various embodiments, the type of an input signal may include at least one of a touch input, a hovering detection, a proximity detection, a gesture input, a power input, a vibration input, and an audio input. A state of an input signal may mean the characteristics of a signal inputted according to the type of an input signal. For example, an input signal state may include at least one of a signal position, a signal pattern, a signal frequency, a signal duration time, a signal amplitude, a signal size, a signal distribution form, the size of a signal inputted area, the form of a signal inputted area, the distribution of detailed signal sets corresponding to the area, and a change according to a time of the signal or the detailed signals.

The type of an input object may include an input object such as a nail, a knuckle, rubber, wood, etc. in addition to an input means such as a stylus pen and a finger. The type of an input device may include an input device applied by at least one of a capacitive method, a resistance film method, an optical method, an electromagnetic induction method, an ultrasonic detection, a vibration detection, and an audio (sound wave) detection and may include a keyboard, a mouse, a 3D mouse, a joystick, a data glove, an HMD, a heads-up display (HUD), and a smart watch.

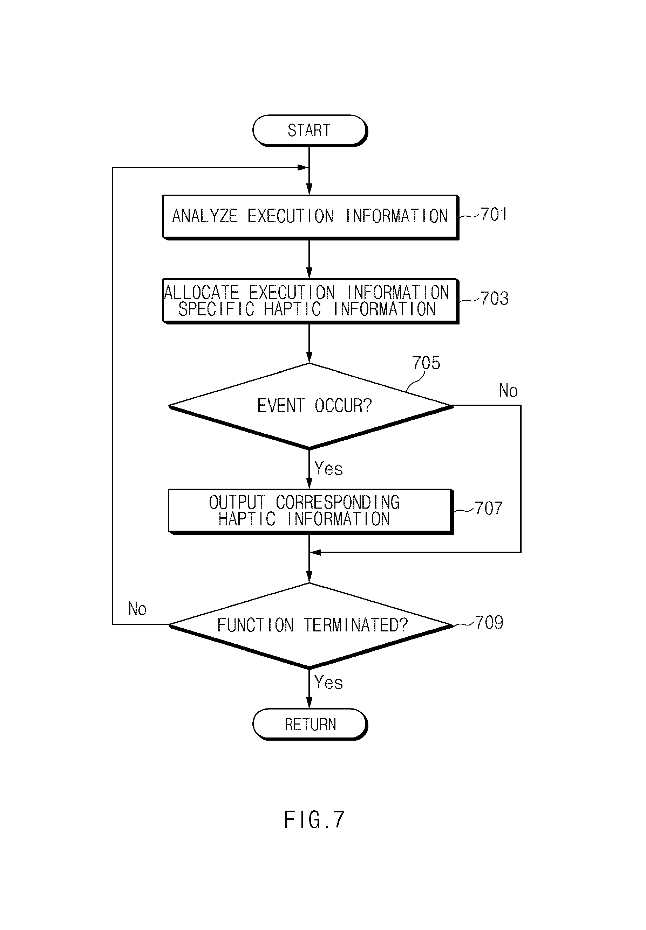

FIG. 7 is a flowchart illustrating an execution information condition based haptic information management method according to various embodiments of the present disclosure.

Referring to FIG. 7, the haptic support module 170 may perform an execution information analysis in operation 701. According to an embodiment, when a specific application is executed to execute a specific function, the haptic support module 170 may collect execution information in correspondence to a corresponding function execution. The haptic support module 170 may check the type of collected execution information and may then check whether the checked execution information is information specified to output specific haptic information. The haptic support module 170 may check the execution information database 235 in relation to this and may check whether there is haptic information mapped into execution information.

In operation 703, the haptic support module 170, for example, may perform an execution information specific haptic information allocation. When the collected execution information exists in the execution information database 235, the haptic support module 170 may check mapped haptic information.

In operation 705, the haptic support module 170 may check whether there is an event occurrence. For example, the haptic support module 170 may check whether an event that execution information satisfies a specific condition occurs. When there is an event occurrence, the haptic support module 170 may control an allocated haptic information output according to an event occurrence in operation 707. For example, the haptic support module 170 may control the driving of the haptic module 180 on the basis of haptic information mapped into corresponding execution information in correspondence to the condition satisfaction of execution information.

According to an embodiment, the electronic device 100 may execute a health care function. The haptic support module 170 may collect heart rate information as execution information according to a health care function execution. When an event that the collected heart rate information becomes more than a specific value or less than a specific value occurs, the haptic support module 170 may control a haptic information output allocated to execution information.

According to various embodiments, the haptic support module 170 may collect an exercise count value as execution information in correspondence to a pedometer function execution. When an event that the exercise count value is greater than a specific value occurs, the haptic support module 170 may control an allocated haptic information output. According to various embodiments, the haptic support module 170 may output directional haptic information for guiding a specific area that a user wants to search on specific screen information. When a specific event occurs on a search area, the haptic support module 170 may control a specific haptic information output.

If there is no event occurrence, the haptic support module 170 may skip operation 707.

In operation 707, the haptic support module 170 may check whether there is a function termination related event occurrence. When there is no function termination related event occurrence, the haptic support module 170 may branch into operation 701 and perform the subsequent processes again. When a function termination related event occurs, the haptic support module 170 may terminate a haptic information output function according to an input information analysis. According to various embodiments, the haptic support module 170 may control a screen output according to an application execution or may perform a control to shift into a sleep mode state (for example, a state in which the display 150 is turned off, a state in which only a sensor hub (or a low-power processing module) for determining and managing operations of sensors, or a low-power mode state).

According to various embodiments, a haptic information management method may include performing at least one of a screen information analysis, an input information analysis, and an execution information analysis, allocating at least one haptic information according to the analysis result, and outputting a haptic feedback corresponding to the haptic information in correspondence to an event occurrence.

According to various embodiments, the performing of the screen information analysis may include detecting at least one object outputted or to be outputted on a screen and allocate different haptic information by each object.

According to various embodiments, the allocating of the different haptic information may include detecting the boundary area of the object and allocating different haptic information to the boundary area and an area other than the boundary area.

According to various embodiments, the allocating of the different haptic information may include allocating first haptic information to the boundary area of the object, allocating second haptic information inside the object, allocating third haptic information outside the object, or not allocating haptic information.

According to various embodiments, the method may include changing haptic information allocated to other objects in correspondence to the selection of a specific object among the objects.

According to various embodiments, the allocating of the different haptic information may include at least one of allocating haptic information corresponding to at least one object form outputted to the screen or to be outputted to a display, analyzing the content of at least one object outputted to the screen or to be outputted on a screen to allocate haptic information according to the material of the object, or allocating haptic information corresponding to description information related to the object.

According to various embodiments, the performing of the input information analysis may include at least one of classifying the type of an input object, analyzing the type of an input signal generated by the input object, and analyzing a state of the input signal.

According to various embodiments, the allocating of the different haptic information may include at least one of allocating different haptic information by each input object, allocating different haptic information according to the type of the input signal, or allocating different haptic information according to a state of the input signal.

According to various embodiments, the performing of the execution information analysis may include checking execution information collected according to a specific function execution and allocating different haptic information by each execution information.

According to various embodiments, the method may include checking, when the event occurs, a placement state of an electronic device (for example, a pose state or motion change state of an electronic device on a 3D space, a tilted angle of an electronic device on the basis of the ground (or horizontal line), or a tilted angle or rotated angle of an electronic device on the basis of an axis vertical to the ground), and setting the haptic feedback output point differently in a touch area related to the event occurrence according to the placement state of the electronic device. According to various embodiments, the outputting of the haptic feedback may include outputting a different haptic event in correspondence to at least one of an event occurrence position in a detected object according to the screen information analysis result, an event signal intensity (for example, at least one of a detected pressure magnitude, a voltage value size, a capacitance value size by touch or hovering, and an input area size (for example, a touch area)), and a proximity between an event occurrence point and an object (for example, at least one of a distance between an object and an event occurrence point and a proximity between an object surface and input object).

According to various embodiments, the outputting of the haptic feedback may include differently outputting haptic feedback outputted from the center part of the object and the boundary area of the object.

According to various embodiments, the outputting of the haptic feedback may include suppressing a haptic feedback output when a pressure applied to the object is different from a specific value (for example, less than) and outputting a specific haptic feedback when a signal intensity applied to the object is different from a specific value (for example, more than).

According to various embodiments, when a signal intensity applied to the object is different from a specific value (for example, more than), a function set in the object may be executed.

According to various embodiments, the outputting of the haptic feedback may include, when a first event is received from an area other than an area where an object detected according to the screen information analysis result is disposed, outputting a specified reference haptic feedback.

According to various embodiments, the outputting of the reference haptic feedback may include at least one of outputting a directional haptic feedback indicating an area where the object is disposed and outputting a haptic feedback of less than a specific size.

According to various embodiments, the outputting of the haptic feedback may include, when the moving speed of the first event is more than a specific speed, adjusting an output time of a haptic feedback corresponding to the object in correspondence to a distance between the current position of the first event and the object and the moving speed.

According to various embodiments, the outputting of the haptic feedback may include, when a first event is received from an area other than an area where the object is disposed, suppressing a haptic feedback output and, when the first event is received from the object, outputting the specific haptic feedback.

According to various embodiments, the method may include, when the first event or a second event different from the first event is received from the object, executing a function corresponding to the object.

According to various embodiments, the allocating of the different haptic information may include, when at least one object is displayed at a specific position of a display in correspondence to at least one of a moving direction and grip position of the electronic device, outputting another haptic feedback in correspondence to an output position of the object.

According to various embodiments, the allocating of the different haptic information may include outputting different haptic feedback to a plurality of areas included in the object.

According to various embodiments, the outputting of the haptic feedback may include, when an event occurs from an area other than the object, outputting a directional haptic feedback indicating a direction in which the object is placed at the event position.

According to various embodiments, the outputting of the haptic feedback may include, transmitting information corresponding to the haptic feedback to another electronic device.

According to various embodiments, the method may include switching a display into a turn-off state or maintaining the turn-off state in relation to the output of the haptic feedback. According to various embodiments, the outputting of the haptic feedback may include at least one of when the wearing of an electronic device is detected, outputting a specific haptic feedback to a wearing detected area (for example, a housing portion of an electronic device contacting a body or at least a partial area in an area where a haptic module is disposed), when an electronic device enters a specific position (for example, a specific position or specific position area range in indoor/outdoor specified based on GPS or WiFi signals), outputting a specific haptic feedback, and when the wearing of an electronic device is detected, outputting and delivering a specific haptic feedback to the entire worn electronic device (for example, an entire haptic module disposed in an electronic device or at least a partial haptic module set to allow a user to feel a haptic feedback from the entire electronic device).

According to various embodiments, the outputting of the haptic feedback may include, when the electronic device is out of a specific position or the wearing of the electronic device is released, terminating the haptic feedback output.

According to various embodiments, the outputting of the haptic feedback may include outputting at least one haptic feedback according to a comparison of information collected based on collected sensor signals and a set target value.

According to various embodiments, the outputting of the haptic feedback may include outputting a haptic feedback from at least one of a display area and a bezel area of the electronic device.

According to various embodiments, the outputting of the haptic feedback may include at least one of outputting a different form of a haptic feedback in correspondence to the size of an achievement rate according to a comparison with the target value and varying the output position of a haptic feedback in correspondence to the size of an achievement rate according to a comparison with the target value.

According to various embodiments, the outputting of the haptic feedback may include outputting a haptic feedback of a specific form in correspondence to currently collected sensor signals or sensor signals accumulated for a specific period.

According to various embodiments, the outputting of the haptic feedback may include outputting a haptic feedback for guiding to adjust a speed detected based on a sensor signal.

According to various embodiments, the outputting of the haptic feedback may include outputting a haptic feedback in which at least one of the size and frequency of the haptic feedback is adjusted to increase the speed, and outputting a haptic feedback in which at least one of the size and frequency of the haptic feedback is adjusted to decrease the speed.

According to various embodiments, the outputting of the haptic feedback may include at least one of outputting a haptic feedback having at least one orientation related to obtained time information in correspondence to the execution information analysis result, outputting a haptic feedback corresponding to an obtained deep sleep degree in correspondence to the execution information analysis result, and outputting a haptic feedback corresponding to an obtained stress index size in correspondence to the execution information analysis result.

According to various embodiments, the allocating of the different haptic information may include allocating information set to output a specific haptic feedback to an object corresponding to an inputted keyword or a keyword search result.

According to various embodiments, the allocating of the different haptic information may include allocating information set to output different haptic feedback by each keyword in correspondence to the keyword input frequency.

According to various embodiments, it may be set to execute a function related to a keyword or a function related to the object in correspondence to at least one of the duration time, pressure magnitude, touch area, and charge amount of an event for selecting the object.

According to various embodiments, the allocating of the different haptic information may include differently allocating a haptic feedback related to the keyword in correspondence to at least one operation of a character input related to the keyword, handwriting recognition on a touch screen or a touch pad, and voice recognition.

According to various embodiments, the allocating of the different haptic information may include, when there are a plurality of objects, allocating a different haptic feedback to the object in correspondence to a similarity or reliability between a keyword and the object.

According to various embodiments, the allocating of the different haptic information may include allocating a directional haptic feedback indicating a target object disposed in an area currently not displayed in an entire screen area.

According to various embodiments, the allocating of the different haptic information may include allocating the directional haptic feedback to at least one object displayed on the display.

According to various embodiments, the allocating of the different haptic information may include allocating different haptic feedback according to the target object type in correspondence to the analysis result.

According to various embodiments, the allocating of the different haptic information may include, when the target object is hidden by another object or the target object is exposed, allocating different haptic feedback in correspondence to at least one of the size of the target object and the position of the target object.

According to various embodiments, the outputting of the haptic feedback may include outputting different haptic feedback in correspondence to a distance between the event occurrence position and the target object.

According to various embodiments, the method may include displaying, on a display, a screen area including a target object related to a search in an entire screen area by default.

According to various embodiments, the outputting of the haptic feedback may include outputting different haptic feedback in correspondence to an event type related to a screen area change displayed on the display.

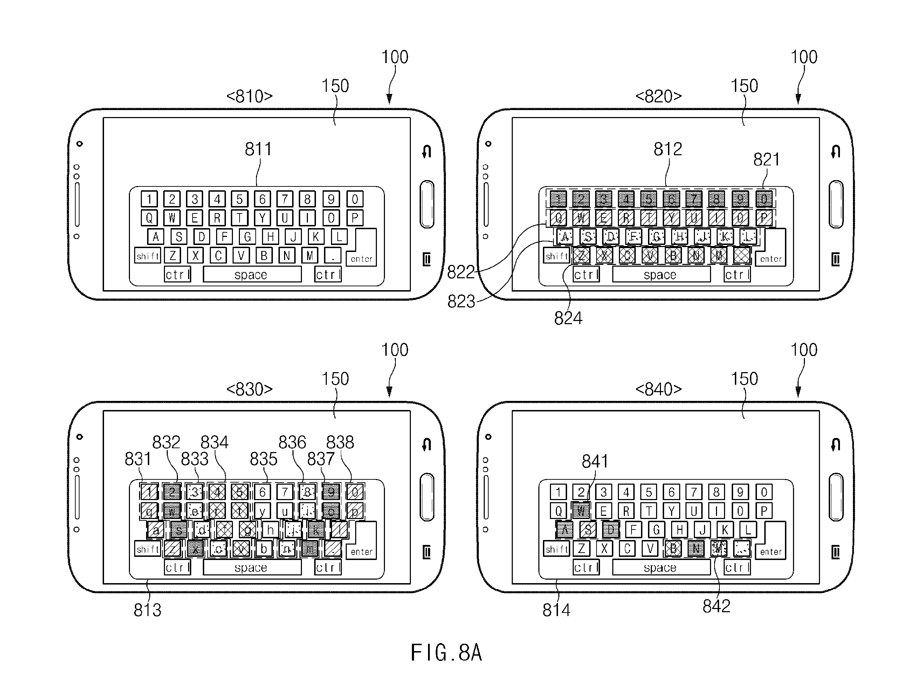

FIG. 8A is a screen view illustrating an object specific haptic information management method according to various embodiments of the present disclosure. A haptic information management shown in FIG. 8A may be a screen information analysis based haptic information management method.

Referring to FIG. 8A, a display 150 according to an embodiment may output a virtual input object 811 as shown in a state 810. The virtual input object 811 may include at least one object related to a character input. For example, the virtual input object 811 may include at least one virtual numeric key related object, at least one virtual character key related object, and at least one virtual function key related object. The haptic support module 170 may allocate first haptic information to at least one object included in the virtual input object 811. For example, the haptic support module 170 may allocate the same first haptic information to entire objects included in the virtual input object 811. When an event for selecting a specific object (for example, at least one of a virtual numeric key related object, a virtual character key related object, and a virtual function key related object) included in the virtual input object 811 occurs, the haptic support module 170 may control the first haptic information based haptic module 180.

The above-mentioned virtual input object 811 is an example of a virtual keyboard and may have a form in which several keys are arranged by a software Graphic User Interface (GUI) layout. When an input event by touch or hovering is detected from an area where each key is disposed, the haptic support module 170 may perform a control to output audio or haptic feedback for notifying that there is an input on an event detected key. When an input event occurs from an area other than a key area, the haptic support module 170 may perform a control not to generate haptic feedback.

The virtual keyboard may be modified diversely according to the form of a display and an application. Accordingly, a GUI layout and an arrangement of keys may be changed during an input through a virtual keyboard. For example, when the electronic device 100 for detecting a landscape mode and a portrait mode through a motion sensor (for example, an acceleration sensor, a gyro sensor, a tilt sensor, or a gravity sensor) changes from the landscape mode into the portrait mode by detecting an operation for rotating the electronic device 100 while a user inputs characters by using a QWERTY type virtual keyboard in the landscape mode, the position of the virtual keyboard may be changed accordingly at the same time and the virtual keyboard itself may be changed into a layout of a numeric key mapping method used in T9 or a specific electronic device.

The haptic support module 170 may support to distinguish the currently inputting key from another key by providing different haptic feedback according to a relative direction or distance between each key. In relation to this, the haptic support module 170 may set a haptic layout for haptic feedback corresponding to a GUI layout (for example, an arrangement of objects displayed on the display 150). Herein, the GUI layout and the haptic layout may be different from each other.

According to various embodiments, the display 150 may output a virtual input object 812 as shown in a state 820. The haptic support module 170 may perform a row unit haptic information allocation on the virtual input object 812. For example, the haptic support module 170 may allocate different haptic information per row to virtual key related objects included in the virtual input object 812. According to an embodiment, the haptic support module 170 may allocate first haptic information to the first row of objects 821. The haptic support module 170 may allocate second haptic information to the second row of objects 822. The haptic support module 170 may allocate third haptic information to the third row of objects 823. The haptic support module 170 may allocate fourth haptic information to the fourth row of objects 824.

When an event for selecting or indicating a specific object included in the first row of objects occurs, the haptic support module 170 may control the output of the haptic module 180 on the basis of the first haptic information. When an event related to a specific object included in the second row of objects occurs, the haptic support module 170 may control the output of the haptic module 180 on the basis of the second haptic information (for example, information defined to differently implement at least one of the tactile sense, texture sense, vibration intensity (or strength), vibration pattern, and vibration period set in the first haptic information).

According to various embodiments, the display 150 may output a virtual input object 813 as shown in a state 830. The haptic support module 170 may perform a column unit haptic information allocation on the virtual input object 813. For example, the haptic support module 170 may allocate different haptic information per column to virtual key related objects included in the virtual input object 813. According to an embodiment, the haptic support module 170 may allocate first haptic information to the first column objects 831. The haptic support module 170 may allocate second haptic information to the second column objects 832. The haptic support module 170 may allocate third haptic information to the third column objects 833. The haptic support module 170 may allocate fourth haptic information to the fourth column objects 834. The haptic support module 170 may perform a control to allocate fifth haptic information to the fifth column objects 835, allocate sixth haptic information to the sixth column objects 836, allocate seventh haptic information to the seventh column objects 837, and allocate eighth haptic information to the eighth column objects 838. The above-mentioned first to eighth haptic information may include information defined to express different tactile senses or texture senses. According to various embodiments, the first to eighth haptic information may have the same haptic information in columns not adjacent to each other. For example, the third haptic information may be set to have the same information as the first haptic information or the fifth haptic information.

As mentioned above, the haptic support module 170 may provide different intensities, patterns, orientations, and textures by each row or each column, thereby supporting a user to recognize a relative position of a currently inputted key. For example, in the case of the state 830, since inputted keys provide the same haptic feedback to each finger, this may be used for keyboard input training or keyboard input habit correction.

According to various embodiments, the display 150 may output a virtual input object 814 as shown in a state 840. The haptic support module 170 may perform a specific virtual key group specific haptic information allocation on the virtual input object 814. For example, the haptic support module 170 may allocate different haptic information by each virtual key group on virtual key related objects included in the virtual input object 814. According to an embodiment, the haptic support module 170 may allocate first haptic information to the first group objects 841. The haptic support module 170 may allocate second haptic information to the second group objects 842. The first haptic information and the second haptic information may include information defined to express different tactile senses or texture senses.

According to various embodiments, the haptic support module 170 may set at least one key included in a key group as a reference area and provide a reference haptic feedback. According to an embodiment, S included in the first group object 841 may be set to correspond to a down arrow and the left middle finger may be disposed thereon in the state 840. Other keys included in the first group object 841 may serve arrow roles in respective specific directions on the basis of S. Herein, the haptic support module 170 may define S as a reference area by allocating, to haptic information provided to S, haptic information in which characteristics (for example, at least one of haptic intensity, roughness, frequency period, vibration holding time, etc.) are differently set compared to other keys included in the first group object 841.

According to various embodiments, a reference haptic feedback may be performed in correspondence to a search operation for determining the position of a corresponding key or a key group. For example, while touching and dragging the keyboard surface or touch screen surface where keys are arranged or taking a motion in a hovering state, the haptic support module 170 provides a reference haptic feedback to recognize the position of a reference area. When a corresponding touch or hovering related signal is determined as a search operation, the haptic support module 170 may provide various haptic feedback according to an area where an input is detected. For example, when a search operation occurs from a given specific key (for example, a key having a specific function execution allocated), for example, an S key area, the haptic support module 170 may provide strong vibration or a haptic feedback of a specific pattern temporarily. Alternatively, when a search operation is detected from an external area other than the S key area, for example, an F key area adjacent to S, the haptic support module 170 may perform a control to generate a haptic pattern having an orientation in S direction.

Alternatively, when it is determined as a search operation, the haptic support module 170 may allocate specific haptic information only to the reference area. Correspondingly, the haptic support module 170 may perform a control not to output an additional haptic feedback from an input signal occurring from an area other than a reference area. The haptic support module 170 may provide a specific haptic feedback corresponding to specific haptic information in correspondence to an input signal occurring from a reference area. The above-mentioned haptic support module 170 may support a user to concentrate more on finding a reference area by outputting a specific haptic feedback from only a reference area. Additionally, the haptic support module 170 may support a user to easily recognize a reference area or a desired selection area by moving a finger without looking at a display.

According to various embodiments, when an input occurs on a touch screen in relation to a virtual key input object, the haptic support module 170 may check an input size (for example, an input pressure, an input area, and an input speed (a time interval between touch and touch release)). When an input signal of an input size that is smaller than a specific value is inputted, the haptic support module 170 may generate a haptic feedback according to specified first haptic information. For example, when the contact area of a touch input is narrower than a specified reference, the force of a touch input is less than a specified reference, or the amount of charge or inputted volume is lower than a specified reference, the haptic support module 170 may perform a control to generate a haptic feedback according to specified first haptic information in a touch screen area where contact occurs, or generate a specified vibration. During this operation, the haptic support module 170 may perform a control not to apply an input related to the first haptic information to a specified application. When an input larger (greater pressure than a specific pressure or a longer touch than a specified touch holding time) than a specific value occurs, the haptic support module 170 may control an actual function performance corresponding to a corresponding input. During this operation, the haptic support module 170 may perform a control to generate a haptic feedback according to second haptic information.

The above-mentioned key group may be classified according to a finger position and may be set to have different haptic feedback. For example, the left little finger may be used to input 1, q, a, and z keys and the left ring finger may be used to input 2, w, s, and x keys. Accordingly, the haptic support module 170 may be set to classify a group of each finger specific key and provide a different haptic feedback to each group. A finger specific key area group may be changed dynamically.

According to various embodiments, when an occurrence position movement of an input signal is faster than a specified reference, the haptic support module 170 may provide only a specific haptic information based haptic feedback corresponding to the input signal. The haptic support module 170 may perform a control to suppress a function execution related to an object selected or indicated by a corresponding input signal. Additionally, when approaching by a specified distance before entering an area related to a specific object, the haptic support module 170 may perform a control to generate a specific haptic information based haptic feedback before a specified time. For example, when a touch drag event of a specific speed or a hovering position movement event (for example, an event for moving the position while maintaining hovering) occurs on a touch screen, the haptic support module 170 may perform a control to output a specific haptic information based haptic feedback by predicting the direction and speed of a touch drag event or a hovering position movement event. Alternatively, the haptic support module 170 may perform a control to output a specific haptic information based haptic feedback in a specified distance or a specific area before a touch drag event or a hovering position movement event enters a specific area. When the moving speed of a touch drag or the moving speed of a hovering position movement is faster than a specific speed, the haptic support module 170 may compensate a situation in which a haptic feedback is not normally provided to a user (for example, a situation in which a touch object such as a finger passes a specific area and then a haptic feedback is provided to a specific area so that a user does not receive the haptic feedback).

Alternatively, the haptic support module 170 may perform a control to output a specific haptic information based haptic feedback within a specific time after a touch event or a hovering event passes a specific area.

According to various embodiments, the haptic support module 170 may provide a haptic feedback to allow a user to feel the maximum friction after a touch event or a hovering event passes the peak related to an object outputted to the display 150. For example, a user input position (for example, a position where a touch event is inputted, a position where a touch signal is detected by a touch drag event, or an hovering event occurrence position) may pass the boundary area of a specific object. In this case, the haptic support module 170 may perform a control to output a haptic feedback on the basis of the first haptic information (for example, haptic information set to provide a specific size of friction or resistance sense within a specific time after a user input point passes a virtual position (for example, a position of a peak formed based on the object and virtual height information for forming the boundary area of a corresponding object and a position at which the input object moves at a specific angle or greater)).

According to various embodiments, in order to allow a user to feel a specific size of friction or resistance sense, the haptic support module 170 may perform a control to provide a haptic feedback based on second haptic information (for example, haptic information set to provide a specific degree of soft feeling) right before providing a first haptic information based haptic feedback. Additionally, when an event moving speed according to a user input is less than a specific size, the haptic support module 10 may perform a control to provide a first haptic information based haptic feedback.

According to various embodiments, when a touch event occurs in a plurality of object areas where a haptic feedback is provided, the haptic support module 170 may provide a specific information based haptic feedback to provide a specific feeling (for example, feeling of exiting a previous object area on the basis of the boundary area and then, feeling of entering an object area) in the boundary areas of the plurality of object areas. For example, when a user input (for example, a touch event) moves from the center of a specific object to the boundary area of an object, the haptic support module 170 may control a haptic feedback output to maintain the degree of a relatively weak haptic intensity or relatively soft roughness before a specified boundary area. Alternatively, the haptic support module 170 may control a haptic feedback output of feeling that, as a user input moves in the object boundary area direction inside the object, a haptic intensity or roughness degree is increased gradually. Alternatively, the haptic support module 170 may control a haptic feedback output of feeling that as a user input moves in the object boundary area direction inside the object, a haptic intensity or roughness degree is increased gradually.

According to various embodiments, the haptic support module 170 may control a haptic feedback output of a relatively strong haptic intensity or roughness degree compared to a user input moving from the inside of the object to the outside in correspondence to a user input entering from the outer area of a specific object into the boundary area. During this operation, the haptic support module 170 may differently manage at least one of intensity and roughness to correspond to the height or depth degree of a virtual haptic modeling.

In order to simulate the tactile sense that a user can feel on a physical keyboard through a virtual keyboard displayed on a display, the haptic support module 170 may provide at least one of a haptic feedback corresponding to a finger operation for rubbing a key object surface from the inside of a key object to the outside and a haptic feedback corresponding to a finger operation for moving from the outside of a key object to the inside. For example, the haptic support module 170 may provide a haptic feedback corresponding to a skin pulling sense or friction that a user can feel in a physical key boundary area from a virtual key boundary area. According to various embodiments, the haptic support module 170 may differently express various haptic feedback classified according to a finger movement direction and an object form. For example, when a finger touches and moves along the boundary area form of an object, the haptic support module 170 may control a haptic feedback output providing a softer tactile sense compared to moving in a direction perpendicular to the arrangement direction of the boundary area.

According to various embodiments, the haptic support module 170 may set a haptic layout for providing a haptic feedback through modeling for the form of an input object (for example, a finger, a pen, a nail, a ball, and an eraser). According to an embodiment, in order to correspond to a situation that an input object having a specific size or area of a touch area touches the boundary area of a physical keyboard having a narrow interval between each key boundary area, when a touch event by the input object occurs, the haptic support module 170 may set a haptic layout for not providing a haptic feedback to the boundary areas of corresponding keys or providing a relatively weak or relatively soft feedback.

In the case of a physical keyboard, since an area between each key is depressed, only a small object such as a pen or a nail may touch an area between corresponding keys and a large object such as a finger may not contact. According to various embodiments, the haptic support module 170 may simulate a situation between such a physical keyboard and an input object on a virtual keyboard. For example, when a touch signal, a touch drag signal, or a hovering signal is detected on at least a partial area of a middle area (for example, an area between the boundary area of each object) formed between objects and the area or length (for example, the length of a signal by a touch trace or a hovering trace) of the detected signal is less than a specific size (for example, narrower or shorter than the middle area), the haptic support module 170 may set a haptic layout to output a specific haptic feedback corresponding to the middle area.

According to various embodiments, when a touch signal, a touch drag signal, or a hovering signal including at least a part of a middle area formed between objects (for example, an area between the boundary area of each object) is detected and a corresponding signal occurrence area or length is greater than a specific size (for example, the area or length of the middle area), the haptic support module 170 may set a haptic layout for not outputting a specific haptic information based haptic feedback.

According to various embodiments, the haptic support module 170 may determine the type of a corresponding input object by recognizing a sound wave or a vibration pattern occurring during the contact of an input object inputted through an input device. In correspondence to the determined input object type, the haptic support module 170 may control haptic feedback on/off between boundary areas and a haptic feedback type setting. For example, when an input object contacts the display 150, the haptic support module 170 may determine the type of the input object by collecting and recognizing a sound wave or vibration occurring by an input device (for example, a microphone, an ultrasonic sensor, an acceleration sensor, and a vibration sensor). According to various embodiments, the haptic support module 170 may determine the type of an input object by recognizing the sound wave, the vibration, an event occurrence position, an occurrence area, and the form of an occurrence area. For example, the haptic support module 170 may distinguish a capacitive stylus pen for touching a touch screen from a finger pad on the basis of the shape and form of an area where an event signal occurs. During this operation, the haptic support module 170 may recognize an input object generating an event as a pen or a finger on the basis of at least one of a relatively small event occurrence area and a form close to a relatively specific form (for example, a circle).

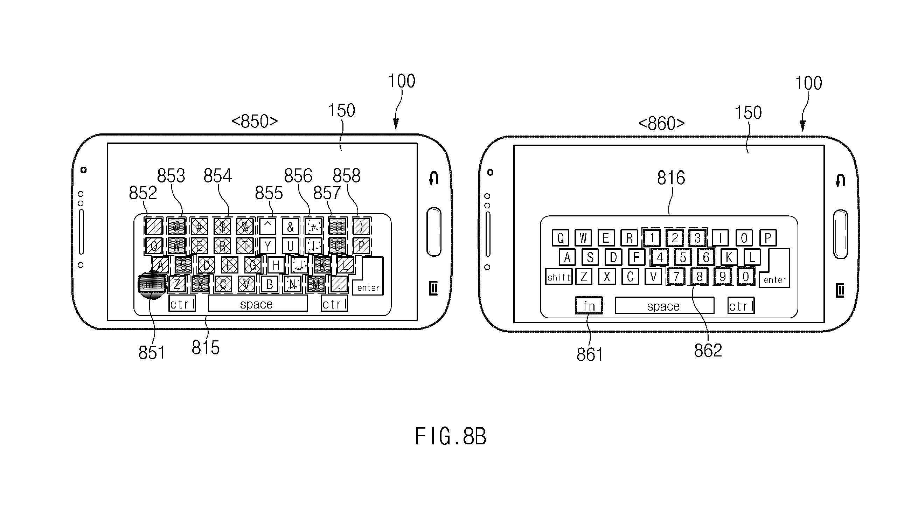

FIG. 8B is a screen view illustrating a complex object specific haptic information management method according to various embodiments of the present disclosure.

Referring again to FIG. 8A as well as FIG. 8B, the display 150 may output an object 813 (for example, a virtual keyboard for lowercase character and numeric input) according to an operation of a virtual function key (for example, a shift key 813) as shown in the state 830 and may output a virtual input object 815 (for example, a virtual keyboard for uppercase character and special character input) as shown in a state 850. Additionally, a toggle state of the virtual function key may be displayed on a display through at least one of symbol, color, size, form changes, etc. According to an embodiment, in the case of the state 830, the haptic support module 170 may allocate a first haptic feedback to be outputted in correspondence to at least one selection of virtual keys 831 to 838.

Additionally, in the case of the state 850, the haptic support module 170 may allocate a second haptic feedback to be outputted in correspondence to at least one selection of the virtual keys. The haptic support module 170 may perform a column unit haptic information allocation on the virtual input object 815 but may perform a haptic information allocation different from previous in relation to a specific virtual function key selection. For example, when a first function key object 851 is selected from virtual key related objects included in the virtual input object 815 (for example, when a touch event occurs and is maintained or when a selection is maintained through a toggle function), the haptic support module 170 may allocate first haptic information to the first column objects 852. When the function key object 851 is selected, the haptic support module 170 may allocate second haptic information to the second column objects 853. When the function key object 851 is selected, the haptic support module 170 may allocate third haptic information to the third column objects 854. When the function key object 851 is selected, the haptic support module 170 may allocate fourth haptic information to the fourth column objects 855. When the function key object 851 is selected, the haptic support module 170 may allocate fifth haptic information to the fifth column objects 856, allocate sixth haptic information to the sixth column objects 857, and allocate seventh haptic information to the seventh column objects 858. The above-mentioned first to seventh haptic information may include information defined to express different tactile senses or texture senses from the above-described haptic information.

According to an embodiment, the state 850 may be an embodiment related to a virtual key input object when a user presses a key while holding down a shift key. The haptic support module 170 may differently allocate haptic information on a virtual key object selected together with a shift key press and haptic information on a virtual key object selected while the shift key is not pressed.

According to various embodiments, the display 150 may output a virtual input object 816 as shown in a state 860 in correspondence to the selection of a function key object 861. The haptic support module 170 may perform a specific haptic information allocation on a group of some keys in the virtual input object 816. For example, the haptic support module 170 may allocate first haptic information to a key group 862 changed in correspondence to the selection of the function key object 861 among virtual key related objects included in the virtual input object 816. The haptic support module 170 may allocate second haptic information to the remaining keys.

According to an embodiment, the state 860 may represent an embodiment in which some keys provide a numeric input key function when pressing the function key 861. The haptic support module 170 may provide different haptic feedback to a function key area, a numeric key area, and a character key area. Correspondingly, a user may recognize that a key causing a specific service mode is pressed and may easily determine by tactile sense that the type of each inputted information is different.

A service mode generating the above haptic feedback difference may include a key selection of at least one of a ctrl key, an alt key, a shift key, a function key (F1 to F12, and a windows start key), a language setting conversion key (for example, at least one of a Korean English mode conversion key, a Chinese mode key, a Japanese input key, and an IME setting key), caps lock, pause, number lock, and scroll lock. A service mode may be achieved by the execution of a specific application. For example, when a game mode is set according to a game execution as shown in the state 840 of FIG. 8A, the haptic support module 170 may be set to output different haptic feedback to used key groups. Such a haptic feedback function may represent a state of a current device. For example, if a user performs a user input on a corresponding key in order to know whether a caps lock area is pressed on a virtual keyboard, the haptic support module 170 may determine whether an inputted signal corresponds to a search operation (for example, at least one of a weaker touch signal or touch drag signal than a specific size, a touch signal holding time of less than a specific time, and a hovering signal). The haptic support module 170 may perform a control to turn on/off a haptic feedback or output different haptic feedback according to a determination state. Correspondingly, a user may recognize a device state.

According to various embodiments, the area of each key is not fixed on the above-mentioned virtual keyboard. For example, the position of each key may be adjusted according to a user setting or habit and the center position of a key area or the size of a key may be different. For example, a user may have a habit of pressing the left boundary area of a corresponding key while pressing the "a" key by the left little finger. When an input event occurrence for a specific key is greater than a specific number of times, by calculating the distribution of an event occurrence position, the electronic device 100 may process to move a predetermined part to correspond the position of a specific key to an input event occurrence point or to extend (for example, a size modification) an area of a specific key in a specific direction. In this case, haptic feedback may be changed in correspondence to the area of a modified key. When the size modification of a specific key occurs, the sizes of other keys may be modified in correspondence thereto.

Additionally, the electronic device 100 may determine who is a currently inputting user by analyzing the distribution data of input positions. For example, the electronic device 100 may recognize a user by using at least one of the log-in information, face recognition information, and bio information (for example, an iris, a fingerprint, a heart rate pattern, and a hand back vein pattern) of a user who uses the electronic device 100. When an input event (for example, an event by a virtual key press of a specific position or a specific position touch in a touch panel) occurs, the electronic device 100 may store corresponding input position information in relation to user information. Based on this, when an input event occurs, the electronic device 100 may perform the determination of a user who currently uses the electronic device 100 by comparing input position information of an occurring input event with stored input position information. In relation to habit correction, when an input is applied to an object boundary area, the haptic support module 170 may provide a specific size of haptic feedback (for example, a haptic feedback for providing rough or strong feeling to allow a user to feel easily) as a form or direction for correction by surveying an input area distribution and frequency.

According to various embodiments, the haptic support module 170 may classify a user input for providing a haptic feedback into various situations and process them. For example, the haptic support module 170 may provide a first input mode in which although a signal occurs on an input device surface by contact or hovering through a finger or an input tool, information or a function of a corresponding key is not executed and at least one basic haptic feedback is provided. Such a first input mode may be applied to various cases, for example, a case in which a generated input signal value is less than a specific value in a resistance film type touch detection device, a case in which a hovering signal occurs in a capacitive type sensor device, a case in which a signal of less than a specific value occurs during touch, a case in which shear force is generated less than a specific value in a force input method, a case in which the area where contact or input occurs is less than a specific area in a capacitive or optical system, and a case in which an input occurs by a specified first input such as a nail and a knuckle. The haptic support module 170 may provide a first input mode and a second input mode in which information corresponding to another actual key is inputted. The haptic support module 170 may provide the second input mode to various cases, for example, a case in which a time of more or less than a specific time is maintained in the first input mode, a case in which an input signal value is inputted more than a predetermined value in the first input mode (for example, voltage, capacitance, induced current, and shear force), a case in which a signal from more than a specific area occurs in the first input mode, and a case in which information is inputted through a second input means such as a finger or a stylus pen.

For example, at least one finger contacts a virtual keyboard of a touch screen, so that a signal (for example, a pressure or electrical change of less than a specific size) of less than a predetermined intensity may be detected. In this case, the haptic support module 170 may evaluate that keys where corresponding fingers are disposed correspond to the first input mode state. In correspondence to an evaluation result, the haptic support module 170 may provide a specific haptic feedback (for example, a haptic feedback set to be provided by default or a given specific haptic feedback). In a state that a specific haptic feedback is provided, when a change event of more than a specific size occurs (for example, when a contact area having pressure becomes larger than a specific size, when a capacity value becomes larger than a specific size, when the intensity of power becomes greater than a specific size, or when a key down or up speed is greater than a specific size), the haptic support module 170 may evaluate the change event as an event for second input mode switching. Correspondingly, the haptic support module 170 may perform a control to input characters or texts corresponding to a value of an inputted key or control a function operation corresponding to an inputted key.

When a touch signal for holding and moving a finger touch state in the first input mode occurs, the haptic support module 170 may check whether a position where a corresponding touch signal occurs corresponds to a specified reference area. When a touch signal occurrence position corresponds to the specified reference area, the haptic support module 170 may switch into a search mode in which a specific haptic feedback is supported but an input does not occur (or an occurring input is not applied to a corresponding application). When a touch signal change amount occurring according to the movement of a finger in a search mode is less than a specified reference value (for example, at least one of a specified moving speed and a moving distance specified per unit time) and a moving position of a finger shows a change amount within a specific area for more than a specific time, the haptic support module 170 may switch into the first input mode. When an event corresponding to the condition of the second input mode in a search mode occurs, the haptic support module 170 may perform a control to release the search mode and switch to the second input mode.

According to various embodiments, when an input signal is a specific touch event (for example, an event detected by a continuous movement or motion such as a horizontal movement by dragging, flick, and hovering and a movement such as a gesture), the haptic support module 170 may activate a search mode. For example, the haptic support module 170 may set a reference area virtually in correspondence to F key and J key areas corresponding to a basic position of a physical keyboard and having an embossing (for example, a protrusion contacted when a user puts down a finger). When an input signal occurs inside a reference area or in an adjacent region within a specified distance, the haptic support module 170 may provide a specific haptic feedback. Accordingly, when a user moves at least one finger, palm, or pen through contact on a touch detection device or hovering, the positions of corresponding keys may be easily identifiable through a haptic feedback occurring from F key and K key areas.

According to various embodiments, in the case of an area not being a reference area, another haptic feedback (for example, another haptic feedback provided when a user input is detected from the boundary area surrounding the reference area) instead of a haptic feedback for a reference area may be provided additionally.

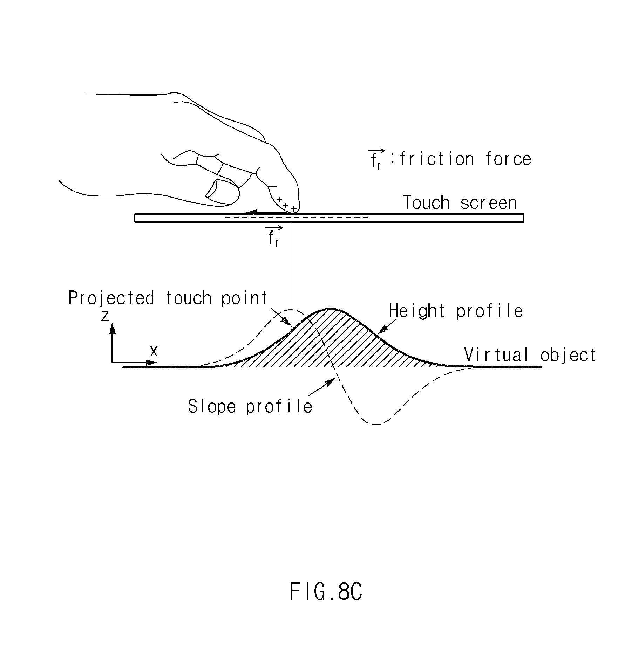

FIG. 8C illustrates a method of providing haptic feedback according to various embodiments of the present disclosure.

Referring to FIG. 8C, when a touch dragging event occurs from a virtual object having virtual height information (for example, height profile) on a friction display, the haptic support module 170 may provide a haptic feedback by varying the degree of friction according to an event occurrence position. For example, the haptic support module 170 may provide a haptic feedback (for example, a haptic feedback corresponding to a user's cognitive experience) corresponding to haptic information for providing the feeling of the largest friction right after passing the virtual peak of an object (for example, after a specific time or a specified distance). Additionally, the haptic support module 170 may perform a control to output a haptic information based haptic feedback corresponding to a soft texture right before a touch object, for example, the position of a finger, arrives at a position corresponding to the virtual peak of an object (before a specific time or a specified distance elapse). The haptic support module 170 may support a user to feel a texture difference more greatly by providing a haptic information based haptic feedback corresponding to a rough texture right after passing the virtual peak of an object.

According to another embodiment, the haptic support module 170 may classify into more than two groups according to the moving speed of a touch drag event or hovering position movement event and may differently provide the characteristics of a haptic feedback by each group. For example, when the moving speed of a touch object is less than a specific speed, the haptic support module 170 may provide a haptic feedback to allow a user to feel a relatively large friction in the boundary area of a virtual object. When the moving speed of a touch object is more than a specific speed, the haptic support module 170 may provide a haptic feedback to allow a user to feel a relatively weak friction. On the other hand, in order to emphasize the texture of the boundary area, when a moving speed is greater than a specific speed, the haptic support module 170 may provide a haptic feedback corresponding to a relatively strong friction or rough texture.

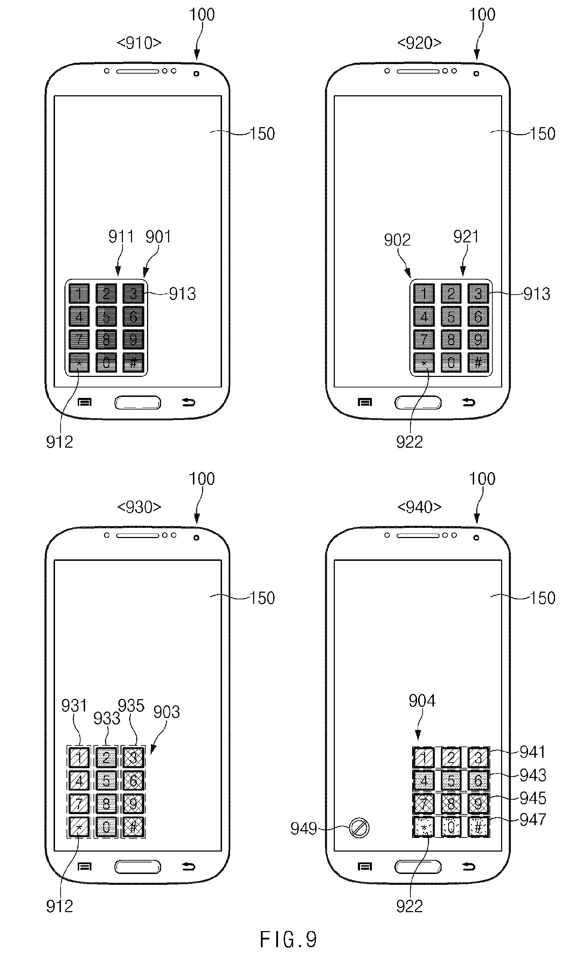

FIG. 9 is a view illustrating a screen interface related to a one hand input related haptic information management method according to various embodiments of the present disclosure.

Referring to FIG. 9, a one hand mode User Interface (UI) may not be fixed to a specific area. The provided position of the one hand mode UI may vary according to the context of at least one of the movement of a terminal and the position of a finger contacting a terminal. For example, the haptic support module 170 may recognize a tilt, rotation state, or motion of a terminal by a gyro sensor, a geometric sensor, or an accelerometer. The haptic support module 170 may change the position and size or ratio of a landscape UI mode and a portrait UI mode set according to a recognition result. As another example, the haptic support module 170 may determine whether a hand grabbing a device is the left hand or the right hand by detecting the position of a finger or palm detected by a grip sensor, a touch sensor, and a pressure sensor. For example, when an electronic device is grabbed by the left hand, the haptic support module 170 may perform a control to dispose a virtual keyboard to be close to the left area on a display (for example, within a specified distance from the left edge of a display). For example, when an electronic device is grabbed by the right hand, the haptic support module 170 may perform a control to dispose a virtual keyboard to be close to the right area on a display (for example, within a specified distance from the left edge of a display). According to an embodiment, when a user grabs the upper end or lower end of an electronic device, the haptic support module 170 may dispose a virtual keyboard to be at the upper end or lower end close to a specific hand in order for easy thumb input. For example, a state 910 of FIG. 9 may be a screen for displaying a virtual keyboard displayed when the left hand grabs a position relatively close to the lower end of an electronic device. The haptic support module 170 may provide a specific haptic feedback in correspondence to a position where an input occurs, a UI position, a direction, and a function. According to an embodiment, when a specific application is executed, the haptic support module 170 may perform a control to output a first key group object 901 to a display 150 as shown in the state 910. Herein, the haptic support module 170 may classify the first key group object 901 into a key area 912, a boundary area 913 surrounding the key area 912, and a frame area 911 corresponding to the outside of the boundary area 913. Additionally, the haptic support module 170 may classify as a frame area 911 and an outer area corresponding to the outside of the frame area 911 additionally or alternatively. The haptic support module 170 may allocate different haptic information to the key area 912 and the boundary area 913. The haptic support module 170 may allocate other haptic information (for example, haptic information different from the haptic information allocated to the key area 912 and the boundary are 913) to at least one of the frame area 911 and the outer area or may not perform haptic information allocation. According to another embodiment, the haptic support module 170 may allocate haptic information, which is different from haptic information corresponding to the key area 912, to the frame area 911 surrounding key areas. The frame area 911 may have a boundary form with a specific thickness surrounding the first key group object 901 and may be the remaining area except each key area in the area of the first key group object 901.

According to various embodiments, a user may search a keyboard area through a hovering, dragging, or tap and hold input in order to recognize a changed virtual keyboard area. In such a search mode, when a user input occurs from an area adjacent to an area where the first key group object 901 is disposed, the haptic support module 170 may provide a reference haptic feedback for notifying a user of a direction in which the first key group object 901 is disposed or a distance from a user input position. A reference haptic feedback may provide a different tactile sense or texture sense from a haptic feedback occurring from the key area 912 or a haptic feedback occurring from the boundary area 913 or the frame area 911.

Since a key or an input area configured with a key typically protrudes more compared to a peripheral part of the keyboard in a physical keyboard, when a user touches or fumbles a keyboard by a fingertip, the user may recognize the presence of the boundary area 913 or the frame area 911 from a difference between the boundary area (for example, an edge) of a key or a key input area and areas other than that. In order to provide the tactile sense of the boundary area 913 from a touch screen or a touch pad, the haptic support module 170 may allocate first haptic information (for example, information set to provide stimulus to Meissner corpuscle) to at least one of the boundary area 913 and the frame area 911. For example, the first haptic information may be information set to output a stimulus of an about 3 MHz to about 100 MHz range or an about 25 Hz to about 40 Hz range through the haptic module 180. According to various embodiments, the haptic support module 170 may recognize a boundary area when a user's finger is placed at a specific area of the display 150 or passes a corresponding area by allocating haptic information related to the control of an array pin or piezo device included in the haptic module 180 For example, the haptic module 170 corresponding to a plurality of piezo device layers or a plurality of array pins may be mounted below an elastic screen sheet or a flexible touch panel (for example, a touch screen panel TSP). The haptic support module 170 may control a form change of at least part of the piezo devices or may perform a 2D or 3D movement control of the array pins according to haptic information. Accordingly, the electronic device 100 may provide a haptic feedback corresponding to a touched object on a screen sheet or a touch panel. According to another embodiment, when the haptic module 180 of a band form including a piezo device is mounted at a touch screen or a touch pad, the haptic support module 170 may provide a specific haptic feedback to a display including the touch screen or the touch pad. According to an embodiment, in the case of a touch input signal detection available touch screen or touch pad, the haptic support module 170 may perform a control to provide a haptic feedback to only an area where a touch input signal occurs.

According to various embodiments, when a user input occurs from the boundary area 913 or the frame area 911 of an object, the haptic support module 170 may perform a control to output a vibration of a specified intensity from a corresponding area or may perform a control to output a haptic feedback of a 250 Hz to 300 Hz frequency, which provides a stimulus to Pacinian corpuscle, from a corresponding boundary area. According to various embodiments, the haptic support module 170 may provide various haptic senses by controlling an electric field between an electrode and a finger.

According to an embodiment, the haptic support module 170 may allocate first haptic information to the key area 912 and may allocate second haptic information to the boundary area 913 or the frame area 911. For example, the haptic support module 170 may perform a control to provide the feeling like touching an object with a smooth material by allocating first haptic information or second haptic information related to a specific size of frequency haptic feedback. According to various embodiments, the haptic support module 170 may set a haptic feedback of a 0.4 Hz to 3 Hz frequency, which stimulates Merkel's disk for detecting a fine pressure, as first haptic information or second haptic information. According to various embodiments, the haptic support module 170 may allocate a haptic feedback with a slightly higher frequency as first haptic information or second haptic information to provide a smooth texture to a user. According to various embodiments, the haptic support module 170 may allocate haptic information, which allows a user to feel a specific temperature at a nerve ending for detecting a change of cold/warm sense, as first haptic information or second haptic information.

According to another embodiment, the haptic support module 170 may allocate first haptic information to the key area 912, allocate second haptic information to the boundary area 913, and allocate third haptic information to the frame area 911.

According to various embodiments, when the second key group object 902 corresponding to a one hand mode UI is outputted on the display 150 where the first key group object 901 is outputted previously as shown in the state 920, the haptic support module 170 may allocate third haptic information (for example, information related to a haptic feedback for notifying it is not a normal input area) to an area other than the key area 922 or the boundary area 921. The second key group object 902 may include a key area 922 and a boundary area 921. For example, the third haptic information may be information for providing a haptic feedback of a slow and strong vibration form. Alternatively, the third haptic information may be a weak vibration (for example, a tactile sense having a difference with the second haptic information) of less than a specific size. According to various embodiments, the haptic support module 170 may generate and allocate different haptic information on the basis of an air pressure and a cold/warm sense change in addition to vibration or frequency. The haptic support module 170 may use a different movement direction for each haptic feedback, for example, a horizontal reciprocating movement in a vertical and left/right direction and a horizontal reciprocating movement in a forward/backward direction, and may control the haptic information allocation of various forms (for example, circle, ellipse, straight line, curve, and wave forms) by additionally giving a time difference or a movement direction change.

According to various embodiments, the haptic support module 170 may perform a control to output a third key group object 903 to the display 150 as shown in the state 930. The third key group object 903 may include no boundary area and may include a first key column 931, a second key column 933, and a third key column 935. The haptic support module 170 may perform a control to allocate first haptic information to the first key column 931, allocate second haptic information to the second key column 933, and allocate third haptic information to the third key column 935 in the third key group object 903.

According to various embodiments, the haptic support module 170 may perform a control to output a fourth key group object 904 to the display 150 as shown in the state 940. The fourth key group object 904 may include no boundary area and may include at least one of a first key row 941, a second key row 943, a third key row 945, and a fourth key row 947. The haptic support module 170 may perform a control to allocate first haptic information to the first key row 941, allocate second haptic information to the second key row 943, allocate third haptic information to the third key row 945, and allocate fourth haptic information to the fourth key row 947 in the fourth key group object 904. Additionally, when a user touches an area 949 other than the fourth key group object 904, correspondingly, the haptic support module 170 may perform a control to output a haptic feedback based on fifth haptic information for guiding to the direction of the fourth key group object 904.

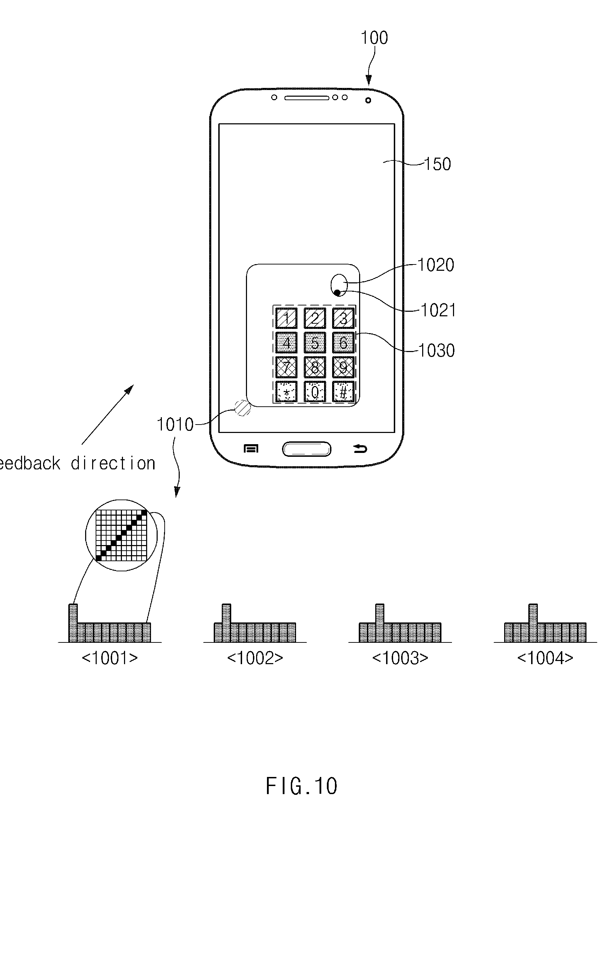

FIG. 10 is a view illustrating a screen interface related to a direction related haptic information management method according to various embodiments of the present disclosure.

Referring to FIG. 10, the haptic support module 170 may output a numeric key group object 1030. The numeric key group object 1030 may include a plurality of key objects. When an input occurs from the outer area of the numeric key group object 1030, the haptic support module 170 may provide a reference haptic feedback as shown in the drawing. For example, the haptic support module 170 may perform a control to generate a directional haptic feedback for notifying that there is the numeric key group object 1030 in the right-upper direction in the touched outer area 1010. During this operation, the haptic support module 170 may perform a control to output haptic information of a physical form modification by using the haptic module 180 including an array pin, a piezo device, and a fine vibration device. Alternatively, the haptic support module 170 may support a directional haptic feedback output through a method of leaving vibrations in a necessary direction and canceling out the remaining vibrations after disposing several vibration devices at a specified interval or specific positions. Alternatively, the haptic support module 170 may provide a directional tactile sense by providing a haptic feedback for gradually changing a stimulus position on a finger disposed through a capacitive method.

A state 1001 to a state 1004 (i.e., 1001, 1002, 1003, 1004) of FIG. 10 display patterns of a virtual haptic feedback. As one example, in the case of a piezo device or an array pin, the haptic support module 170 may express an orientation and intensity through a physical height change on the basis of an arrangement position of each piezo device or array pin. As another example, a capacitive method may be expressed through a stimulus position and stimulus intensity.

According to various embodiments, the haptic support module 170 may provide a reference haptic feedback. For example, as a numeric key 5 is a reference area, if a hovering or touch input is detected on a corresponding numeric key, the haptic support module 170 may provide a reference haptic feedback. In this case, the haptic support module 170 may perform a control not to provide another haptic feedback until a user input occurs from a reference area. For example, when a user input by dragging or hovering of more than a specific speed is detected, the haptic support module 170 may not provide an additional haptic feedback and when a user input is placed on a corresponding key (for example, a numeric key 5), may provide a specified reference haptic feedback.

According to various embodiments, the haptic support module 170 may support to find a reference area or a key area by using a directional haptic feedback. For example, when a touch occurs, the haptic support module 170 may check a touch area 1020 of a specific area as shown in the drawing. The haptic support module 170 may provide a haptic feedback to be outputted to a partial area 1021 adjacent to a reference area or key area direction in the corresponding touch area 1020. In relation to this, the haptic module 180 may be prepared in a form for outputting a haptic feedback in a matrix to the entire display 150.

As mentioned above, the haptic information management method and the electronic device 100 supporting the same according to various embodiments may include setting a service mode, configuring a specified layout according to the service mode and disposing components according to the layout, classifying the components into at least two groups according to the service mode, and setting a haptic layout for setting a different haptic feedback for each group.

According to various embodiments, the device and method may include detecting that an input event occurs from an area of a component disposed by the layout and generating a corresponding specific haptic feedback according to a haptic layout corresponding to a corresponding input event occurrence position.

According to various embodiments, in relation to the device and method, the setting of the service mode may be performed by at least one of a specific key input, application driving, and a specific event in the electronic device. The setting of the service mode may include setting at least one of a row specific position notification mode, a finger specific feedback support mode, a numeric key mode by function key, an uppercase mode, a lowercase mode, a symbol input mode, a QWERTY mode, a T9 mode, a 3x4 key mode, a game mode, a one hand UI mode, a language mode, a toggle mode, a page turning mode, a 3D interaction mode, a remote controller mode, a time notification mode, a weather notification mode, a bio information notification mode, and a data glove mode.

According to various embodiments, the device and method may further include determining at least one material information of at least one component by a service mode and setting a haptic feedback corresponding to the material information.

According to various embodiments, the device and method may include classifying components according to the properties or contents of the components. The property of the component may include at least one of virtual texture, hardness, material, temperature, and pattern.

According to various embodiments, the device and method may further include determining the content of the component and assigning a property corresponding to the determined content. According to various embodiments, the device and method may further include graphically expressing components disposed according to the layout on a display and recognizing a motion of the electronic device 100 and changing into a layout and haptic layout corresponding thereto.

According to various embodiments, the device and method may include setting a boundary area in the haptic layout and generating another haptic feedback when an input event occurs from the boundary area.

According to various embodiments, the device and method may include providing different haptic feedback when a movement occurs continuously such as plane movements of dragging, flick, and hovering, when passing the boundary area, and when moving along the boundary area.

According to various embodiments, the device and method may include providing different haptic feedback by separating a case of occurring by a movement such as plane movements of dragging, flick, and hovering and passing the boundary area, a case of moving from the inside of the boundary area to the outside, and a case of moving from the outside into the inside.

According to various embodiments, the device and method may include setting a reference area in the haptic layout and when an input event occurs, setting a directional haptic feedback for guiding at least one of the direction and distance from a position where the input event occurs to the reference area.

According to various embodiments, the directional haptic feedback may differently set at least one of the intensity, pattern, frequency, speed, holding time, and direction display of a haptic feedback according to a distance or direction between a reference area and an input event occurrence position.

According to various embodiments, the configuring of the specified layout may include collecting input information in the service mode, and analyzing the collected input information, and may include at least one of modifying a layout according to the analyzed input information, and changing a specific haptic feedback.

According to various embodiments, the component may include at least one of keys, buttons, line segments, menus, images, figures, characters, strings, symbols, backgrounds, and foregrounds.

According to various embodiments, the haptic feedback may differently set at least one of frequency, vibration holding time, vibration pattern, vibration intensity, vibration direction, vertical movement height, repulsive force, temperature change, air pressure, and constant voltage intensity.

According to various embodiments, the device and method may include modifying at least one of vibration, frequency, electrostatic force, heat absorption, heat emission, suction power, injection power, mechanical vertical direction movement, mechanical horizontal direction movement, electromagnetic force, and a piezo device, which stimulate at least one of Meissner corpuscle, Pacinian corpuscle, Merkel's disk, and Ruffini's Ending.

According to various embodiments, the configuring of the specified haptic layout may include dividing the component of the layout into haptic components and differently setting a different haptic feedback by each divided haptic component.

According to various embodiments, the device and method may further include, when at least one of the area, width, size, and volume of the haptic component is less than a specific value, resetting at least one of width, size, area, and volume of more than a specified reference.

According to various embodiments, the device and method may include at least one of detecting an input mode of the input event, when the input event is a first input mode, generating a first haptic feedback, and when the input event is a second input mode, performing at least one of inputting information corresponding a corresponding component and executing a corresponding function.

According to various embodiments, the device and method may include, when the input event is the second input mode, outputting a second haptic feedback. The first haptic feedback and the second haptic feedback may be different from each other.

According to various embodiments, the device and method may set a specific input mode according to at least one of a condition that an input signal value of the input event is maintained for a specific time within a specific area (for example, a partial area of an input device such as a touch screen and a touch pad), a condition that at least one of shear force, pressure, air pressure, constant voltage, temperature change, and induced current, inputted based on an input device, is less than a specific value, a condition that an area corresponding to an input signal is less than a specific area, a condition that an input means (for example, at least one of a finger, a pen, a nail, a joint, a palm, rubber, wood, and metal) is a specific type (for example, determined by using at least one of the pattern and frequency of a sound signal or a vibration signal according to an input means), a condition that a hovering or proximity event occurs, a condition that a specific number of multi-touch inputs occur, and a condition that an input signal is moved continuously such as dragging and flick.

According to various embodiments, the device and method may include, when the specific input mode is terminated and a specified input is detected within a specific time, identifying a reference area from the haptic layout, identifying the input signal occurrence position, when the input signal occurs from a reference area, generating a specific haptic feedback, when the input signal occurrence position is not a reference area, and performing a deactivation not to generate a set haptic feedback from the haptic layout.

According to various embodiments, the device and method may include, after a haptic feedback occurs from the reference area, when an input signal is maintained within a corresponding reference area for more than a specific time, releasing a reference mode.

According to various embodiments, the device and method may include providing at least one of sound, audio, and voice feedback in addition to the haptic feedback at the same time.

According to various embodiments, in the device and method, the layout, the component and the haptic layout may be a 2D or 3D object.

According to various embodiments, the device and method may further include detecting an area where the input signal occurs on the basis of the layout and the haptic layout, determining the type of an input object on the basis of the area, modeling the form of the input object, determining whether a virtual contact between the input object and a component of the layout is available on a virtual physical space on the basis of the layout of the area where the input signal occurs, determining a virtual contact occurrence area and a non-virtual contact occurrence area, and setting a haptic layout for the virtual contact occurrence area and the non-virtual contact occurrence area according to a result of the determining of the virtual contact occurrence area and the non-virtual contact occurrence area.

According to various embodiments, the configuring of the specified layout may further include not providing a haptic feedback for the non virtual contact occurrence area or providing another haptic feedback.

According to various embodiments, the device and method may further include, in the case in which an input position change by flick, hovering, and dragging occurs on the display 150 at more than a specific speed, when an input signal occurs in proximity to a component on an entry expected path within a specified distance, generating a specific haptic feedback in advance according to a haptic layout corresponding to the component.

According to various embodiments, the device and method may include, in the case in which an input position change occurs at more than a specific speed by flick, hovering, and dragging, while maintaining a haptic feedback generated by a user input signal related to a certain component, when the user input signal is away more than a specified distance from a component area, terminating the haptic feedback. The component has virtual depth or height information and according to various embodiments, the device and method may further include adjusting at least one haptic feedback property of the intensity, friction, and resistance sense of a haptic feedback on the basis of the configured haptic layout on the basis of a corresponding depth or height.

According to various embodiments, the device and method may include, in the case in which an input position change occurs at more than a specific speed by flick, hovering, and dragging, after passing a specific time or a specified distance from the virtual peak or lowest point of the component, adjusting the haptic feedback property to the maximum or minimum.

According to various embodiments, the device and method may include, right before the adjusting of the haptic feedback to the maximum or minimum, applying a haptic feedback by reversely applying the haptic feedback property.

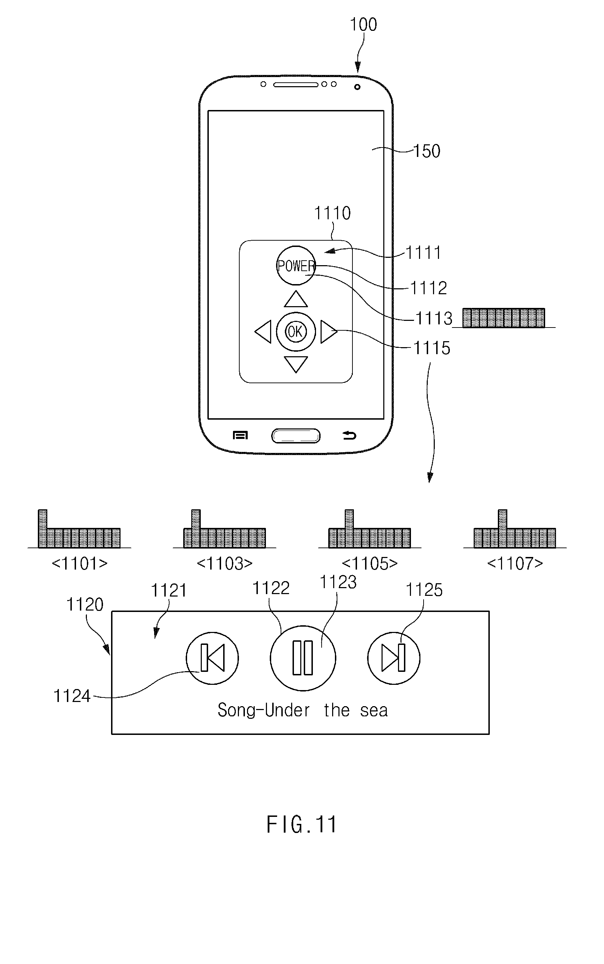

FIG. 11 is a view illustrating a screen interface related to a remote control related haptic information management method according to various embodiments of the present disclosure.

Referring to FIG. 11, the haptic support module 170 of the electronic device 100 may perform a control to output a control object 1110 to a display 150 in correspondence to a specific function execution. The control object 1110 may include at least one object. According to an embodiment, the haptic support module 170 may allocate different haptic information to the outer area and inner area of the control object 1110. For example, the haptic support module 170 may allocate first haptic information to the inner area 1111 of the control object 1110. The haptic support module 170 may allocate second haptic information to a power object boundary area 1112 included in the control object 1110. The haptic support module 170 may allocate third haptic information to a power object inner area 1113. The third haptic information, for example, may be a non-directional haptic feedback.

According to various embodiments, the control object 1110 may include a direction object 1115. When an event for selecting the direction object 1115 occurs, the haptic support module 170 may perform a control to output a haptic feedback pattern in the order of 1101, 1103, 1105, and 1107 in a direction object area in order for the direction object 115 to display the right direction as shown in the drawing. For example, when a selection event (for example, at least one input signal of touch signal, hovering signal, and touch drag signal) is detected from the area of the direction object 115, a haptic feedback indicating the right direction may be outputted to an area where a corresponding signal occurs (for example, a contact area of an input object generating touch signal and a direction object area). As one example, when an input signal occurs from an area (for example, a touch screen or a touch pad) of an input device corresponding to another direction object, the haptic support module 170 may perform a control to output a directional haptic feedback corresponding to a direction indication of a corresponding object.

According to various embodiments, the control object 1110 shown in FIG. 11 may be an object corresponding to a TV remote controller. Accordingly, the haptic support module 170 may support different haptic feedback to several button or key areas configuring a remote controller UI. For example, the haptic support module 170 may allocate first haptic information to an area such as a power or OK button. The haptic support module 170 may allocate second haptic information to an area where no keys are disposed or may not allocate additional haptic information. The haptic support module 170 may allocate haptic information having a directional haptic feedback with respect to an object requiring a direction suggestion, for example, objects related to a channel change or a volume change.

According to various embodiments, when a finger touches the area of the direction object 1115, the haptic support module 170 may provide a haptic feedback according to a first input mode driving, maintain the touch, and when a specific time elapses, control a channel or volume change according to a second input mode driving. Herein, when a movement occurs in the first mode or the second mode, the haptic support module 170 may change the first input mode or the second input mode into a search mode and support to determine the position of each key object through haptic feedback.

According to another embodiment, when an input signal (for example, a touch signal or hovering signal having an intensity of less than a specific size) of less than a specific size is detected from the area of the direction object 1115, the haptic support module 170 may provide a haptic feedback according to a first input mode driving. When a signal (for example, an input signal having an intensity of more than a specific size) of more than a specified input signal intensity is detected, the haptic support module 170 may control a channel or volume change according to a second input mode driving. Herein, when a movement of an input signal position (for example, a touch drag signal or a hovering movement signal while hovering is maintained and moved) is detected from the first input mode or the second input mode, the haptic support module 170 may switch to a search mode. The haptic support module 170 may support to determine the position of each key object through a haptic feedback on the search mode.

As mentioned above, a device and method according to various embodiments may perform an operation for exchanging signals for remote control as being connected to an external device through a wired or wireless communication method and herein, the electronic device 100 may include the display 150 in a touch screen form including the haptic module 180 and may display a graphic user interface for controlling multimedia on the touch screen. The graphic user interface may include at least one graphic element for displaying a direction and may include setting first haptic information having a specific direction in an area where a corresponding graphic element is displayed and when a first user input is detected from the area where the corresponding graphic element is displayed, outputting a haptic feedback corresponding to the first haptic information.

A device and method according to various embodiments may include, when a second user input is detected from an area where a corresponding graphic element is displayed, delivering a control signal to an external device (for example, at least one of a TV, a smartphone, an audio device, and an Audio/Video (AV) device) through a wire or wireless method (for example, at least one of IrDA, WiFi, BT, Light Fidelity (LiFi), LTE, second generation (2G), and third generation (3G)).

In a device and method according to various embodiments, the function for controlling multimedia may include at least one of channel up/down, volume up/down, and Rewind/Fast forward. For example, the control object 1120 shown in FIG. 11 may be an object for controlling a multimedia function. Accordingly, the haptic support module 170 may support different haptic feedback to at least one button or key area configuring a multimedia control UI. For example, the haptic support module 170 may allocate first haptic information to a play and pause icon area 1123. According to an embodiment, the haptic support module 170 may allocate second haptic information to the boundary area 1122 of the play and pause icon area 1123. If necessary, the first haptic information and the second haptic information may be allocated to output different haptic feedback. As another example, the support module 170 may allocate third haptic information for notifying the left direction to a Rewind icon area 1124 and fourth haptic information for notifying the right direction to a fast forward icon area 1125. According to various embodiments, the control object 1120 may assign fifth haptic information to a background area 1121 excluding each icon area. According to an embodiment, content display information (for example, at least one of audio content information, a video playback screen, and an image inquiry screen) may be displayed on the background area 1121

According to various embodiments, the haptic support module 170 may analyze content displayed on the background area 1121 and may allocate fifth haptic information related to a corresponding content. For example, after parsing the song title "Under the sea" displayed in the background area 1121, the haptic support module 170 may recognize that the parsed character is a word related to water through character recognition. The haptic support module 170 may select haptic information related to water to allocate it as fifth haptic information. For example, the fifth haptic information may be haptic information for providing sticky texture or moist texture.

Additionally, the haptic support module 170 may use at least one of character recognition, handwriting recognition, and image recognition methods in order of the content analysis and may perform content analysis through an analysis of metadata related to content (for example, at least one of ID3Tag of music content, EXIF of JPEG file, caption information of video, and lyrics information of music).

According to various embodiments, the content analysis may be processed by the haptic support module 170. According to various embodiments, the haptic support module 170 may set haptic information according to a content analysis by delivering corresponding content, a keyword, or a sentence to a remote device (at least one of a server, a smartphone, a wearable device, a notebook, and a PC) through a wired or wireless communication method, and by receiving a result analyzed by the remote device. During this operation, the haptic support module 170 may associate the content analysis result with haptic information corresponding thereto and store it in a memory. When a result for new content analysis is collected, the haptic support module 170 may set a haptic information allocation according to a content analysis result on the basis of associated haptic information stored in a memory.

A device and method according to various embodiments may include, when a user input is detected from a boundary area having a specific area surrounding an area where the corresponding graphic element is displayed, outputting a haptic feedback corresponding second haptic information.

A device and method according to various embodiments may include, when a user input is detected from an area other than the area wherein the corresponding graphic element is displayed, providing a different haptic feedback than the first haptic information.

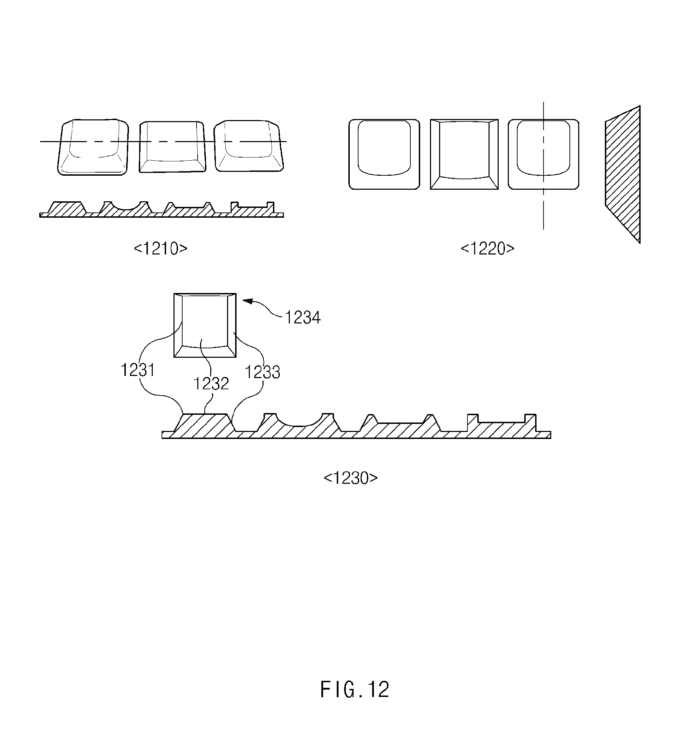

FIG. 12 is a view illustrating a virtual key button related haptic information management method according to various embodiments of the present disclosure.

Referring to FIG. 12, the electronic device 100 according to various embodiments may provide the surface texture of a physical keyboard during an operation for managing a virtual keyboard. For example, as shown in 1210 of FIG. 12, in relation to the cross-section of a key of a physical keyboard, a finger contact surface at a key upper end may be flat or concave. Additionally, 1220 of FIG. 12 shows the cross-sectional form of a physical keyboard. Such a structure is to reduce typos when considering a movement direction and contact position of a finger.

The electronic device 100 may provide different haptic feedback to a key boundary area 1231 and a key inside area 1232 configuring a specific virtual key 1234 of a virtual keyboard as shown in 1230 of FIG. 12 by simulating a similar texture to a physical keyboard through a virtual keyboard. According to various embodiments, if an input is detected such as a finger is placed in a boundary area or hovering occurs therein, the haptic support module 170 may provide a first haptic feedback corresponding to first haptic information. If not, the haptic support module 170 may provide a second haptic feedback corresponding to second haptic information. For example, the haptic support module 170 may provide a haptic feedback in relation to a boundary detection.

According to an embodiment, when a boundary area is included in an input detected area, the haptic support module 170 may provide a first haptic feedback. According to another embodiment, when a ratio of the key boundary area 1231 is more or less than a specified reference in an input detected area or when a distance from the center point of an input detected area to the position of the key boundary area 1231 is less than a specified distance, the haptic support module 170 may determine that a boundary area is detected. The haptic support module 170 may simultaneously provide different haptic feedback to both the key boundary area 1231 and the key internal area 1232 in an input detected area. Alternatively, the haptic support module 170 may determine whether the key boundary area 1231 is detected according to a specified reference and accordingly may provide only one feedback.

The first haptic feedback and the second haptic feedback may have at least one difference in frequency, vibration length, vibration pattern, vibration intensity, vibration orientation, height, repulsive force, temperature, air pressure, and constant voltage strength. According to various embodiments, the haptic support module 170 may provide a first haptic feedback having an intensity of more than a predetermined size or allowing a user to feel a rough material to the key boundary area 1231 and may provide a second haptic feedback allowing a user feel a smooth material or having an intensity of less than the specific size to the key internal area 1232. As another example, the haptic support module 170 uses a frequency that stimulates Meissner corpuscle or Pacinian corpuscle to implement the first haptic feedback and uses a frequency that stimulates Merkel's disk to implement a second haptic feedback. In this case, the haptic support module 170 may support a user to relatively easily obtain the feeling or vibration that a protruding portion on the surface passes a fine shape edge on the basis of the first haptic feedback. The haptic support module 170 may support a user to feel a fine pressure distribution of a touched surface on the basis of the second haptic feedback. According to various embodiments, the haptic support module 170 may support a user to feel that a skin is stretched or pulled, for example, rubbing a surface, by providing a 5 Hz to 400 Hz frequency to Ruffini's Ending.

According to various embodiments, when an event occurs from the key boundary area 1231, the haptic support module 170 may provide a first haptic feedback. When an event occurs from the key internal area 1232, the haptic support module 170 may provide a second haptic feedback. When an event occurs from the key outside area 1233, the haptic support module 170 may provide a third haptic feedback. For example, the haptic support module 170 may perform a control to output a third haptic feedback having an intensity of less than a specific value to the outside area 1233. The haptic support module 170 may perform a control to allow the first haptic feedback to have a feedback having an intensity of more than a specific value and a second haptic feedback to have a feedback of an intermediate intensity. According to various embodiments, the haptic support module 170 may continuously provide a haptic intensity or frequency change in addition to providing a specific size of haptic feedback by each divided area. The haptic support module 170 may perform a control to output a haptic feedback according to a continuously changing frequency or vibration intensity in relation to a curve feeling in the key internal area 1232.

In relation to a third haptic feedback for the outer area 1233 disposed at each side, the increase of the frequency and intensity of an area and a feedback provided may be configured differently. According to various embodiments, the haptic support module 170 may set the key boundary area 1231 related to a haptic feedback to be broader than a GUI area displayed.

A layout for a virtual keyboard may include various components such as a key, a keyboard background image, a character, a virtual keyboard boundary line, each key boundary line, and a character, a number, a symbol, and a figure on each key. A haptic layout corresponding thereto may be a haptic component having the same or different area than the component of the layout. Herein, the haptic support module 170 may divide one key into the key internal area 1232, the key boundary area 1231, and the outer area 1233 and divide them with different haptic components. According to an embodiment, other haptic components may be specified for areas corresponding to the various components displayed together in the key internal area 1232.

According to various embodiments, the haptic support module 170 may also set fourth haptic information in an area of specific keys frequently used as the initial position of a finger, for example, F and J keys. The fourth haptic information may be information corresponding to a haptic feedback for the feeling of a protrusion or groove shape or expressed by a specific vibration pattern, an orientation of vibration, a temperature difference, air pressure, and the height or movement direction of an array pin.

According to various embodiments, the haptic support module 170 may provide various haptic information allocations and haptic feedback outputs in correspondence to the black keys of a piano. Additionally, the haptic support module 170 may support haptic information allocation and haptic feedback provision in relation to a method of expressing the positions and vibrating forms of strings of string instrument. For example, the haptic support module 170 may set first haptic information corresponding to the line 6 of a guitar in a form for providing a stronger haptic feedback than second haptic information allocated to the line 1.

According to various embodiments, a force feedback available haptic module 180 (for example, at least one of a height modification and vibration feedback available method by a plurality of piezo devices, an electromagnetic method, and an array pin method) is provided, the haptic support module 170 may provide a repulsive force related haptic feedback. During this operation, the haptic support module 170 may provide a force feedback in correspondence to a repulsion coefficient of a physical keyboard such as mechanical, membrane, and pantograph types. Additionally or alternatively, the haptic support module 170 may provide a form combined with force feedback by providing a tactile texture such as smooth feeling and rough feeling through a frequency or vibration frequency adjustment.

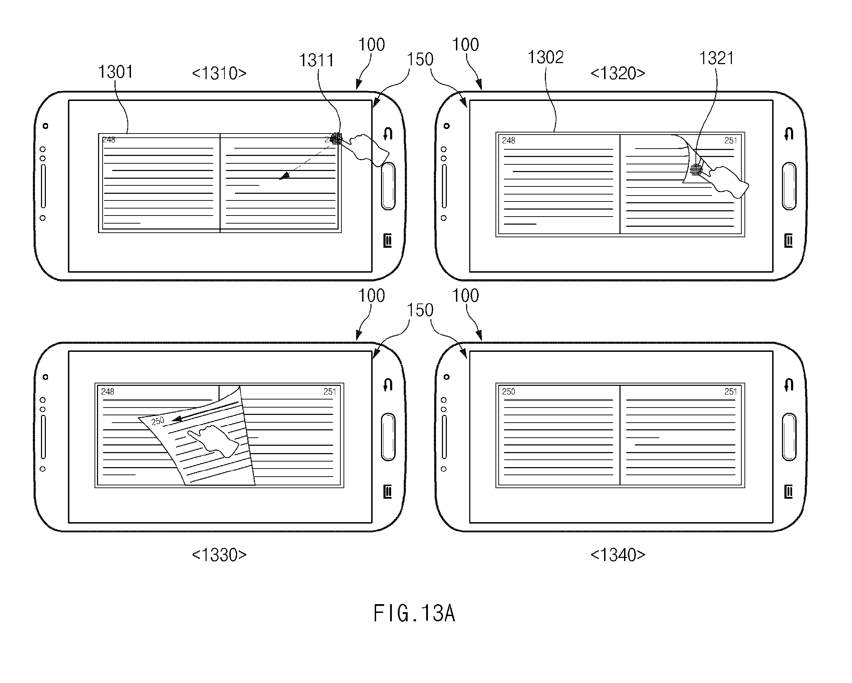

FIG. 13A is a screen view illustrating a page turning related haptic information management method according to various embodiments of the present disclosure.

Referring to FIG. 13A, according to various embodiments, the haptic support module 170 may provide a UI effect of turning a page of a book naturally through a page turning effect (PTE). During this operation, the haptic support module 170 may provide a specific haptic feedback in correspondence to a form of turning a page through GUI. According to an embodiment, the display 150 of the electronic device 100 may output a layout object 1301 representing a page form before turning page as shown in a state 1310. Additionally, the display 150 of the electronic device 100 may output a layout object 1302 representing a page form in the process of turning a page as shown in a state 1320.

In the case of turning a page of a physical paper book, first pulling the outer side of a page by a finger and turning the page are performed. At this point, the paper is bent toward the inside and a finger contacts the back of a corresponding page. During such an operation, when a finger contacts the outer side of a page, since the side of the page is contacted, a user experiences a rough feeling and when the side of the page is contacted as turning the page, senses the soft feeling of the paper. Correspondingly, the haptic support module 170 may control a first haptic feedback output for providing a relatively rough or strong feeling in correspondence to a first event 1311 contacting the edge or vertex part of a book through a touch or touch drag event. In correspondence to that a finger slides and contacts at the back of a page as the page is rolled into the inside as shown in a state 1320 and a state 1330, the haptic support module 170 may control a second haptic feedback output having at least one of vibration, frequency, electromagnetic movement, mechanical movement, and air pressure, which provide a relatively weak, soft, or smooth feeling in correspondence to the second event 1321. The haptic support module 170 may not provide an additional haptic feedback as the page is completely turned over as shown in a state 1340.

According to various embodiments, while a page is bent by an input (for example, a touch drag event) of a user corresponding to a first event 1311, at least one of the intensity of a first haptic feedback, the size of a rough texture, and an output time may be differently outputted on the basis of a movement distance of the user input, a position on a page, or a first holding time. Correspondingly, the haptic support module 170 may express a physical phenomenon that repulsive/elastic force becomes strong gradually while a paper is bent. For example, while a page is bent by a user's touch drag event, the haptic support module 170 may set the intensity or rough textures of the first haptic feedback to be the maximum value before the first event 1311 changes into the second event 1321. The increase degree may be set to be increased linearly, and logarithmically, or exponentially.

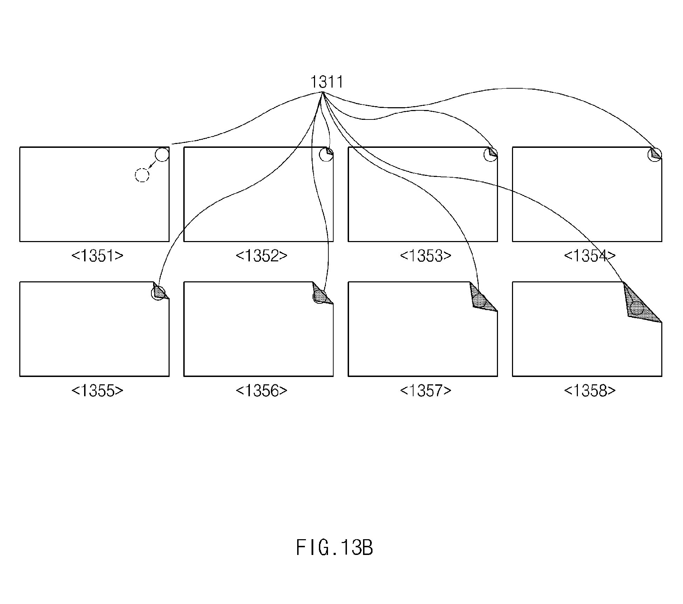

FIG. 13B is a view illustrating a page edge bending related haptic information management method according to various embodiments of the present disclosure.

Referring to FIG. 13B, when a first event occurring by a user input (for example, an event occurring from an edge area of a displayed page) is moved on a touch panel (for example, moved to an inner direction of a page), the haptic support module 170 may perform a control to output at least part of a page (for example, the right edge of a page) to be in a bending form from a state 1351 to a state 1358 (i.e., 1351, 1352, 1353, 1354, 1355, 1356, 1357, and 1358). During this operation, the haptic support module 170 may perform a control to vary a haptic feedback outputted in correspondence to the degree of bending as shown in a state 1351 to a state 1358. For example, the haptic support module 170 may perform a control to increase at least one of the intensity and roughness of a first haptic feedback while at least part of a page is bent from a state 1351 to a state 1357. Additionally, the haptic support module 170 may determine a state 1358 in which the vertex and side of a page is not included in a user input position as an input event to provide a second haptic feedback. Since the state 1357 is a state in which the vertex or side is included at a position or area where a user input event occurs and is right before the state 1358, the haptic support module 170 may perform a control to output a haptic feedback that at least one of a rough texture and an intensity is the maximum.

Although FIG. 13A or 13B illustrates a form in which the edge of a page is bent toward the inside and turned over to show the back of the turned over page, it may be expressed that the edge of a page is turned over reversely and bent bulgingly and then turned over by bending elasticity.

According to an embodiment, when the first event 1311 occurs at the side position of a page turned over first, as shown in FIG. 13A, the haptic support module 170 may provide a specified first haptic feedback and may gradually increase the intensity of rough feeling to simulate elasticity while the second event 1321 for holding and dragging the end of a page occurs. The haptic support module 170 may provide a rough and strong haptic feedback of a specific size when a page is bounced finally (for example, when the first event changes into the second event).

According to various embodiments, an operation for turning over several pages at once and a haptic feedback may be supported. For example, the haptic support module 170 may gradually increase the number of pages to be turned over to provide various haptic feedback according to a holding time of the first event 1311 occurring by the first user input from the side of a page shown in FIG. 13A. For example, when a touch hold event occurs from the side of one page, the haptic support module 170 may output a first haptic feedback. When the touch hold event is maintained in an area within a specified distance from an initial event occurrence point, the haptic support module 170 may measure a touch holding time (Td = Tn - T) of the last touch hold event occurrence time (Tn) among at least one hold event occurring after a touch hold event occurrence time (T). When a measurement time is equal to or greater than a specified holding time (for example, a specified time (Tm)), the haptic support module 170 may output a second haptic feedback and may be initialized to T = Tn. If a measurement time Td is less than Tm, the haptic support module 170 does not update T and updates Tn to a new touch hold event occurrence time occurring after Tn to measure Td. At this point, the second haptic feedback may be identical to the first haptic feedback and may be obtained by changing the property (for example, at least one of intensity and vibration holding time) of the first haptic feedback.

As another example, each time a touch signal occurs continuously within an area of a specified range including one page side, a second haptic feedback may be outputted. Then, when a page turning operation (for example, a touch dragging or flick operation) occurs, the haptic support module 170 may perform a control to increase the number of pages turned over. Additionally, the haptic support module 170 may output a third haptic feedback (for example, the increase in the roughness or vibration intensity of texture according to the number of pages) in correspondence to the number of increased pages. According to an embodiment, each time maintaining a touch hold at a page one side, the haptic support module 170 may support a user to detect the number of pages to be turned over or an increase situation by a second haptic feedback. Additionally, when performing an operation for turning over pages at once by dragging, the haptic support module 170 may output a third haptic feedback different from a case of turning over one page, thereby supporting a user to experience various haptic feedback.

An area determination of a component where the user input (for example, the first event 1311 or the second event 1321) is detected may be performed on the basis of at least one of a specific one point identification on an input device (for example, a touch screen) area where a user input signal is detected, a component identification occupying the largest ratio in an area where an input signal is detected, a close component identification at a specific one point on an input device area where a user input signal is detected, a component identification occupying the largest ratio in an arbitrary area including a specific one point on an input detection device area where a user input signal is detected, and a case in which at least part of a specific component exists on an area where an input signal is detected. Even when a boundary area is a one line segment simply, if part of the line segment is covered by a finger and exists in an area for detecting an input signal, the haptic support module 170 may generate a haptic feedback for a boundary area.

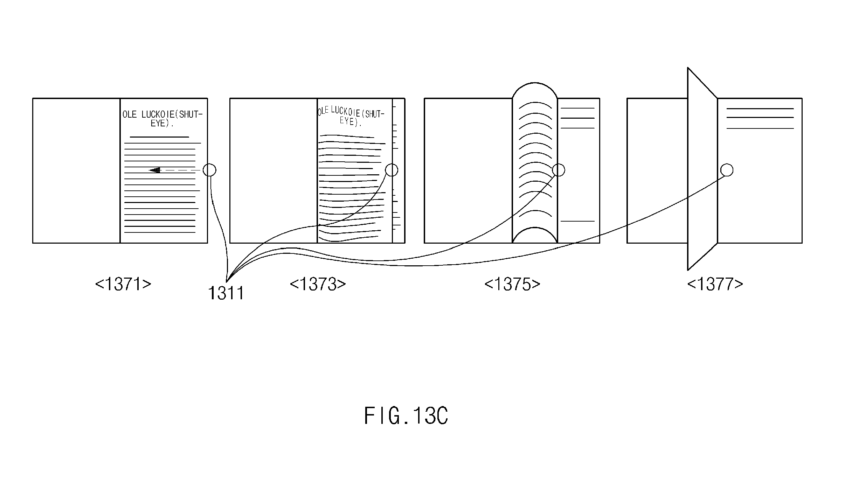

FIG. 13C is a view illustrating a page turning related haptic information management method according to various embodiments of the present disclosure.

Referring to FIG. 13C, the haptic support module 170 may display as shown in a state 1371 to a state 1377 (i.e., 1371, 1373, 1375, and 1377) that while pressing the vertex or side of a turned page and sliding on the back page, when a touch event 1311 by the finger is out of the vertex or side of the turned page, the page is bounded and turned over by the elasticity of the bent page. During this operation, the haptic support module 170 may provide a haptic feedback corresponding to the texture corresponding to the surface of the back page to a touch object generating the touch event 1311. Additionally, the haptic support module 170 may adjust the size of a resistance feeling provided to a touch object generating the touch event 1311 in correspondence to the degree change in the bending of a turned. For example, the haptic support module 170 may perform a control to output haptic information corresponding to the maximum resistance feeling at the point of the touch event 1311 in a state 1375 in which a page is turned over. The haptic support module 170 may remove a resistance feeling related haptic component in a state 1377.

According to another embodiment, when the touch event 1311 (for example, an event according to an operation for moving (for example, a touch drag event) while pressing the right part of the right page displayed on a display by a touch object and pressing and moving a finger to the left page area) occurs, the haptic support module 170 may display a form in which the right page is bulgingly rolled and the right side of the right page is placed on the left page area. In such a situation, when a touch event 1311 (for example, an event according to an operation for stopping moving and releasing the touch object or moving in a direction (for example, right direction) different from a previous movement direction at more than a specific speed) occurs, the haptic support module 170 may display a form in which a rolled page is turned over to the left.

According to another embodiment, when a touch event (or a hovering event) 1311 (for example, an event corresponding to an operation for moving slowly at less than a specific speed (for example, less than a specific speed) in a direction different from a previous movement direction while a touch object selects a page on a display, moves, and stops movement) is received, the haptic support module 170 may perform a control to display a form in which a rolled page is restored to the right as it was. According to various embodiments, when a touch event 1311 (for example, an event corresponding to an operation for stopping the movement and releasing the hand during a page turning operation by a user input or moving in a direction different from a previous direction) is received, the haptic support module 170 may display a form in which a page is turned over or restored to an original state according to a movement distance depending on a previous movement operation of an event or the position of the touch event 1311 in a page area. For example, a touch event 1311 (for example, an event corresponding to an operation in the form of releasing the finger in a state of not exceeding 1/2 of the width of the right page while selecting the right side area of the right page and moving to the left by the finger) occurs, the haptic support module 170 may display a form in which a page is restored to an original state. According to various embodiments, when a touch event 1311 in the form of releasing the finger after moving to the left by more than the 1/2 distance occurs, the haptic support module 170 may display a form in which the page is turned over to the left. In correspondence to the display operation, the haptic support module 170 may provide at least one haptic feedback or a haptic feedback of which size or intensity is changed gradually to a specified range on the basis of a point where the touch event 1311 occurs or a corresponding point.

As mentioned above, a device and method according to various embodiments may include setting a first layout where visual components of a page are disposed, setting a first haptic layout for setting at least one haptic feedback according to an area of visual components configuring the first layout of a page, detecting a first user input, and outputting the specified first haptic feedback according to an area of a component where the first user input is detected.

According to various embodiments, a device and method may include detecting a second user input for moving by a specified distance from a position where the first user input occurs and detecting a change of a position according thereto.

According to various embodiments, a device and method may include setting a second layout obtained by modifying a first layout to express a page shape change according to a second user input, setting a second haptic layout according to the second layout, and outputting the specified second haptic feedback according to an area of a component where the second user input is detected.

According to various embodiments, a device and method may include setting a boundary area that includes at least part of at least one area of the up, down, left, and right sides and the vertex area of a page in the first layout, as a haptic component of a first haptic layout, in a corresponding area.

According to various embodiments, a device and method may further include, as the first user input is detected from an area including at least part of the boundary area, according to a specified holding time elapses, changing the property of the first haptic feedback or setting at least one of a second haptic feedback and a third haptic feedback.

According to various embodiments, a device and method may further include, as the first user input is detected from an area including at least part of the boundary area, according to a specified holding time elapses, increasing the number of turned pages in page turning effect.

According to various embodiments, a device and method may include setting a boundary area that includes at least part of at least one area of the up, down, left, and right sides and the vertex area of a page in the second layout, as a haptic component of a second haptic layout, in a corresponding area. According to various embodiments, a device and method may include determining whether the second user input is detected from an area including at least part of the boundary area and generating a different second haptic feedback according to whether it is a boundary area or not.

According to various embodiments, a device and method may further include, as the second user input is detected from an area including at least part of the boundary area, according to a specified holding time elapses, increasing the number of turned pages in a page turning effect.

According to various embodiments, a device and method may further include differently changing at least one of the frequency, vibration holding time, vibration pattern, vibration intensity, vibration orientation, vertical movement height, repulsive force, temperature change, air pressure, and constant voltage intensity of a second haptic feedback according to the number of pages. According to various embodiments, in relation to a device and method, the electronic device may be an electronic book reader equipped with a touch screen.

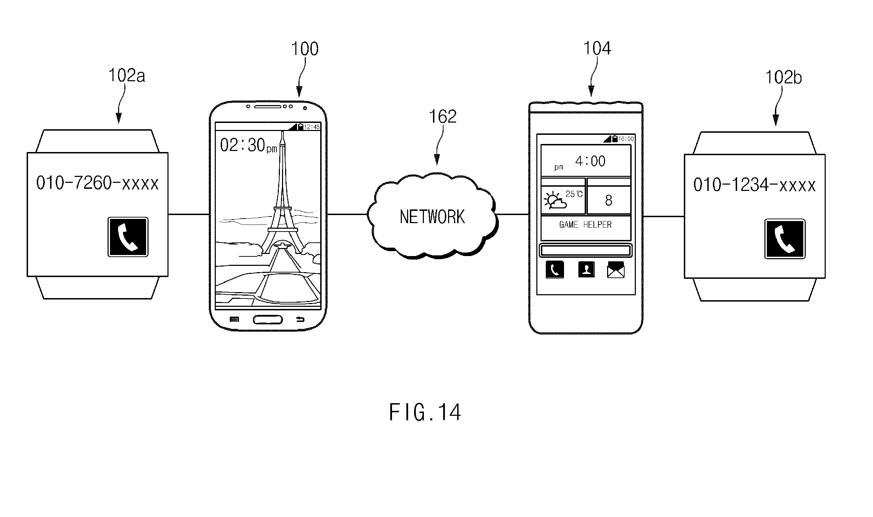

FIG. 14 is a view illustrating a haptic information management method depending on input information according to various embodiments of the present disclosure.

Referring to FIG. 14, according to various embodiments, a first external device 102a is connected to a first electronic device 100 through a local network such as BT or WiFi and the first electronic device 100 may be connected to a second electronic device 104 through a broadband network 162 such as GSM, CDMA, fourth generation (4G), and fifth generation (5G). In the above structure, electronic devices and external devices may support touch input and haptic feedback output. According to another embodiment, the first external device 102a may be connected to the first electronic device 100 through the broadband network 162. According to another embodiment, the first electronic device 100 may be connected to a second electronic device 104 through a wireless local network.

According to various embodiments, a user input (for example, at least one of touch input, touch drag, hovering, and touch hold) event occurs from the first external device 102a, the first external device 102a may recognize an input object, detect haptic information corresponding to the input object and an input gesture, and deliver it to the first electronic device 100. The first electronic device 100 may output the received haptic information. Alternatively, the first electronic device 100 may deliver the received haptic information to the second electronic device 104. The second electronic device 104 receiving haptic information may output a haptic feedback corresponding to corresponding haptic information. Alternatively, the second electronic device 104 may deliver corresponding information to the second external device 102b. The external device 102b may output a haptic feedback according to the received haptic information.

According to various embodiments, when a specific message is written by a finger during a process of making a call with others by using an electronic device, the written message may be transmitted to another electronic device and also in correspondence thereto, haptic information transmission may be supported. At this point, when an inputted means is a pen instead of a finger, haptic information having a vibration pattern with a weaker intensity in a narrower area than that of a finger may be transmitted. For example, when the text "I love you" by a pen is inputted to the first external device 102a or the first electronic device 100, the text may be written in at least one of the second electronic device 104 and the second external device 102b and also a haptic feedback output according to haptic information corresponding to an input means may be performed. During this operation, text writing and haptic feedback output timing may be synchronized.

According to an embodiment, at least one of the first electronic device 100, the second electronic device 104, and the external devices 102a and 102b may set haptic information providing a different haptic feedback according to a gesture, input intensity, input position, input speed, and input area related to inputted input information. For example, at least one of the first electronic device 100 and the second electronic device 104 may differently set haptic information according to at least one of haptic information corresponding to a knock using a knuckle, a finger rubbing or finger grabbing position, and a grabbing intensity. For example, the first electronic device 100 where a pressure sensor or a touch sensor (for example, a capacity or resistance film sensor) is built in a bezel may determine the intensity of grabbing the first electronic device 100 on the basis of a touch area or size or the intensity of a pressure value or a capacitance value. Based on this, when an input signal by a gesture input is detected from a touch screen, the first electronic device 100 may deliver grabbing intensity information and gesture related information to the second electronic device 104. The second electronic device 104 receiving at least one of intensity information and gesture related information may provide, as haptic information, information related to at least one of a haptic feedback of an intensity proportional to grabbing intensity information and a specific haptic feedback corresponding to gesture information.

According to an embodiment, information related to a delivered haptic feedback may be played through a haptic module of the second electronic device 104 or the second external device 102b. For example, a haptic feedback corresponding to haptic information may be outputted through at least one haptic module 180 disposed at the rear of the second external device 102b. According to various embodiments, a haptic feedback corresponding to haptic information may be outputted through a haptic playback device integrated with a display device at the front.

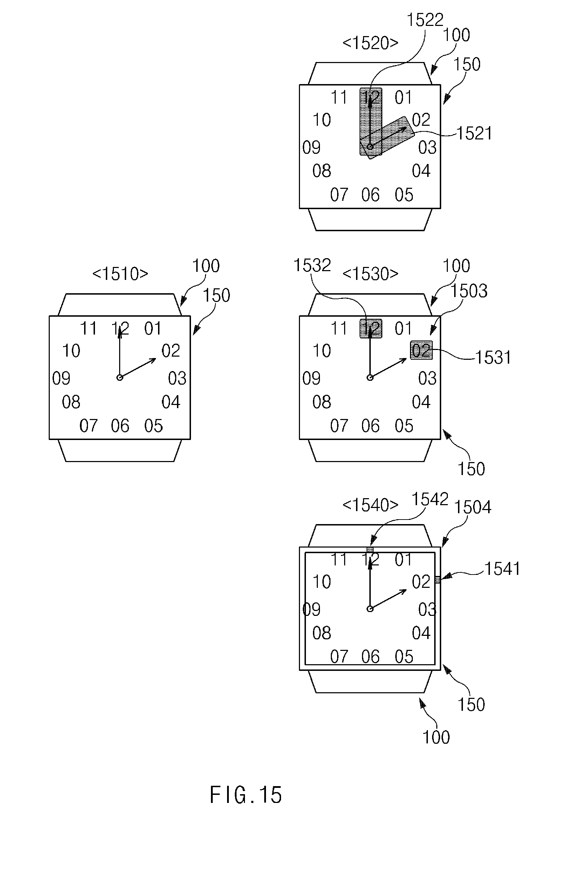

FIG. 15 is a view illustrating a haptic information management method depending on watch function execution information according to various embodiments of the present disclosure.

Referring to FIG. 15, according to various embodiments, a haptic support module 170 of an electronic device 100 may perform a control to output time information to an area of a display 150 as shown in a state 1510. When a touch event (for example, at least one of a touch down, touch up, and touch drag event and a touch hold event) or a hovering event occurs from a specific area of the electronic device 100, the haptic support module 170 may output haptic feedback information corresponding to a corresponding time. As shown in a state 1510, the electronic device 100 may display time information by using a minute hand and an hour hand or numbers.

When a specific event occurs, the haptic support module 170 may obtain current time information. The haptic support module 170 may control a haptic feedback output corresponding to specific haptic information to a position corresponding to the current time information. For example, as shown in a state 1520, the haptic support module 170 may perform a control to output a first haptic feedback corresponding to a minute hand area 1522 and a second haptic feedback corresponding to an hour hand area 1521. For example, when touch or hovering is detected from the hour hand area 1521, the haptic support module 170 may provide a second haptic feedback. When touch is detected from the minute hand area 1522, the haptic support module 170 may provide a first haptic feedback. Since the hour hand area 1521 is shorter than the minute hand area 1522 in terms of length or area, the separation of the hour time area 1521 and the minute hand area 1522 may be performed easily by a search mode. During this operation, the haptic support module 170 may support to recognize a time check easily by outputting a directional haptic feedback.

According to various embodiments, as shown in a state 1530, the haptic support module 170 may perform a control to output different first and second haptic feedback to corresponding hour dial 1531 and minute dial 1532 in a dial area 1503. During this operation, the haptic support module 170 may support more intuitive classification by providing a second haptic feedback with stronger intensity or expressing a second haptic feedback rougher compared to a first haptic feedback. Alternatively, the haptic support module 170 may differently apply the haptic feedback area size of the dial area 1503. For example, the haptic support module 170 may set the area of the hour dial 1531 to be relatively broader than the area of the minute dial 1532. The haptic support module 170 may provide a specific haptic feedback only to an area where touch occurs in an entire set corresponding area or a corresponding area.

According to various embodiments, the haptic support module 170 may perform a control to output a haptic feedback on the bezel area 1504 corresponding to the positions of the hour hand and the minute hand. For example, as shown in a state 1540, the haptic support module 170 may perform a control to output a first haptic feedback to an hour hand indication bezel area 1541 in the bezel area 1504. The haptic support module 170 may perform a control to output a second haptic feedback to a minute hand indication bezel area 1542 that the minute hand indicates.

In the above embodiments, the haptic support module 170 may sequentially provide haptic feedback provided from the hour hand area and the minute hand area, or the dial area. Based on this, when time hand and the minute hand overlap, the haptic support module 170 may support easy classification.

In the above-mentioned embodiments, a haptic feedback is provided from a first input mode or a search mode (for example, a mode of providing a haptic feedback only to the hour hand and the minute hand during touch drag or hovering movement or providing a directional haptic feedback in the case of not the hour/minute area), and may perform an operation for changing a time in the second input mode. Additionally, the first input mode or the search mode may maintain a power saving mode in which a display is not turned on or a screen lock mode. For this, when the proximity of an object approaching through a sensor hub supporting low power driving is within a predetermined reference in the electronic device 100 or an input occurs from a touch detection device if a screen on key is not pressed in a screen off state, the haptic support module 170 may automatically set into the first input mode or the search mode. Additionally, each haptic support module 170 may provide another haptic feedback to the boundary area of an area. According to various embodiments, in correspondence to a given specific event occurrence, the electronic device 100 may provide time information on the basis of a haptic feedback while maintaining a turn-off state (for example, maintaining a sleep mode or a state in which only a display light emitting part is turned off). Accordingly, a user may check time information on the basis of haptic feedback without display check. The specific event may include at least one event of a touch hold event occurrence in the electronic device 100 (for example, a display area or a touch available bezel area), a movement signal detection (for example, a movement signal of more than a predetermined intensity collected by a built-in acceleration sensor or gyro sensor) by a movement of the electronic device 100, and an object approach detection by a proximity sensor (for example, a state in which a distance of a specific object with the display of the electronic device is within a specified distance).

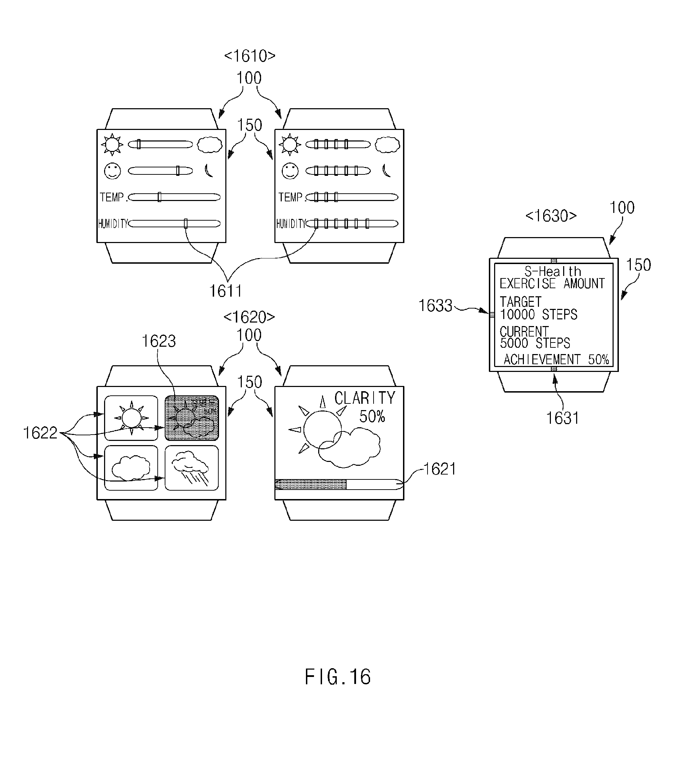

FIG. 16 is a view illustrating an external environment and health care function related execution information specific haptic information management method according to various embodiments of the present disclosure.

Referring to FIG. 16, according to various embodiments, the electronic device 100 may provide a haptic feedback related to the check of at least one of weather, humidity, temperature, and bio information. During this operation, the haptic support module 170 may express service related information as a layout in a slider bar or grid form. Alternatively, when a touch event (for example, at least one of a touch down, touch up, and touch drag event and a touch hold event) or a hovering event occurs from a bezel or on a screen, the haptic support module 170 may provide a haptic feedback information to a specific area (for example, an area contacting a touch screen or a user's body). Accordingly, the haptic support module 170 may support to check a relative ratio or degree of a specific item of service information through a relative position. According to another embodiment, the haptic support module 170 may deliver a relative ratio or degree of a specific item corresponding to an area where the event occurs to an entire electronic device instead of a specific area through at least one of the intensity of vibration, a vibration occurrence frequency, and the orientation of vibration.

As shown in a state 1610, the electronic device 100 may output at least one of weather change, moon change, temperature change and humidity change to the display 150 where a specific haptic feedback (for example, a first haptic feedback) is outputted, to a bar shaped area in addition to the first haptic feedback. During this operation, the haptic support module 170 may output the first haptic feedback in correspondence to the position of number of a mark 1611 disposed in each information bar. Accordingly, a user may recognize the ratio of relative specific service information through the position or number of the mark 1611. The haptic support module 170 may perform a control to output different haptic feedback between bar areas displayed with the mark 1611.

According to various embodiments, as shown in a state 1620, the electronic device 100 may express sunny to rainy weather types in four images to display weather information and may display and highlight an image corresponding to the current weather. According to various embodiments, the electronic device 100 may support a user to see weather in several regions at once by providing weather information related images together with several region information. According to various embodiments, the electronic device 100 may support a plurality of image outputs corresponding to an hourly weather change in a day or a weekly weather change.

In order to obtain such region information based weather information, the electronic device 100 may collect location information and based on this, may search and obtain weather information through the network 162. For example, the electronic device 100 may recognize the location in a region where there is a current user through wireless signals of a GPS sensor or a base station and may receive weather information of a corresponding region through a remote server or other electronic devices connected through a wired or wireless network. Then, the electronic device 100 may display weather information hourly or daily.

During this operation, when a specific input is detected from a weather area displayed on a touch based display 150, the haptic support module 170 may support a user to easily check weather without seeing the display by providing a specific haptic feedback. The haptic support module 170 may support a user to recognize which position an area where a corresponding input is detected is placed at relatively in the display 150 by providing different haptic feedback to the boundary areas of images areas.

In the state 1620, some images display ratios according to the current clarity. The haptic support module 170 may support to distinguish a clarity area on the basis of a first haptic feedback. The haptic support module 170 may support each check of a clarity ratio by providing a second haptic feedback to a bar area 1621 at the lower end boundary area of the clarity area. Additionally, the bar area 1621 at the boundary area bottom may provide another different haptic feedback.

According to various embodiments, as shown in the state 1620, the haptic support module 170 may provide another different haptic feedback according to content information. For example, as shown in the drawing, the haptic support module 170 may provide different tactile haptic feedback in respective weather display areas 1622. Through this, the haptic support module 170 may support a user to check today or weekly weather forecast. The haptic support module 170 may provide a corresponding haptic feedback in the area of the display 150 where an event occurs. If weekly weather or hourly weather of the day is being displayed, the haptic support module 170 may provide a haptic feedback only to a weather display area 1623 corresponding to the current time or date without providing a haptic feedback in another date or time. Alternatively, regardless of a weather area, the haptic support module 170 may provide a specific haptic feedback corresponding to the current time or today's weather in a touch screen area where a user input occurs. For example, when a specific event occurs, the haptic support module 170 may provide a soft and smooth tactile haptic feedback to the display 150 if weather is sunny. If weather is cloudy or a rainfall probability is more than a specific size, the haptic support module 170 may provide a sticky tactile sense or a rough haptic feedback but may vary its intensity, speed, and pattern. During this operation, the haptic support module 170 may express the large or small amount of cloud or a high or low rainfall probability by varying a tactile or texture degree.

According to various embodiments, in the case of weather that wind is more than a specific size, the haptic support module 170 may provide its intensity and direction through a haptic feedback (for example, a haptic feedback with direction, speed, and intensity). According to an embodiment, the haptic support module 170 may provide a haptic feedback from the left top to the right bottom in order to correspond to the direction of the haptic feedback to the direction of wind. The haptic support module 170 may provide a haptic feedback corresponding to various forms of wind in correspondence to the speed and intensity of wind. According to various embodiments, the haptic support module 170 may provide a haptic feedback corresponding to a specific tactile sense or texture only when a user input is found at a specific highlight area or may provide it to the entire other areas except for a slider bar.

According to various embodiments, the haptic support module 170 may collect execution information related to a health care function as shown in a state 1630 and, while outputting it to the display 150 or a bezel, may perform a control to output specific haptic feedback information. For example, the haptic support module 170 may perform a control to output specific haptic feedback information in relation to the current exercise amount and target value. During this operation, the haptic support module 170 may output different haptic feedback information according to the size of an achievement. Additionally, the haptic support module 170 may perform a control to output a haptic feedback through a haptic module disposed at the display 150 or a haptic module disposed at a bezel. According to an embodiment, as shown in the 1630, when an achievement ratio according to an exercise amount is 50 % of a target value, the haptic support module 170 may perform a control to output a haptic feedback corresponding to an achievement ratio of 50 % to a six clock direction area 1631 of the bezel. When an achievement ratio according to exercise is 50 % of a specific target value, the haptic support module 170 may output a haptic feedback (for example, a feedback identical to or different from the case of an achievement ratio of 50 %) corresponding to an achievement ratio of 75 % to a nine clock direction area 1633 of the bezel. When a user's body contacts a specific point (for example, a bezel point corresponding to an achievement rate) of a bezel area, the haptic support module 170 may perform a control to provide a haptic feedback only to a corresponding area or output a corresponding haptic feedback to the entire electronic device 100.

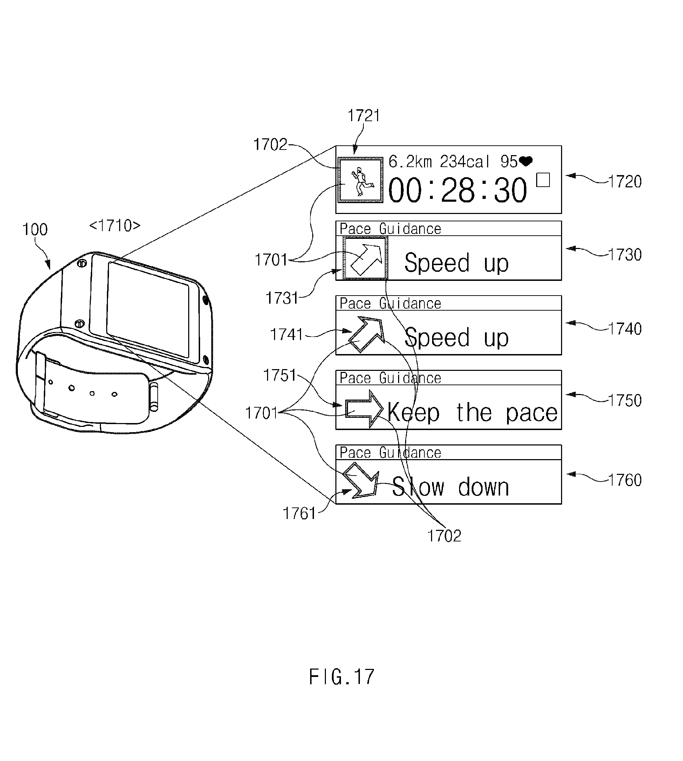

FIG. 17 is a view illustrating an exercise speed related execution information specific haptic information management method in a health coaching function according to various embodiments of the present disclosure.

Referring to FIG. 17, the electronic device 100, for example, may be in a user wearing available state as shown in a state 1710. The electronic device 100 may set an exercise amount in correspondence to a user input control and may represent the current achievement according thereto with a haptic feedback. According to various embodiments, the electronic device 100 may output at least one form of haptic feedback to a specific position of a bezel according to the current achievement. Accordingly, a user may easily recognize the current achievement on the basis of the type and occurrence position of a haptic feedback. When an application for setting and coaching an exercise amount is executed, the electronic device 100 may recognize a user's motion and accordingly may provide a haptic feedback.

The electronic device 100 shown in a state 1710 may include a bio information sensor device (for example, at least one of a Photoplethysmography (PPG) sensor, a pulse wave sensor, an ECG sensor, a sleep sensor, a brainwave sensor, an EMG sensor, a glucose sensor, and a cholesterol sensor) for recognizing bio information corresponding to at least one of user's heart rate, blood pressure, Heart Rate Variability (HRV), Accelerated Plethysmo (APG), vascular aging, oxygen saturation, blood glucose, cardiovascular tone, skin resistance, EMG, ECG, walking, cholesterol, brainwave, and temperature. Additionally, the electronic device 100 may include a motion sensor device for recognizing the position, direction or motion of a user, for example, an acceleration sensor, a GPS, a gyro sensor, a geomagnetic sensor, and a digital compass. The electronic device 100 may provide services such as user's health care, exercise coach, deep sleep detection, and stress management on the basis of bio or movement information that the above-mentioned sensor devices detect.

According to an embodiment, the electronic device 100 may control an operation for detecting a body attachment state or wearing state on the basis of the above-mentioned sensor devices. When it is determined as a body contact state or a body wearing state, the electronic device 100 may control an operation for allocating haptic information. An operation for detecting the body contact state or wearing state may be determined by analyzing a bio signal characteristic during wearing of the electronic device 100 on the basis of a biometric sensor. For example, the electronic device 100 may determine at least one of a state in which the Direct Current (DC) component of an optical signal inputted through a PPG sensor is more than a predetermined signal intensity (for example, more than a specified signal intensity or a specified ratio to the maximum intensity), a state in which the amplitude of an Alternating Current (AC) component in a detected PPG signal is more than a predetermined reference (for example, more than a specified AC amplitude size or a specified amplitude ratio to the maximum amplitude), a state in which a signal-to-noise ratio (SNR) for a specified period is greater than a specific value, and a state in which a comparison result of a signal pattern (for example, frequency or period) of a detected bio signal and a specified (for example, predefined or pre-stored) signal pattern is a normal state (for example, a state of a signal pattern specified to a normal state). When it is determined as the above-mentioned at least one state, the electronic device 100 may determine the current state as a normal wearing state.

According to various embodiments, the electronic device 100 may provide various service (for example, at least one of healthcare, exercise coach, deep sleep detection, stress management, and emotion management) functions as shown in a state 1720 to a state 1760 (i.e., 1720, 1730, 1740, 1750, and 1760). For example, the haptic support module 170 of the electronic device 100 may perform a control to output to the display 150 an exercise type related object 1721 and a screen including an exercise state related object as shown in a state 1720. According to an embodiment, the haptic support module 170 may allocate specific haptic information to the service type related object 1721. During this operation, the haptic support module 170 may perform at least one of an operation for allocating first haptic information to the boundary area 1702 of the service type related object 1721 and an operation for allocating second haptic information to the inner area 1701 of the exercise type related object 1721. According to various embodiments, the first haptic information and the second haptic information may be different from each other.

According to another embodiment, the haptic support module 170 of the electronic device 100 may allocate specific haptic information set to output a haptic feedback corresponding to an event occurrence when the power of the display 150 is turned off or an object is not displayed. For example, according to various embodiments, when a specific event (for example, an event occurring or received from the electronic device 100) occurs, the electronic device 100 may perform a control to output a haptic feedback corresponding to the event occurrence without turning on the display. A user may check information corresponding to the event occurrence only with a haptic feedback without checking a display through a haptic feedback. The specific event may include at least one of an event in which a touch hold event occurs on the display or bezel of the electronic device 100, an event in which a movement signal (for example, a signal corresponding to walking or running of more than a specific speed) of more than a predetermined intensity is detected due to a movement of the electronic device from at least one sensor of a built-in acceleration sensor, gyro sensor, and GPS, an event for determining whether an object exists within a specified distance with a display of the electronic device by a proximity sensor, and an event for checking a state in which a display facing direction is disposed in a direction that a user cannot check (for example, at least one of a state in which the display of a watch device worn on a wrist faces a gravity direction and a state in which a user's face or eye is not recognized by a camera facing the same direction as the display). Through such an operation, the electronic device 100 may support a function of user's personal information protection or power management.

According to various embodiments, the haptic support module 170 of the electronic device 100 may perform a control to output to the display 150 a screen including an exercise coaching related object 1731 as shown in a state 1730. The haptic support module 170 may allocate different haptic information to the boundary area 1702 and inner area 1701 of the exercise coaching related object 1731. The exercise coaching related object 1731 may include information for guiding speed increase. The haptic support module 170 may set a haptic feedback corresponding to the exercise coaching related object 1731 to have a higher intensity or more frequency per specific unit time, compared to haptic feedback related to another exercise coaching related object. According to various embodiments, the haptic support module 170 may guide a speed increase by repeating a pattern from a less frequent pattern to a more frequent pattern (for example, a speed increasing pattern) within the same time.

According to various embodiments, when an input object such as a user's finger or palm covers a specified ratio (for example 60 %) of the area of the display 150, the haptic support module 170 may perform a control to output a haptic feedback. According to another embodiment, when an event occurs in correspondence to that an input object contacts at least one of the object area 1701 and the boundary area 1731, the haptic support module 170 may perform a control to output a haptic feedback to only an area that the input object contacts where a touch event signal occurs. According to another embodiment, when an event occurs in correspondence to that an input object contacts at least one of the object area 1701 and the boundary area 1731, the haptic support module 170 may perform a control to generate a haptic feedback at an object area or a boundary area that the input object contacts.

According to various embodiments, the haptic support module 170 of the electronic device 100 may perform a control to output to the display 150 a screen including an exercise coaching related object 1741 as shown in a state 1740. The exercise coaching related object 1741 may provide the same information as the exercise coaching related object 1731 but may be in a different form of expression. The haptic support module 170 may allocate different haptic information to the boundary area 1702 corresponding to the frame of an arrow of the exercise coaching related object 1741 and an arrow inner area 1701. According to various embodiments, the haptic support module 170 of the electronic device 100 may perform a control to output to the display 150 a screen including an exercise coaching related object 1751 as shown in a state 1750. For example, the haptic support module 170 may detect the moving speed of the electronic device 100 on the basis of a sensor signal provided from a sensor module. On the basis of the detected moving speed, the haptic support module 170 may perform a control to output an exercise coaching related object 1751 including information for guiding to maintain the current speed. The haptic support module 170 may perform a control to allocate different haptic information to the boundary area 1702 and inner area 1701 of the exercise coaching related object 1751. The haptic support module 170 may not provide a haptic feedback corresponding to the exercise coaching related object 1751. Alternatively, the haptic support module 170 may perform a control to provide a haptic feedback corresponding to the current pace (for example, a moving speed and walking speed) or generate a haptic feedback of a specified interval.

According to various embodiments, the haptic support module 170 may perform a control to output to the display 150 an exercise coaching related object 1761 corresponding to information for guiding the decrease in correspondence to the moving speed of the electronic device 100 as shown in a state 1760. The haptic support module 170 may perform a control to allocate different haptic information to the boundary area 1702 and inner area 1701 of the exercise coaching related object 1761. The haptic support module 170 may analyze the currently occurring user's movement pattern and provide a haptic feedback at a slower speed than that in order for a haptic feedback output related to a deceleration indication, thereby guiding to synchronize the movement pattern with the haptic feedback. When a haptic feedback is disposed at the surface that contacts a user's body (for example, when it is disposed at the bottom of a watch device), the haptic support module 170 may provide a specific haptic feedback by using at least one of haptic intensity, pattern change, orientation, and period.

According to an embodiment, in relation to an exercise coaching guide, the haptic support module 170 may increase a haptic feedback frequency per unit time in order to guide the increase of a moving speed. The haptic support module 170 may perform a control to decrease a haptic feedback frequency per unit time in order to guide the decrease of a moving speed. The haptic support module 170 may provide a specified beat sense through a haptic feedback occurring at a frequency of different sizes according to a moving speed. Through this, the haptic support module 170 may guide to assist at least one of a user's moving speed and form with a haptic feedback. Additionally, or alternatively, the haptic support module 170 may provide an audio feedback (for example, at least one of a user's favorite music and beatbox sound selected based on specific music or playback history) corresponding to a haptic feedback.

According to various embodiments, the haptic support module 170 may provide guide information and haptic feedback according to exercise coaching service such as running or push up. The electronic device 100 (for example, a wrist watch type device) may include an acceleration sensor, a gyro sensor, or a heart rate monitoring (HRM) sensor in relation to running pace coaching. The electronic device 100 may obtain bio signal information such as a user's movement or heart rate by detecting at least one sensor signal corresponding to a user's body movement or a pulse wave from the haunch bone or the ulna artery. The electronic device 100 may compare the obtained bio signal information and a specified reference value to output information for coaching a user for an exercise properly in the current situation to the display 150 and the haptic module 180.

According to various embodiments, the electronic device 100 may perform a control to obtain user basic information such as a user's weight, height, age, and sex according to a user input and provide exercise coaching information according to a related application execution after setting an exercise target according to a user input. The electronic device 100 may provide target calories for consumption, basic physical strength security, health maintenance, physical strength enhancement, and cardiovascular function enhancement as exercise target items. When an exercise target item is set, the electronic device 100 may automatically set user exercise coaching related information such as exercise type, exercise intensity, and exercise pace information. According to an embodiment, the electronic device 100 may provide, as exercise coaching related information, the one day target number of steps, pace setting information per running time slot, the number of push-ups, and the number of trials for each fitness exercise type.

The electronic device 100 may check heart rates in correspondence to a user's movement information and continuously store this so as to form time series data. The electronic device 100 may analyze an exercise amount situation until now on the basis of the time series data and may provide appropriate information according to set exercise coaching information. The haptic support module 170 may perform a control not to perform an additional exercise coaching information output on the display 150 and may provide instruction information on running pace as specific haptic feedback information. According to an embodiment, the electronic device 100 may provide a haptic feedback in correspondence to a movement (for example, a motion of putting a hand on the screen of a wrist watch device) of a hand wearing the electronic device 100 during running. Herein, the electronic device 100 may provide a haptic feedback through the surface of a device contacting a user's wrist.

According to various embodiments, the electronic device 100 may support to provide an exercise coaching information providing function to a specific situation (for example, in the case in which an event for executing an exercise coach application occurs before exercise starts, if the electronic device 100 enters a preset region (for example, a region entry detection specified by GPS or WiFi signal analysis), it is an exercise scheduled time). When a specific situation occurs (for example, when an exercise coach application is terminated or an exercise amount is maintained for more than a specific time, when bio signal information of more than a specific value is not detected for more than a specific time, and when a motion event for separating the electronic device 100 from a body, a strap release event, or an event for separating a detachable sensor device from a connector is collected), the electronic device 100 may terminate a haptic feedback service automatically.

According to various embodiments, when a heart rate or a body's movement pattern signal is out of a specific value area for more than a specific time, the electronic device 100 may output an important coaching event, as specific information output, to at least one of the display 150 and the haptic module 180 during exercise. For example, when a running speed or a heart rate is higher or lower than a specific speed set section for a specific time, the electronic device 100 may perform a specific event notification. The haptic support module 170 may generate a strong (for example, a specific size) vibration to attract a user's attention and notify an event occurrence during exercise. When a user's hand contacts the display 150, the haptic support module 170 may output the above various haptic feedback to correspond to corresponding information.

The haptic support module 170 may process a directional haptic feedback to be detected from an area other than the boundary area 1702. While the directional haptic feedback is provided, the haptic support module 170 may stop another haptic feedback output. According to various embodiments, the haptic support module 170 may perform a control to output various haptic feedback in a predetermined order sequentially or in correspondence to an event occurrence. Through this, the haptic support module 170 may allow a user to easily recognize an area where a haptic feedback is provided initially and areas where other haptic feedback occur. Additionally, after supporting the recognition that a haptic feedback is provided from a specific area or notifying a user that there is information to be queried in the entire area, when an actual touch input is maintained, the haptic support module 170 may provide related information.

As mentioned above, a device and method according to various embodiments may include creating a user profile receiving at least one of a user's sex, age, height, weight, waist, and body condition, setting an exercise target for coaching a user's exercise, detecting at least one of a body's movement, the number of steps, a distance moved, and bio signal information through at least one sensor mounted at user's body, calculating exercise information of at least one of a user's exercise type, an exercise amount, an exercise time, calorie consumption amount, a heart rate pattern, an exercise pace, an exercise speed, and exercise distance, and generating an exercise coaching guide to be provided to a user by using the user profile based exercise target and exercise information.

According to various embodiments, a device and method may further include displaying the generated exercise coach guide on a display.

According to various embodiments, in relation to a device and method, the body condition may include at least one of whether a user is injured or disabled, an injured part or disabled part, a fatigue degree, a work load, a dietary pattern, and sleep-related information.

According to various embodiments, in relation to a device and method, the bio signal information may include at least one of blood pressure, pulse wave, EEG, EMG, heart rate, heart rate pattern, oxygen saturation, and blood glucose.

According to various embodiments, in relation to a device and method, the sensor may include at least one of a gyro sensor, a GPS, an ECG sensor, an ECGs sensor, an HRM sensor, a HRV sensor, more than two acceleration sensors, a pressure sensor, an oxygen saturation sensor, a PPG sensor, a photoplethysmogram sensor, a radial artery sensor, and an ulna artery sensor, and the haptic feedback may correspond to at least one of orientation, pattern, intensity, and texture for exercise coaching.

According to various embodiments, in relation to a device and method, the haptic feedback may be outputted each time a user input is detected on a touch screen. The haptic feedback may provide different haptic feedback to more than two areas.

According to various embodiments, in relation to a device and method, the different haptic feedback may include at least one of a haptic feedback corresponding to a boundary area, a haptic feedback corresponding to coaching information, a directional haptic feedback indicating coaching information, and a haptic feedback corresponding to a basic desktop area of a progress bar or a circular progress bar.

According to various embodiments, in relation to a device and method, when a user input is detected on a touch screen, the haptic support module 170 may enlarge or reduce an area where a haptic feedback is provided to correspond to the size of the detected area.

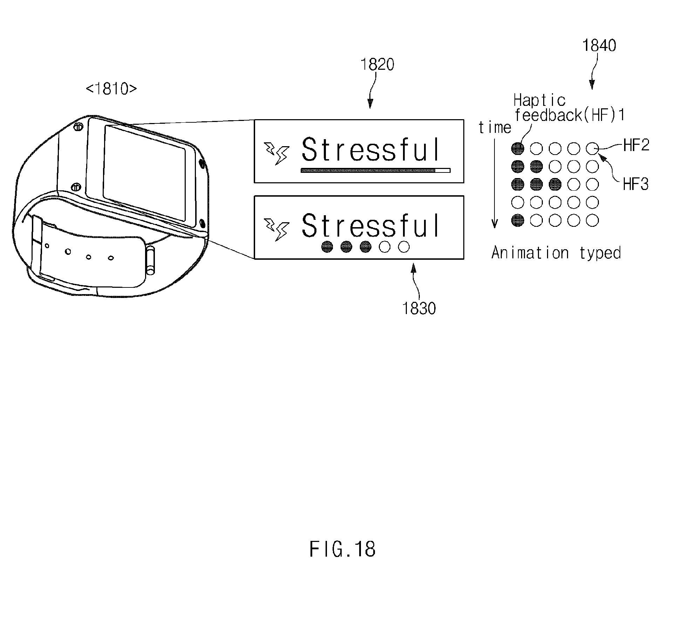

FIG. 18 is a view illustrating a stress related execution information specific haptic information management method according to various embodiments of the present disclosure.

Referring to FIG. 18, the electronic device 100 shown in a state 1810 may analyze bio signal information to recognize at least one of deep sleep and stress and display it as shown in states 1820, 1830, and 1840. In the case of stress, the degree of user's stress may be displayed as a progress bar. When a user input (for example, touch, touch drag, touch hold, and hovering) occurs from an area including a progress bar, the haptic support module 170 may perform a control to output haptic feedback information according to set haptic information. According to various embodiments, in order to correspond to the Likert-scale method, the haptic support module 170 may provide a dot type haptic feedback corresponding to a method of displaying the current level among the maximum levels as shown in 1830 of the state 1810. For example, in 1830, the haptic support module 170 may provide the current stress index through a haptic feedback area together with the representation that a stress index to be displayed is expressed in a specific number of levels (for example, the maximum five levels).

When stress index information is obtained, in correspondence thereto, the haptic support module 170 may perform a control to output a first haptic feedback on the basis of a predetermined number of haptic feedback areas. At this point, the remaining haptic feedback area may maintain a second haptic feedback or may not output a haptic feedback. The haptic support module 170 may provide an animation type expression as shown in 1840 in order to provide the orientation and pattern change of a haptic feedback. For example, the haptic support module 170 may provide a dot type animation feedback in which after increasing a haptic feedback area from the level 0 (or 1) to the maximum level over time, the level 0 (or 1) starts to be provided again repeatedly.

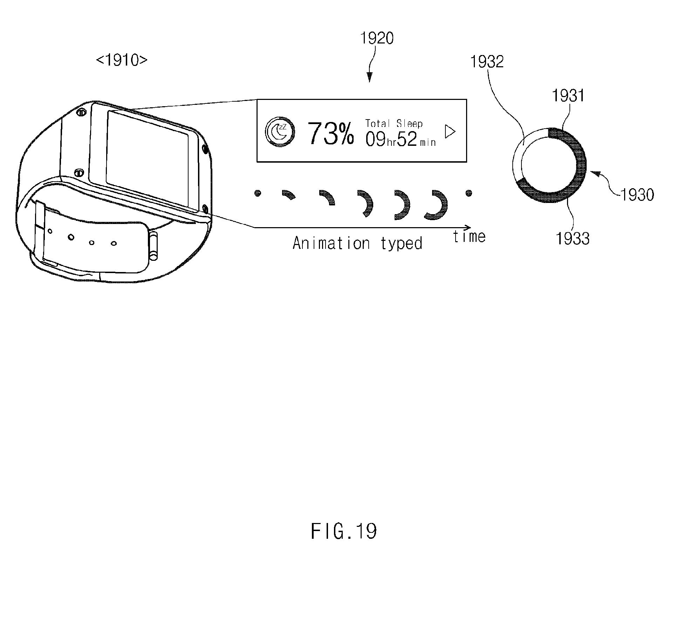

FIG. 19 is a view illustrating a deep sleep related execution information specific haptic information management method according to various embodiments of the present disclosure.

Referring to FIG. 19, the electronic device 100 shown in a state 1910 may support an execution information display and a haptic feedback output according thereto as shown in a state 1920 or a state 1930. For example, the electronic device 100 may provide deep-sleep related information by using a circular process bar. When a circular process bar is touched, the haptic support module 170 may provide various haptic feedback according to the form of the circular process bar. For example, the haptic support module 170 may support a user to feel a tactile sense along the corresponding entire area or process bar shape by providing a haptic feedback corresponding to an area 1931 filled depending on the degree of deep sleep in the circular progress bar. According to various embodiments, the haptic support module 170 may display the filled area 1931 in the circular process bar to correspond to the deep sleep percentage, and perform a control to output a first haptic feedback corresponding to the filled area 1931. The haptic support module 170 may provide a second haptic feedback to an empty area 1932 in the circular progress bar. The second haptic feedback may have a different texture, intensity, pattern, and orientation, compared to the first haptic feedback. The haptic support module 170 may allocate a third haptic feedback to a boundary area 1933 of the circular progress bar. According to various embodiments, the haptic support module 170 may control an output of an animation type providing an orientation or a specific pattern to a haptic feedback. For example, the haptic support module 170 may provide information as increasing a haptic feedback area from a circuit form to an arc form in an animation type.

According to an embodiment, the haptic support module 170 may allocate specific haptic information to a related object displaying an emotional state. In relation to this, the electronic device 100 may provide emotional state information including at least one of anger, hate, grief, joy, reverence, happiness (platonic love, peace, fellowship), romantic love, excitement, and lust on the basis of a sensor signal detected by at least one biometric sensor. According to various embodiments, an electronic device (for example, a wearable device) may provide arousal level related information such as an arousal state or an excitement state by analyzing at least one of PPG signal amplitude, Pulse to Pulse Interval (PPI), and Pulse Rate Variability (PRV) collected through a mounted PPG sensor. The haptic support module 170 may set various haptic feedback outputs in correspondence to emotional level information on an emotional state. For example, the haptic support module 170 may provide a haptic feedback (or a different haptic feedback for each state or each level) specified based on at least one emotional state or at least one of an emotional level size of each emotional state.

According to an embodiment, the haptic support module 170 may measure an emotional level for each of a plurality of emotional states and set a haptic feedback specified to an emotional state corresponding to an emotional level of the largest size to be outputted (for example, a haptic feedback corresponding to the size of an emotional level is outputted during this operation). During this operation, the haptic support module 170 may provide at least one output of visual information and audio information for at least one of an emotional state and an emotional level to a display of an electronic device. In relation to this, an electronic device may store visual information or audio information corresponding to at least one of an emotional state and an emotional level and may support an output in correspondence to corresponding information collection.

In the above description, the electronic device 100 may have a wrist watch device form but may be a smartphone or a wearable computing device. According to various embodiments, a wrist watch form of the electronic device 100 may collect bio signal information or deliver processed coaching information to another electronic device through at least one of wired and wireless communication methods, and actual information may be outputted through a display and haptic module mounted at the other electronic device. According to various embodiments, the electronic device 100 may be mounted on at least part of a body such as a chest, legs, and ears by using a belt, a strap, and a clip and may obtain bio information from a body's movement, a chest beat, and blood vessels of legs, feet, and ears.

In the case of a haptic feedback, although a haptic feedback is relatively provided in correspondence to a GUI on a display or in an adjacent area, corresponding haptic feedback may be provided to anywhere in a touch inputted area, regardless of GUI. For example, in the case of the above-described animation haptic feedback, when a finger is touched on a touch screen, the electronic device 100 may perform a control to provide a haptic feedback to a display area in a touched area. For example, the haptic support module 170 may limit an area, where a circular animation haptic feedback or a dot animation feedback is played, to the inside of a touched area. According to various embodiments, when a sensor signal for covering the entire display by a hand is detected, the haptic support module 170 may perform a control to output a specific haptic feedback in the entire display area or the entire bezel area. Accordingly an area where a haptic feedback is provided does not necessarily correspond to a GUI (for example, screen information) and the position and size may be adjusted to correspond thereto by detecting a touched area.

As mentioned above, an electronic device and method may include detecting at least one of a body's movement and bio signal information through at least one sensor mounted on a user's body, calculating body or emotional condition information of at least one of a user's stress index and deep sleep by using at least one of the movement signal and bio signal of a detected body, and setting a haptic feedback on the basis of the calculated body or emotional condition information.

Additionally, according to other various embodiments, an electronic device and method may include determining whether information (for example, execution information) to be delivered to a user occurs, setting a first haptic feedback type and an output position in relation to the information to be delivered to the user, determining whether a second haptic feedback occurrence condition is satisfied, when the second haptic feedback occurrence condition is satisfied, outputting a second haptic feedback, detecting a user input from a set output position, and when the user input detected from the set output position satisfies the first haptic feedback condition, outputting the set first haptic feedback.

According to various embodiments, in relation to the device and method, the second haptic feedback occurrence condition includes, when an input is detected by an operation for detecting that a user input occurs at a first haptic feedback output position, at least one of a case in which the importance of information to be delivered to the user is more than a specific value, a case in which a user is not queried when a specific time elapses after the information to be delivered to the user occurs, and a case of recognizing a movement of the electronic device by a user movement when the information to be delivered to the user occurs and the user is not queried.

For example, after the bio information of a user wearing a wearable device on the wrist, which includes a biometric sensor, is measured by the wearable device, if an over pace occurs during an exercise coaching function performance for running, a first haptic feedback is set to provide a guide to a user to lower a pace. However, when a user does not query the wearable device (for example, if there is no touch event for a specific time or a user input for turning on a display does not occur) or when an over pace occurrence situation is maintained continuously for a specific time, a second haptic feedback (for example, at least one of a haptic feedback of providing a strong vibration to the entire wearable device and a haptic feedback that accompanies audio) is outputted to provide awareness to a user.

According to various embodiments, in relation to the device and method, the first haptic feedback occurrence condition may include at least one of a case in which a user input occurs for more than a specific time at a set output position (for example, at least one of touch hold, touch drag, and hovering holding) and a case in which a user input is detected from the output position after a second haptic feedback occurs.

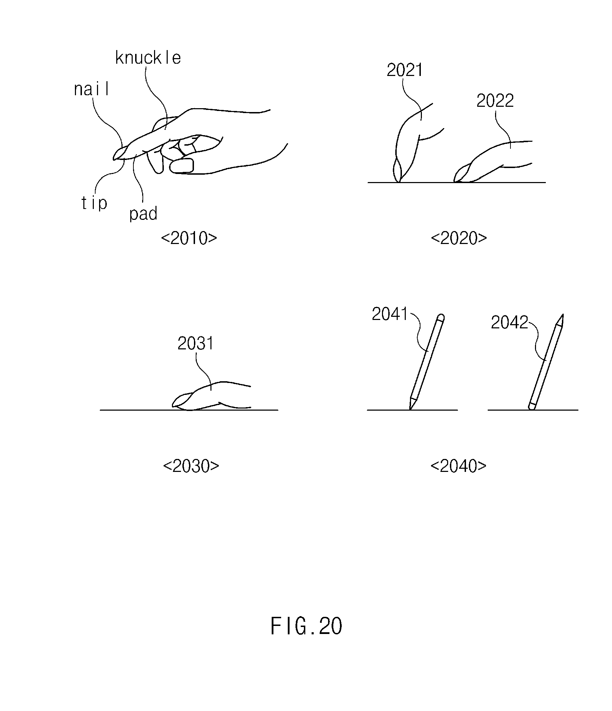

FIG. 20 is a view illustrating an input object specific haptic information management method according to various embodiments of the present disclosure.

Referring to FIG. 20, as described with the above various embodiments, in relation to a method of inputting information by using a touch detection device, the electronic device 100 may recognize an object for performing a touch input and may support a different haptic feedback according the type of a corresponding object. In relation to a touch input tool recognition method, the electronic device 100 may detect the impact sound or vibration of a surface during touch, analyze the pattern of an inputted signal, and analyze which object has the most similar pattern from an existing stored pattern database to recognize it as a corresponding object. According to various embodiments, as shown in a state 2010, the electronic device 100 may detect different patterns such as impact sound or vibration according to a nail, a knuckle, a fingertip, and a finger pad area.

Additionally, as shown in a state 2020 or a state 2030, the electronic device 100 may detect different impact sounds or vibration through a case 2021 of touching by a nail tip and touching by a fingertip, a case 2031 of touching by a finger pad, or a case 2022 of touching by the two (for example, touching by a nail tip and a fingertip). Additionally, as shown in a state 2040, the electronic device 100 may differently detect impact sound or vibration according to an event 2041 of touching by a pen tip or an event 2042 of touching by a pen rear (for example, wood or rubber material).

According to various embodiments, when an electronic pen (for example, a stylus pen) is used, the electronic device 100 may assign a unique Identification (ID) to each pen and detect this to determine the type of an input object. For this, the electronic device 100 may use a wireless device such as a Surface Acoustic Wave (SAW) sensor, Radio Frequency IDentification (RFID), IrDA, and BT and may use the unique serial numbers of unique devices connected through a wired communication method. As mentioned above, when the electronic device 100 provides a haptic feedback having characteristics such as different intensities and frequencies according to an inputted object, a user may recognize the inputted object by a haptic feedback.

Additionally, if an inputted object is different, a basic haptic feedback may be identically provided to various input objects to allow a user to feel a similar haptic feedback. During this operation, the electronic device 100 may provide the same haptic feedback by changing the frequency or vibration intensity of an input object specific haptic feedback. Accordingly, according to various embodiments, a haptic information management method may further include setting haptic feedback conversion information according to an input means.

As mentioned above, according to various embodiments, an electronic device and method may include setting haptic feedback conversion information according to an input object, configuring a specified layout and disposing a component according to the layout, detecting that an input event occurs from an area of a component disposed by the layout, detecting an input means, setting haptic feedback conversion information according to the input means, and setting a converted haptic feedback by using the feedback conversion information according to a haptic layout corresponding to a corresponding input event occurrence position.

According to various embodiments, the input means may include determining at least one of the blunt portions of a knuckle, a fingertip, a nail, a pen end, a pen, and a data glove.

According to various embodiments, the device and method may include buffering impact sound or vibration occurring when the input means contacts an input detection device for the input means detection, in a memory through a sound input device or a vibration input device, by analyzing the buffered impact sound or vibration to generate and store a unique identification pattern and comparing the inputted identification pattern and a pre-stored identification pattern to determine an object having the most similar pattern.

According to various embodiments, the device and method may include, in order for the input means detection, assigning a unique ID to at least one wireless signal of SAW sensor, RFID, IrDA, and BT so as to assign a unique ID to an input means and identify it, and assigning a unique identifier to an input means connected through a wired communication method and reading this.

According to various embodiments, the device and method may further include identifying an external device for delivering the converted haptic feedback and transmitting the converted haptic feedback information to the external device through at least one of WiFi, BT, ZigBee, Institute of Electrical and Electronics Engineers (IEEE) 802, LiFi, and BT Low Energy (BLE).

According to various embodiments, the device and method may further include setting different haptic feedback depending on inputted gesture, input intensity, input position, input speed, and input area, each being inputted according to the determined input means.

The electronic device 100 may be at least one of smartphones, tablets, laptops, PMPs, watches, necklaces, belts, shoes, hats, glasses, and HMDs.

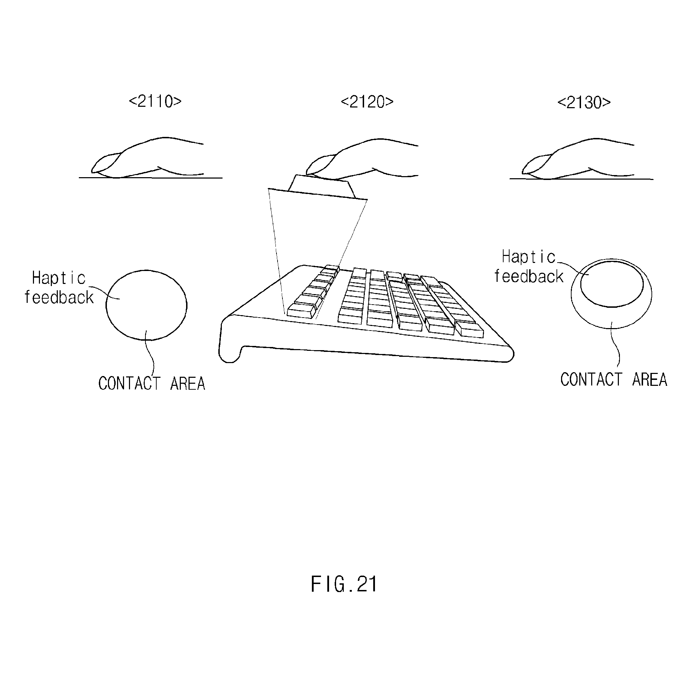

FIG. 21 is a view illustrating a touch area specific haptic information management method according to various embodiments of the present disclosure.

Referring to FIG. 21, a state 2110 and a state 2130 illustrate a feedback providing area for a finger contact surface. For example, when a finger presses a virtual key on a touch screen of a tablet or smart phone disposed on the floor, the haptic support module 170 may provide a haptic feedback to an area identical or similar to a finger contact area as shown in the state 2110. Alternatively, as shown in the state 2130, the haptic support module 170 may perform a control to provide a haptic feedback only to a partial area of the contact area.

The state 2120 represents one example of a finger contact surface on a physical keyboard. The physical keyboard has a form in which the top of the keyboard is high and the bottom is low and accordingly, the arranged keys have a form in which the surface of the key is inclined according to a keyboard angle. Due to this, a finger surface contacting a key is closer to a fingertip area, compared to a finger pad as shown in the state 2110 of contacting a plane by a hand.

When the electronic device 100 is disposed at a horizontal angle on the basis of the ground as shown in the state 2130, the haptic support module 170 may provide a haptic feedback to the top area relatively in an area where an input object and the electronic device 100 contact, in order to provide a tactile sense to a user as if it was inclined at a specific angle. Through this, the haptic support module 170 may provide a physical keyboard use feeling by outputting a haptic feedback to a fingertip area instead of an actual contact surface.

According to an embodiment, a haptic management method of the haptic support module 170 may include setting a virtual slope of a virtual keyboard, adjusting the form and position of a contact area according to this slope, and setting a haptic feedback to the adjusted contact area. According to another embodiment, a haptic management method may include specifying and storing at least one of the properties of a specific relative area, position, ratio, and form for setting a haptic feedback, determining a contact area, and specifying an area for setting a haptic feedback and the type of a haptic feedback on the basis of the determined contact area. According to an embodiment, a haptic management method may perform processing to output a haptic feedback to be biased in a direction (for example, an upper part area in a specific virtual key area where a slope is disposed relatively high in a virtual keyboard that is virtually displayed to have a high slope direction or a specific slope on the basis of the ground in an electronic device having a specific slope or an electronic device disposed to have a specific slope) that a virtually specific slope is relatively high in an input event area (for example, a finger touch area) occurring from a layout of a virtual keyboard.

According to various embodiments, the haptic support module 170 may detect an inclination angle of the electronic device 100 by using a gyro sensor or an acceleration sensor. The haptic support module 170 may adjust an area where a haptic feedback is outputted from a touch area in correspondence to the size of an inclination angle. For example, the haptic support module 170 may perform a control to output a haptic feedback to be biased to the edge of a touch area in correspondence to the inclination of an electronic device.

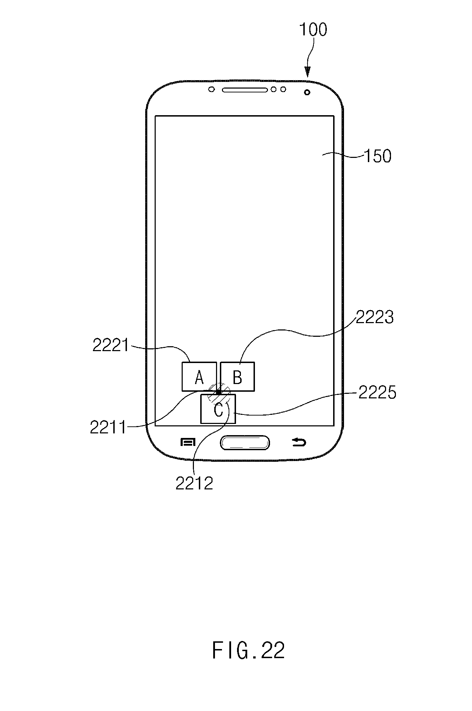

FIG. 22 is a view illustrating a touch area detection and a haptic information management method depending thereto according to various embodiments of the present disclosure.

Referring to FIG. 22, according to various embodiments, the electronic device 100 may include one or more key objects 2221, 2223, and 2225 disposed on a display panel that outputs screen information to the area of the display 150, touch devices that are respectively mapped into the key objects 2221, 2223, and 2225 or of which at least one is included in each of the key objects 2221, 2223, and 2225, and at least one optical sensor 2211 disposed between the touch devices. The touch devices may be disposed to be mapped into the key objects 2221, 2223, and 2225, respectively. At least one optical sensor 2211 may be disposed between the boundary areas of the touch devices disposed in a matrix or a slit form. According to an embodiment, the optical sensor 2211 may be disposed in a matrix or a slit form in the boundary areas of the touch devices disposed in a matrix or a slit form. The drawing illustrates a part of the optical sensor 2211.

The electronic device 100 may include an image processing module for collecting image information obtained by the optical sensor 2211 and processing the collected image information. The image processing module may be disposed to be included in the haptic support module 170 or may be included in an AP or a call processor (CP). According to various embodiments, the image processing module may be included in a camera module.

According to various embodiments, the electronic device 100 may include a capacitive type touch sensor and may recognize that a key area where a constant voltage value is most widely distributed is selected by analyzing the distribution of constant voltage values by a touch event 2212 inputted from each cell. Alternatively, when the touch event 2212 occurs, the electronic device 100 may detect hovering or a close fingertip image by using an embedded optical sensor LCD in addition to a corresponding point position. According to an embodiment, the electronic device 100 may recognize that a key object where an image area corresponding to the touch event 2212 most widely overlaps is selected. During this operation, when recognizing an image of a fingertip by using an embedded optical sensor LCD, the electronic device 100 may perform image recognition by performing an intensity value comparison of an image area of the close fingertip within a specified distance. The electronic device 100 may support a haptic feedback output on the basis of an area corresponding to the recognized image.

According to various embodiments, the electronic device 100 may correct or process an error input by using the optical sensor 2211. For example, when the input of the specific touch event 2212 is processed as an error input continuously (for example, it is determined by a frequency of a backspace key input occurrence after specific key input), the electronic device 100 may modify at least one of a layout and haptic layout of a corresponding key area. According to an embodiment, when the touch event 2212 occurs between the point 2221, the point 2223, and the point 2212, the electronic device 100 may determine that a point where an image is most widely distributed, for example, the point 2212, is selected by analyzing an image captured by the optical sensor 2211. Correspondingly, the haptic support module 170 may perform a control to output a specific haptic feedback on the basis of haptic information allocated to the point 2212.

According to various embodiments, the haptic support module 170 may provide a specific haptic feedback corresponding to an error occurrence without performing error correction. Alternatively, the haptic support module 170 may notify that C is inputted as an area of a C button corresponding to the point 2212 grows instantly to include a touch point in terms of GUI.

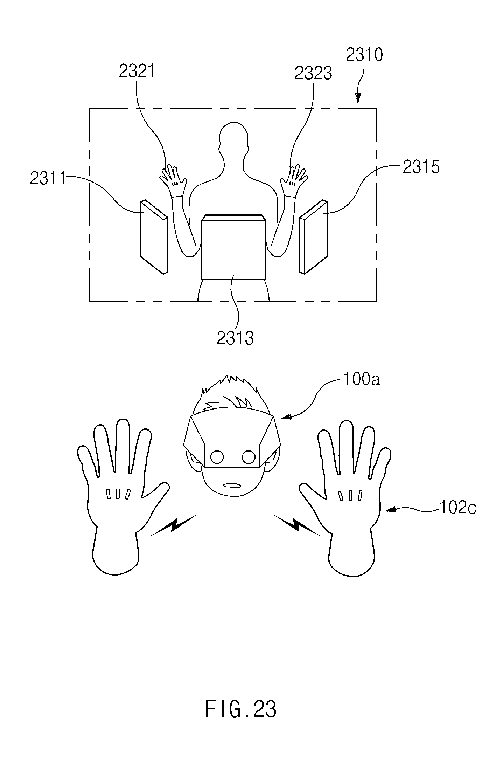

FIG. 23 is a view illustrating a haptic information management method in virtual reality (VR) according to various embodiments of the present disclosure.

Referring to FIG. 23, according to various embodiments, the electronic device 100 may include a Head Mounted Display (HMD) device 100a and a data glove 102c. The HMD device 100a and the data glove 102c may establish a communication channel through at least one of wired or wireless communication methods. For example, the data glove 102c may provide at least one of its position information and movement information to the HMD device 100a on the basis of at least one of an accelerometer, a gyro sensor, and a gravity sensor. The data glove 102c may include the haptic module 180. The data glove 102c may include the haptic module 180 including various kinds of haptic sensors in order for expressing softness, roughness, and smoothness with respect to virtual objects 2311, 2313, and 2315. The haptic module 180 may be disposed at a finger part and knuckle of the data glove 102c to perform a haptic feedback output corresponding to haptic information. The data glove 102c may include the haptic support module 170. Alternatively, haptic information related to the driving of the haptic support module 170 may be received from the HMD device 100a including the haptic support module 170 and at least one of a haptic feedback and force feedback corresponding to the haptic information may be outputted.

The HMD device 100a may include a camera and an image display device and may display the data glove 102c on an image on the basis of information provided by the data glove 102c. During this operation, the HMD device 100a may provide at least one of AR and VR. According to various embodiments, the HMD device 100a may include the haptic module 180 and may output a specific haptic feedback.

According to various embodiments, the HMD device 100a may support the control of a virtual space 2310 by the data glove 102c in an environment where one or more virtual objects 2311, 2313, and 2315 configuring VR or AR are disposed on the virtual space 2310. In relation to this, the HMD device 100a may allocate at least one haptic information to the virtual objects 2311, 2313, and 2315 disposed on the virtual space 2310. The HMD device 100a may provide the glove virtual objects 2321 and 2323 corresponding to the data glove 102c on the virtual space 2310. The HMD device 100a may adjust the position or state on the virtual space 2310 of the data glove 102c according to movement information or state information provided from the data glove 102c. During this operation, the HMD device 100a may provide a specific haptic feedback output in relation to at least one of the position and a state of the data grove 102c. The glove virtual objects 2321 and 2323 may be prepared in plurality in correspondence to the number of the data gloves 102c. Each of the glove virtual objects 2321 and 2323 may output a specific haptic feedback separately or in interoperation with each other. For example, when the glove virtual object 2321 among the glove virtual objects 2321 and 2323 contacts the specific virtual objects 2311, 2313, and 2315, the HMD device 100a may provide corresponding haptic information to one side of the data glove 102c corresponding to the glove virtual object 2321. Alternatively, the HMD device 100a may transmit haptic information to the entire data glove 102c.

According to various embodiments, under an environment in which the glove virtual objects 2321 and 2323 corresponding to the data glove 102c are in plurality, when performing a search of the virtual objects 2311, 2313, and 2315 by using one glove virtual object 2321, the HMD device 100a may support a first input mode or a search mode. For example, even when contacting the virtual objects 2311, 2313, and 2315 by using the glove virtual object 2321 or disposing the glove virtual object 2321 at a position close thereto, the HMD device 100a may perform a control not to perform an additional function execution.

When the glove virtual object 2321 and the glove virtual object 2323 overlap a specific virtual object at the same time, the HMD device 100a may perform a function execution mode or second input mode related to a corresponding virtual object. During the above operation, the HMD device 100a may provide specific haptic information to only one side of the data glove 102c corresponding to the glove virtual object 2321 in a search mode using the glove virtual object 2321. According to various embodiments, in relation to a virtual object contact of the glove virtual object 2323, the HMD device 100a may support a search mode (for example, a position search environment for a virtual object contacted by a glove virtual object or disposed within a specified distance). Alternatively, in relation to a virtual object contact by the glove virtual object 2323, the HMD device 100a may perform a control to operate in a function execution mode allocated to a corresponding virtual object.

The HMD device 100a may provide the virtual space 2310 including a virtual two-dimensional curved surface where the virtual objects 2311, 2313, and 2315 are disposed. Herein the HMD device 100a may set the edge of a corresponding curved surface as a boundary area. When the glove virtual objects 2321 and 2323 corresponding to the data glove 102c are out of more than a specified distance toward the outside of the boundary area of the curved surface, the HMD device 100a may deliver first haptic information to the data glove 102c. When the glove virtual objects 2321 and 2323 overlap at least one of the virtual objects 2311, 2313, and 2315, the HMD device 100a may deliver second haptic information to the data glove 102c. During this operation, the HMD device 100a may dispose a plurality of virtual objects 2311, 2313, and 2315 on the virtual space 2310 in correspondence to a function in execution.

The HMD device 100a may allocate different haptic information to each of the virtual objects 2311, 2313, and 2315. The HMD device 100a may deliver haptic information allocated to the virtual objects 2311, 2313, and 2315 overlapping the data glove 102c to the data glove 102c. The data glove 102c may output a haptic feedback corresponding to haptic information allocated to each of the virtual objects 2311, 2313, and 2315.

According to various embodiments, the HMD device 100a may provide a plurality of virtual spaces 2310. For example, the HMD device 100a may dispose the virtual space 2310 displayed as one plane to overlap in plurality in a z-axis direction. At least one virtual object may be disposed on the plurality of virtual spaces 2310 disposed in the z-axis direction. Alternatively, there may be a virtual space where no virtual object is disposed. The HMD device 100a may perform a control on the data glove 102c to provide different haptic feedback by each virtual space contacted according to a movement of the glove virtual objects 2321 and 2323. The above virtual objects 2311, 2313, and 2315 may have a 2D or 3D form. The virtual objects 2311, 2313, and 2315 disposed on the virtual space 2310 may be expressed in various forms such as an arbitrary 3D object, for example, cuboid, sphere, cone, and pyramid, and a partial surface of a corresponding 3D object may be displayed. The HMD device 100a may allocate corresponding haptic information by each specific part of virtual objects in order to allow a user to feel a part of which texture is rough or sharp or form is changed like an edge part with respect to the virtual objects 2311, 2313, and 2315. For example, the HMD device 100a may allocate same or different haptic information by at least part unit of vertices, sides, edges, and surfaces.

The first input mode or search mode for searching for the positions of the virtual objects 2311, 2313, and 2315 may be executed when the glove virtual objects 2321 and 2323 corresponding to the data glove 102c move, or contact or approach the surfaces of the virtual objects 2311, 2313, and 2315. The second input mode supporting a function execution or information input related to the virtual objects 2311, 2313, and 2315 may be driven in correspondence to that contact or proximity for the corresponding virtual objects 2311, 2313, and 2315 found in the first input mode or search mode is maintained for a specific time, or a specific movement or a state of the data glove 102c

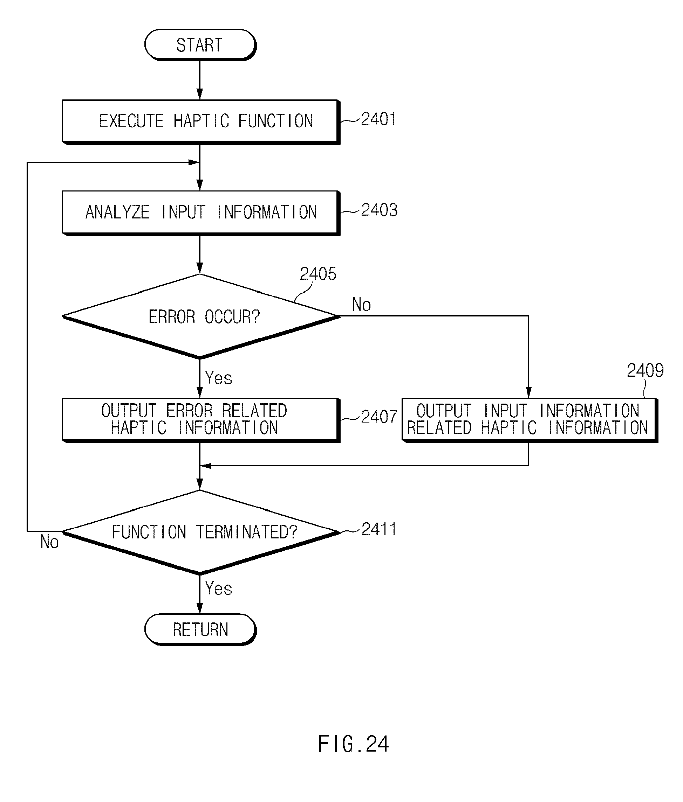

FIG. 24 is a flowchart illustrating an input error correction related haptic information management method according to various embodiments of the present disclosure.

Referring to FIG. 24, the input error correction related haptic information management method according to various embodiments may include operation 2401 in which the haptic support module 170 performs a haptic function execution (for example, a function for allocating and outputting haptic information according to a screen information analysis result, an input information analysis result, or an execution information analysis result or a function for outputting the allocated haptic information) in correspondence to a setting or a event occurrence.

In operation 2403, the haptic support module 170 may perform an input information analysis. In relation to this, the haptic support module 170 may analyze input information inputted through the input/output interface 140. For example, the haptic support module 170 may perform a spelling check on the inputted character information. In operation 2405, the haptic support module 170 may check whether an error occurs with respect to the input information analysis.

When there is an error, the haptic support module 170 may control an error related haptic information output in operation 2407. When there is no error, the haptic support module 170 may control an input information related haptic information output in operation 2409. During this operation, when there is no haptic information related to input information, the haptic support module 170 may not perform a haptic information output.

In operation 2411, the haptic support module 170 may check whether there is a function termination related event. When there is no function termination related event, the haptic support module 170 may branch into operation 2403 and perform the subsequent processes again. When there is a function termination related event, the haptic support module 170 may perform a control to terminate the haptic function execution. Additionally or alternatively, after the haptic function execution termination, the haptic support module 170 may support a function execution of the electronic device 100 according to specified schedule information or may control a sleep mode shift.

In relation to the above error correction, according to an embodiment, the haptic support module 170 may perform a control to output a specific melody in correspondence to a key input. Accordingly, when a key input speed is changed, the haptic support module 170 may change the melody in correspondence thereto. For example, the haptic support module 170 may map a piano keyboard to a key input. When a specific key input occurs, the haptic support module 170 may perform a control to output the sound corresponding to a corresponding piano keyboard. When a key input speed becomes faster, the haptic support module 170 may perform a corresponding melody output faster. When a key input speed becomes slower, the haptic support module 170 may perform a corresponding melody output slower. The melody or the piano keyboard mapping may be adjusted in correspondence to a user setting change.

The haptic support module 170 may detect occurrence of a typographical error during a key input process. When a typographical error occurs (i.e., a typo), the haptic support module 170 may analyze it and may perform a control to provide a sound or melody different from a set melody together with a specific haptic feedback output. While a user performs a key input as listening to an audio feedback including a familiar melody, if a typo occurs, the user may intuitively recognize a typo occurrence through a changed audio feedback. The haptic support module 170 may support easier typo recognition or modification by outputting a recommendation word for typo part or distinguishing (for example, highlighting) the typo part from peripheral input information.

According to various embodiments, the haptic support module 170 may perform a control to provide at least one of audio feedback and haptic feedback after a character is completed or an information input to a paragraph or page is completed. For example, when a typo recognition function is executed, the haptic support module 170may provide at least one of highlight display, underline display, color conversion, and size conversion with respect to words or phrases with typos. During this operation, the haptic support module 170 may allocate specific haptic information to at least one of sentences, words, and characters with typos. When a touch event or hovering event selecting or indicating an area including a corresponding typo occurs, the haptic support module 170 may perform a control to output a haptic feedback corresponding to corresponding haptic information. During this operation, the haptic support module 170 may provide a search mode or first input mode related to a search for an area where a typo occurs (for example, paragraphs, sentences, words, and characters including typos).

The haptic support module 170 may control a haptic feedback output related to a typo occurring area detection in a search mode or a first input mode. When a set event (for example, an event for maintaining a specific time touch or hovering and an event corresponding to a specific gesture input) occurs in a typo occurring area, the haptic support module 170 may control a second input mode switching. As switching to a second input mode, the haptic support module 170 may perform a control to provide a recommendation word list related to a typo correction or output a virtual input object.

Based on the above-described operation, the haptic support module 170 may easily perform a typo search on the basis of a touch gesture such as flick, dragging, and hovering in a screen including a large number of letters. In relation to this, the haptic support module 170 may provide different haptic feedback to a typo occurring area and a non-typo occurring area. Alternatively, the haptic support module 170 may perform a control to output a different haptic feedback by setting the frame of an area including paragraphs or words where typos occur as a boundary area. When an event (for example, a touch or hovering event) occurs from an area with no typo, the haptic support module 170 may support a directional haptic feedback (for example, a direction indicating a typo occurring area at a touch occurring position) for guiding a typo position.

As mentioned above, an electronic device and method according to various embodiments may include configuring a specific layout according to a service mode and disposing a component according to the layout, classifying components into at least two groups according to the service mode, setting a haptic layout for setting a different haptic feedback for each group, detecting that an input event occurs from an area of a component disposed by the layout, and generating a specific haptic feedback according to a haptic layout corresponding to a corresponding input event occurrence position.

According to various embodiments, the input is a character input and the electronic device and method may include determining that a typo or an undetermined word is inputted to a character string configured with at least one character and adding a typo or an undetermined word to the layout and the haptic layout as a component.

According to various embodiments, a device and method may include deactivating a haptic feedback in the remaining area other than an area where the typo or undetermined word is disposed in the haptic layout.

According to various embodiments, a device and method may include outputting at least one of audio and vibration according to a specific melody order or a specific haptic feedback order by each character input.

According to various embodiments, a device and method may include determining that a typo or an undetermined word is inputted to a character string configured with at least one character in the character input, and generating, when a typo or an undetermined word occurs, a haptic feedback for discordant melody or vibration length and unfitting rhythm or frequency.

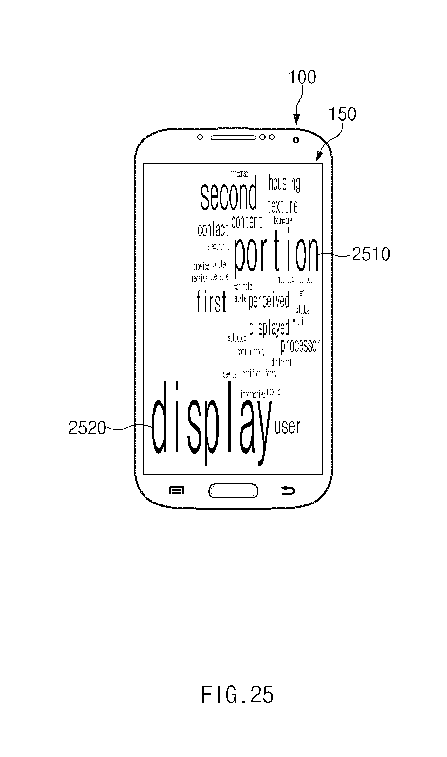

FIG. 25 is a view illustrating a screen information related haptic information management method according to various embodiments of the present disclosure.

Referring to FIG. 25, an electronic device 100 may output screen information including at least one object on a display 150. For example, the electronic device 100 may output a banner object and an advertisement object on a layout configuring a screen. An object outputted to the display 150 may include various tactile and texture related information. For example, an object may be an image form where information is printed on paper or cloth or an image form where information is engraved into a metal plate or a wood plate. The haptic support module 170 may analyze the above image form in correspondence to content information of an object and may recognize it as the material of the object. For example, the haptic support module 170 may recognize an electronic book as a paper material. Herein, the haptic support module 170 may differently recognize smooth feeling and rough feeling in correspondence to a position area or an image analysis result on the basis of a paper analysis of an electronic book. The haptic support module 170 may allocate haptic information corresponding to an analysis result to a corresponding object.

According to various embodiments, when an object outputted to the display 150 is a clothes related advertisement image, the haptic support module 170 may perform a material recognition on a corresponding object on the basis of the description or material of a corresponding clothes. The haptic support module 170 may allocate corresponding haptic information to a corresponding object on the basis of material recognition. During this operation, the haptic support module 170 may perform character parsing and character analysis on specific object related link information, for example, text information and advertisement information in XML or HTML format, which are extracted from a webpage, and based on this, perform a material recognition on a corresponding object.

According to various embodiments, the haptic support module 170 may estimate tactile sense or feeling on a search result on the basis of a keyword inputted through a search function and a corresponding keyword related information. For example, when a beach name is searched through a search function, the haptic support module 170 may assign a texture sense or a tactile sense such as beach related water or sand to a corresponding search result. The haptic support module 170 may set or change a haptic layout for an object by obtaining direct or indirect object related information through application, document parsing, and image analysis.

According to various embodiments, the haptic support module 170 may provide a haptic feedback or a visual information feedback in correspondence to a keyword search in document. When a touch event occurs from the display 150 of a touch screen form, the haptic support module 170 may perform a control to output a specific haptic feedback in correspondence to a distance between a keyword corresponding to a search result and a touch event on the basis of search mode support. The haptic support module 170 may control a searched keyword related function execution in correspondence to an event occurrence related to at least one of a touch pressure, touch area, touch time, and touch gesture form of more than a specific size. For example, the haptic support module 170 may connect to a website related to a selected keyword or may automatically deliver a corresponding keyword to a search engine.

As shown in the drawing, the haptic support module 170 may apply the above-mentioned various embodiments to various keywords. For example, when keywords are displayed by a word cloud function, the haptic support module 170 may vary a haptic feedback according the importance (at least one of an input frequency, input time, and occurrence frequency of a keyword) of each keyword. For example, the electronic device 100 may analyze keywords of at least one document such as web pages, papers, patents, speeches, and articles and display important keywords according to frequency of use or themes by highlighting it with color or size according to a specified suitability or importance. According to various embodiments, the haptic support module 170 may allocate to output a haptic feedback specified to an object corresponding to an inputted keyword or the keyword search result.

The haptic support module 170 may allocate specific haptic information to each area where a corresponding keyword is displayed according to the importance of detected keywords. For example, the haptic support module 170 may allocate first haptic information to a keyword 2510 and may allocate second haptic information to a keyword 2520. The first haptic information or the second haptic information may vary in intensity or frequency in correspondence to the importance of a corresponding keyword.

According to various embodiments, the haptic support module 170 may output a keyword selected through an input such as touch from the displayed document on the basis of a Text-to-Speech function. During this operation, the haptic support module 170 may provide classification recognition between keywords by performing a control to output different haptic feedback from the boundary area of each keyword.

According to various embodiments, when a specific keyword selection (or an object selection corresponding to a keyword) occurs through an input signal of more than a specified time, a specific pressure, a specified touch area, or a specified charge amount, the haptic support module 170 may control a keyword related function execution. According to various embodiments, when OK and Cancel buttons are displayed on a pop-up window, the haptic support module 170 may allocate different haptic information to areas corresponding to the respective buttons. The haptic support module 170 may support to distinguish buttons through a different haptic information based haptic feedback in a search mode. When an input signal related to the selection of a specific button occurs after a search mode, the haptic support module 170 may control a function execution allocated to a corresponding button. According to various embodiments, as keeping the electronic device 100 in a pocket, a user may distinguish a specific object by using a haptic feedback in a search mode without pulling out the electronic device 100. Then, a user may control a function execution according to an object selection.

According to various embodiments, the device and method may include performing an input operation for information search, and the setting of the haptic layout may include setting a haptic layout to generate a haptic feedback from at least one component area corresponding to the found information.

According to various embodiments, the performing of the input operation may include inputting at least one of words, keywords, and sentences to be searched through at least one of a character input through a virtual keyboard, a handwriting recognition on a touch screen or a touch pad, and voice recognition for information search.

According to various embodiments, the found information may include at least one of characters, images, virtual buttons, menus, and lists.

According to various embodiments, the found information may include at least one of people images (for example, a face image, and a silhouette of a person), animal images, and plant images. As one example, during a group picture image view including several people, as the name of a specific people is inputted through the performing of the input operation, if a touch input signal occurs from a face area of a corresponding people, the haptic support module 170 may be set to provide a haptic feedback corresponding thereto. As another example, when the people face area and a touch signal occurring area are different from each other, the haptic support module 170 may be set to provide a directional haptic feedback indicating a people face area to a corresponding touch signal occurring area or output a haptic feedback having a different intensity according to a distance between two areas. Accordingly, when the two areas are different, the people face area may be easily found and when an input occurs from the face area, another haptic feedback may be provided.

According to various embodiments, the device and method may include calculating a similarity or reliability with inputted information during information search and when found information is in plurality, differently setting the intensity, texture, and pattern of a haptic feedback according to the similarity of each component. Herein, the similarity or reliability may be determined by a word matching ratio between a keyword and a search result. According to various embodiments, the similarity or reliability may be determined by a frequency that a keyword is found from a corresponding search result (for example, an object corresponding to a search result).

According to various embodiments, determining the content of the component and assigning a proper texture to a corresponding area of a haptic layout according its content may be included.

According to various embodiments, the layout may include at least one of document, spreadsheet, e-book, word cloud, and image.

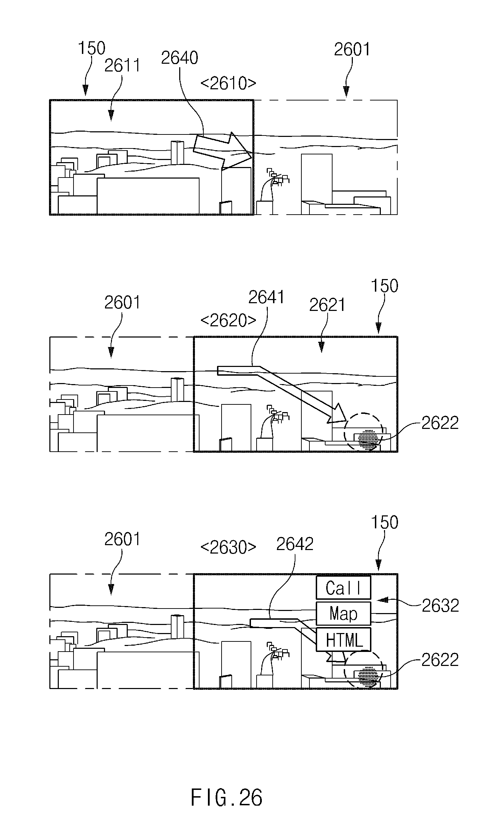

FIG. 26 is a view illustrating a panorama related haptic information management method according to various embodiments of the present disclosure.

Referring to FIG. 26, as shown in a state 2610, an electronic device 100 may output to the area of a display 150 screen information 2601 corresponding to a panorama image, a 3D sphere type image, or a 3D map. Sub screen information 2611 corresponding to a partial image of the screen information 2601 may be outputted to the area of the display 150. According to various embodiments, the haptic support module 170 may display indication information 2640 for a position where a target object 2622 is disposed, on the sub screen information 2611.

According to various embodiments, when specific search information is inputted and the target object 2622 corresponding to corresponding search information is found, the display 150 of the electronic device 100 may display the sub screen information 2621 including the target object 2622 in the screen information 2601 as shown in state 2620. Alternatively, when an event for touching the indication information 2640 occurs, as shown in the state 2620, the haptic support module 170 may perform a control to change the sub screen information 2611 into the sub screen information 2621. The haptic support module 170 may output indication information 2641 to support recognition on the target object 2622 in the sub screen information 2621.

According to various embodiments, when search information is inputted, the electronic device 100 may collect the screen information 2601 corresponding to the search information and perform a control to output the sub screen information 2621 related to the search information in the screen information 2601 to the display 150. According to an embodiment, the electronic device 100 may provide an operation for changing a screen in the current query (for example, an operation for providing at least one image effect of moving from the sub screen information 2611 to the sub screen information 2621 related to search information, and zooming in or zooming out).

According to another embodiment, the electronic device 100 may collect the screen information 2601 and may output the sub screen information 2611 defined by default to the display 150. After the output of the sub screen information 2611, the electronic device 100 may change into an output state of the sub screen information 2621 including the target object 2622 related to search information. During this operation, the haptic support module 170 may allocate first haptic information to the target object 2622. According to various embodiments, the haptic support module 170 may allocate specific haptic information to the sub screen information 2611. The haptic support module 170 may allocate, to the sub screen information 2621, haptic information different from haptic information allocated to the sub screen information 2611. When a touch occurs from a specific point of the sub screen information 2621, the haptic support module 170 may perform a control to output a directional haptic feedback according to the position of a touch point and the position of the target object 2622.

According to various embodiments, when an event for selecting the target object 2622 occurs, as shown in a state 2630, the electronic device 100 may perform a control to output function execution information 2632 allocated to the target object 2622. Herein, the electronic device 100 may maintain the indication information 2642 for the target object 2622 or may remove it from the screen 150.

According to various embodiments, the electronic device may collect an image (for example, screen information 2601) corresponding to a corresponding region on the basis of the region name inputted as search information. Alternatively, after recognizing the position where the current device is disposed (for example, collecting and recognizing cell network information from GPS and wireless base stations), the electronic device 100 may collect at least one (for example, the screen information 2601) of a 2D map, a 3D map, a panorama image, and a 3D spheric type modeling image from a server device or another electronic device.

According to various embodiments, the electronic device 100 may search for information of a target object related to a specific region name or building, a store name, an address, a telephone number, a person's name, an email address, and an e-account address. The electronic device 100 may output an image (for example, the screen information 2601) corresponding to the found information and may display an area (for example, a specific position in the sub screen information 2611) where a target object related to search information is disposed in a corresponding image.

According to various embodiments, the electronic device 100 may collect and output an image (for example, the screen information 2601) corresponding to first search information and may perform the search of the target object 2622 in correspondence to a second search information input. During this operation, the electronic device 100 may provide a menu or list related to an image inquiry. The electronic device 100 may search an image stored in the memory 130 or an image stored in the sever device 106 connected to a network. Herein, the image, as mentioned above, may include a 2D image map, a 3D image map, a panorama image, a 3D spheric type panorama image, and video image.

According to various embodiments, the electronic device 100 may recognize the current position and direction information and based on this, may provide image information arranged on a 2D or 3D space. For example, when information on a specific target object (for example, a building, a region, an object, and a person position) is inputted, the electronic device 100 may provide navigation information on 2D or 3D arranged image information, or may display (for example, at least one of an arrow display, a thumbnail display of a panorama image, and an image overlay) a position or direction corresponding to a target object on corresponding image information. Additionally, when a user input occurs on an image area corresponding to a corresponding target object, the electronic device 100 may provide a function related to a target object selected by the input, for example, a function such as detailed information provision, reservation through a link, call connection, and message sending.

When an image such as a panorama image or a map image is large or a space where the image is expressed in a 3D space, a target object may exist outside a currently displayed image area and may be hidden by the back of another object. Additionally, information on several things objects may be displayed on a specific image. In relation to this, the haptic support module 170 may display (through techniques such as an on screen display (OSD) format, AR, and VR) the position of a target object through a display and may allocate haptic information in addition to this to the target object to support an easy target object search.

According to various embodiments, when the area of a target object corresponding to search information is not included in the currently displayed image (for example, the screen information 2601), the haptic support module 170 may calculate a relative position with a target object. The haptic support module 170 may provide a haptic feedback for guiding to display a sub object including the position where a target object is disposed on an image. For example, when a user input such as hovering or touch is detected on the sub screen information 2611, the haptic support module 170 may perform a control to output a haptic feedback indicating the direction of the second sub object 2621 including a target object from an area where a user input occurs through a first haptic feedback. At this point, an object (for example, an arrow, message, AR, or VR object) notifying a corresponding direction may be displayed together on the sub screen information 2611. The first haptic feedback may provide an orientation or differently set at least one of intensity, pattern, period, and frequency according a distance difference. A user may perform a device management to display a second sub object including a target object by inputting a command through dragging or flick, eye tracking, voice input, and a motion for changing the orientation of a terminal.

When the sub screen information 2621 including a target object area is displayed, the haptic support module 170 may support a location determination of a target object by setting a second haptic feedback. For example, the haptic support module 170 may allocate second haptic information to a specific area where the target object 2622 is included and may allocate first haptic information to an area other than that. Alternatively, the haptic support module 170 may allocate haptic information only to a specific area including the target object 2622. When the entire or at least part of a target object area is hidden by another image or an object, the haptic support module 170 may allocate third haptic information to a hidden area. For example, the third haptic information may be set different from the number of vibrations, intensity, pattern, frequency, and period of the second haptic information.

When a user input is detected from a corresponding target object area, the haptic support module 170 may perform a control to output at least one of a second haptic feedback depending on second haptic information and a third haptic feedback according to third haptic information according to a type or state of a user input. Alternatively, the haptic support module 170 may control a specific function execution allocated to a corresponding target object. For example, as entering a target object through dragging, the haptic support module 170 may provide a set haptic feedback. When an input is maintained for more than a specific time in a corresponding target object area, when a set gesture, for example, a tap, occurs, or when a double tap occurs, the haptic support module 170 may perform a control to execute a function set in a target object.

The target object may be in plurality and the haptic support module 170 may evaluate the importance by assigning a weight to each target object according to a specified reference. For example, when an Italian restaurant is searched from the current position of the electronic device 100, the haptic support module 170 may control several target object displays. At this point, the haptic support module 170 may evaluate the importance on each target object according to a distance from the current position to a target object, review information of target objects, the number of netizen recommendations, and popularity. The haptic support module 170 may allocate the rating of each target object according to an evaluation result, and may differently set a haptic feedback according to the rating. For example, when a user input is detected from a target object area having a high importance, the haptic support module 170 may provide a relatively strong or fast period haptic feedback. The haptic support module 170 may provide a relatively weak or slow period haptic feedback to a target object area having a low importance. Additionally, when a predetermined user input is detected from a corresponding target object area, if an additional function is executed, the haptic support module 170 may provide a haptic feedback set different from previous ones. When target objects overlap the same image area, the haptic support module 170 may provide a stronger or faster haptic feedback according to the number of overlappings.

The haptic support module 170 may allocate various haptic information according to the characteristic of a target object. For example, the haptic support module 170 may perform an image analysis of a target object or a target object analysis based on various web information related to a target object. Alternatively, the haptic support module 170 may support each area specific haptic information allocation of an image in correspondence to a user input. Alternatively, the haptic support module 170 may analyze the content of an image by using color, form, position information, and specification information and may set haptic information corresponding thereto. In relation to a texture analysis, the haptic support module 170 may perform checking information collected based on a video and image analysis technique, a Moving Pictures Expert Group 7 (MPEG-7) based image analysis, and Geographic Information System (GIS), or may collect analysis information from an electronic device performing a corresponding analysis.

The haptic support module 170 may allocate haptic information corresponding to a smooth texture compared to a brick building when a target object is a glass building on the basis of a corresponding analysis result. Additionally, when a target object is a river or sea, the haptic support module 170 may allocate haptic information corresponding to sticky texture and when it is a beach, may allocate haptic information corresponding to sand texture.

When an image area of a target object is less than a specific size, the haptic support module 170 may allocate haptic information to an area larger than a displayed area and may control a haptic feedback output. The haptic support module 170 may provide different haptic feedback in correspondence to reduction, zoom, and rotation during an image view and may allocate different haptic information by each area.

As mentioned above, a device and method according to various embodiments may include querying an image by selecting a pre-stored image (for example, screen information and at least one object included in the screen information), setting at least one target information (for example, a target object), setting an image area of a corresponding target on an image on the basis of target information related direction and position information, calculating a relationship between an image area currently being queried and a corresponding target image area, and setting additional information for displaying a corresponding image area or notifying a direction according to the calculated relationship.

According to various embodiments, a device and method may include detecting a user's input and determining the position of an input detected area, and when a detected area position is a target image area, generating a first haptic feedback.

According to various embodiments, a device and method may include, when the detected area position is other than a target image area, generating a second haptic feedback.

According to various embodiments, in relation to a device and method, the second haptic feedback may be provided on the basis of at least one of haptic pattern, intensity, and occurrence period in order to indicate at least one of the direction and distance from an input detected area to a target image area.

According to various embodiments, a device and method may include generating a first haptic feedback and a second haptic feedback from a detected area, when the size of a target image area (for example, a target object area) is less than a specific first size, setting with more than a second size, and when a target image area is hidden by another object on an image, allocating different haptic information to the hidden part.

According to various embodiments, a device and method may include obtaining target information related material property information and setting at least one of the texture, type, intensity, and pattern of a haptic feedback in a target image area.

According to various embodiments, in relation to a device and method, the image may include at least one of a panorama image, a 360 degree spherical image, a semicircular image, a 3D map, and a 2D map.

According to various embodiments, in relation to a device and method, the querying of the image may be performed by at least one of performing a user's input and recognizing the direction and position of an electronic device and an image, which corresponds to inputted or recognized information, is disposed within a specified distance, or corresponds to a specific direction, may be recommended or automatically selected and queried.

According to various embodiments, in relation to a device and method, the user input may include at least one of voice input, handwriting recognition, and image recognition by photographing.

As mentioned above, in relation to a haptic information management method and an electronic device supporting the same in accordance with various embodiments, various tactile expressions are possible according to displayed screen information, and an input means classification and execution information classification may be recognized more easily.

Additionally, according to various embodiments, a variety of haptic information may be allocated by screen information on a touch screen or a touch pad and a haptic feedback is implemented according thereto, so that a realistic device management may be supported.

Additionally, according to various embodiments, more dynamic electronic device management may be supported by providing an adaptive haptic feedback according to a device management state or situation.

Each of the above-mentioned components of the electronic device according to various embodiments of the present disclosure may be configured with at least one component and the name of a corresponding component may vary according to the kind of an electronic device. An electronic device according to various embodiments of the present disclosure may include at least one of the above-mentioned components, may not include some of the above-mentioned components, or may further include another component. Additionally, some of components in an electronic device according to various embodiments of the present disclosure are configured as one entity, so that functions of previous corresponding components are performed identically.

The term "module" used in various embodiments of the present disclosure, for example, may mean a unit including a combination of at least one of hardware, software, and firmware. The term "module" and the term "unit," "logic," "logical block," "component," or "circuit" may be interchangeably used. A "module" may be a minimum unit or part of an integrally configured component. A "module" may be a minimum unit performing at least one function or part thereof. A "module" may be implemented mechanically or electronically. For example, "module" according to various embodiments of the present disclosure may include at least one of an application-specific integrated circuit (ASIC) chip performing certain operations, field-programmable gate arrays (FPGAs), or a programmable-logic device, all of which are known or to be developed in the future.

According to various embodiments, at least part of a device (for example, modules or functions thereof) or a method (for example, operations) according to this disclosure, for example, as in a form of a programming module, may be implemented using an instruction stored in computer-readable storage media. When at least one processor (for example, the processor 120) executes an instruction, it may perform a function corresponding to the instruction. The non-transitory computer-readable storage media may include the memory 130, for example. At least part of a programming module may be implemented (for example, executed) by the processor 120, for example. At least part of a programming module may include a module, a program, a routine, sets of instructions, or a process to perform at least one function, for example.

The computer-readable storage media may include Magnetic Media such as a hard disk, a floppy disk, and a magnetic tape, Optical Media such as Compact Disc ROM (CD-ROM) and DVD, Magneto-Optical Media such as Floptical Disk, and a hardware device especially configured to store and perform a program instruction (for example, a programming module) such as ROM, RAM, and flash memory. Additionally, a program instruction may include high-level language code executable by a computer using an interpreter in addition to machine code created by a complier. The hardware device may be configured to operate as at least one software module to perform an operation of various embodiments and vice versa.

A module or a programming module according to various embodiments may include at least one of the above-mentioned components, may not include some of the above-mentioned components, or may further include another component. Operations performed by a module, a programming module, or other components according to various embodiments of the present disclosure may be executed through a sequential, parallel, repetitive or heuristic method. Additionally, some operations may be executed in a different order or may be omitted. Alternatively, other operations may be added.

According to various embodiments, in relation to a storage medium storing instructions, the instructions, when being executed by at least one processor, are set to allow the at least one processor to perform at least one operation and the at least one operation may include obtaining size conversion ratio information of an original image, obtaining coefficient information to be applied to the data conversion and size conversion of the original image on the basis of the ratio information, and obtaining image processing data corresponding to the size conversion ratio by applying the coefficient information to at least part of data of the original image.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a haptic support module(170) configured to:
perform at least one of a screen information analysis, an input information analysis, or an execution information analysis; and
allocate haptic information according to the analysis result; and
a haptic module(180) configured to output a haptic feedback corresponding to the haptic information.

2. The electronic device of claim 1, wherein the haptic support module(170) is further configured to:
detect at least one object outputted on a screen or to be outputted on a screen; and
output different haptic information by each of the at least one object or output different haptic information to a boundary area of the object and an area other than the boundary area.

3. The electronic device of claim 2, wherein the haptic support module(170) is further configured to:
allocate first haptic information to the boundary area of the object;
allocate second haptic information to an inside of the object; and
allocate or not allocate third haptic information to an outside of the object.

4. The electronic device of claim 2, wherein the haptic support module(170) is further configured to change haptic information allocated to other objects in correspondence to a specific object selection among the objects.

5. The electronic device of claim 1, wherein the haptic support module(170) is further configured to allocate haptic information corresponding to at least one of a form of the object, a material related to an image through which an object is displayed, or description information related to an object;
output different haptic information according to at least one of a type of an input object, a type of an input signal generated by the input object, or a state of the input signal; or output different haptic information by each collected execution information according a specific function execution.

6. The electronic device of claim 1, wherein the haptic support module(170) is further configured to:
receive execution information related to a health care function executed in another electronic device and output different haptic information by each type of the received execution information; or.
check a placement state of an electronic device during a specific event occurrence and differently set a haptic feedback output point corresponding to the haptic information in a touch area related to the specific event occurrence.

7. The electronic device of claim 1, wherein the haptic support module(170) is further configured to output a different haptic event according to at least one of an event occurrence position in an object detected according to the screen information analysis result, a signal intensity of an event, an event holding time, a size of an event pressure, a height between an event occurrence related input object and a touch panel, or a proximity between an event occurrence point and an object.

8. The electronic device of claim 1, wherein the haptic support module(170) is further configured to output a specified reference haptic feedback when a first event is received from an area other than an area where an object detected according to the screen information analysis result is disposed.

9. The electronic device of claim 8, wherein the haptic support module(170) is further configured to output at least one of a directional haptic feedback indicating an area where the object is disposed and a haptic feedback of less than a specified size.

10. The electronic device of claim 1, wherein the haptic support module(170) is further configured to, when at least one object is disposed at a predetermined position of a display in correspondence to at least one of a movement direction and grabbing position of the electronic device, output a different haptic feedback in correspondence to an output position of the object.

11. The electronic device of claim 1, wherein the haptic support module(170) is further configured to transmit information corresponding to the haptic feedback to another electronic device.

12. The electronic device of claim 1, wherein the haptic support module(170) is further configured to:
output a haptic feedback specified to a wearing detected area or an entire electronic device if a wearing of an electronic device is detected;
output a specified haptic feedback if an electronic device enters a specified position; or
terminate the haptic feedback if the electronic device is out of a specified position or the wearing of the electronic device is released.

13. The electronic device of claim 1, wherein the haptic support module(170) is further configured to output at least one haptic feedback according to a comparison of information collected based on collected sensor signals and a set target value.

14. The electronic device of claim 1, wherein the haptic support module(170) is further configured to:
output a haptic feedback for guiding to adjust a speed detected based on a sensor signal;
output a haptic feedback in which at least one of a haptic size and frequency is adjusted in correspondence to a guide for increasing or decreasing the speed or output a specified haptic feedback to an object corresponding to an inputted keyword or the keyword search result.

15. The electronic device of claim 1, wherein the haptic support module(170) is further configured to allocate a directional haptic feedback indicating a target object disposed in an area not being currently displayed in an entire screen area.
